(19) Europäisches Patentamt
European Patent Office
Office européen des brevets

(11) EP 2 559 734 A1

(12) # EUROPEAN PATENT APPLICATION
published in accordance with Art. 153(4) EPC

(43) Date of publication:
**20.02.2013 Bulletin 2013/08**

(21) Application number: **11768913.3**

(22) Date of filing: **14.04.2011**

(51) Int Cl.:
***C08L 101/00*** *(2006.01)* ***C08K 5/13*** *(2006.01)*
***C08K 5/134*** *(2006.01)* ***C08K 5/1545*** *(2006.01)*
***C08K 5/524*** *(2006.01)*

(86) International application number:
**PCT/JP2011/059263**

(87) International publication number:
**WO 2011/129392 (20.10.2011 Gazette 2011/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**10.11.2010 JP 2010252059**
**10.11.2010 JP 2010252058**
**10.11.2010 JP 2010252057**
**10.11.2010 JP 2010251754**
**28.06.2010 JP 2010146808**
**28.06.2010 JP 2010146807**
**28.06.2010 JP 2010146806**
**14.04.2010 JP 2010092969**

(71) Applicant: **Sumitomo Chemical Co., Ltd**
**Chuo-ku, Tokyo 104-8260 (JP)**

(72) Inventors:
- **KIMURA, Yoshikazu**
**Osaka-shi**
**Osaka 558-0051 (JP)**
- **AWA, Hideaki**
**Ibaraki-shi**
**Osaka 567-0826 (JP)**

(74) Representative: **Jones, Nicholas Andrew et al**
**Withers & Rogers LLP**
**4 More London Riverside**
**GB-London SE1 2AU (GB)**

(54) **THERMOPLASTIC POLYMER COMPOSITION AND PROCESSING STABILISER**

(57) The present invention provides a thermoplastic polymer composition containing a particular phenol compound or organic phosphorous compound, glucose and a thermoplastic polymer, as well as a processing stabilizer containing a particular phenol compound or organic phosphorous compound and glucose. A combined use of a particular phenol compound or organic phosphorous compound and glucose can improve processing stability of a thermoplastic polymer composition.

EP 2 559 734 A1

## Description

### Technical Field

The present invention relates to a thermoplastic polymer composition superior in the processing stability. Moreover, the present invention also relates to a processing stabilizer.

### Background Art

Since thermoplastic polymers are superior in transparency and show good impact resistance, they are widely used for food packaging containers, convenience goods and the like. For the production of such products, thermoplastic polymers are used as compositions containing additives. As additives for thermoplastic polymers, 2,4-di-t-pentyl-6-[1-(3,5-di-t-pentyl-2-hydroxyphenyl)ethyl]phenyl acrylate, 6-[3-(3-t-butyl-4-hydroxy-5-methylphenyl)propoxy]-2,4,8,10-tetra-t-butyldibenzo[d,f][1,3,2]dioxaphosphepine (which is also called 6-t-butyl-4-[3-[(2,4,8,10-tetra-t-butyldibenzo[d,f][1,3,2]dioxaphosphepin-6-yl)oxy]propyl]-2-methylphenol), octadecyl 3-(3,5-di-t-butyl-4-hydroxyphenyl)propionate, 3,9-bis[2-{3-(3-t-butyl-4-hydroxy-5-methylphenyl)propionyloxy}-1,1-dimethylethyl]-2,4,8,10-tetraoxaspiro[5.5]undecane, pentaerythritol tetrakis[3-(3,5-di-t-butyl-4-hydroxyphenyl)propionate], tris(2,4-di-t-butylphenyl) phosphite and the like are known (patent documents 1 - 6).

### Document List

### Patent Documents

patent document 1: JP-A-1-168643
patent document 2: JP-A-10-273494
patent document 3: US Patent No. 3330859
patent document 4: US Patent No. 3644482
patent document 5: JP-A-59-25826
patent document 6: JP-A-51-109050

## SUMMARY OF THE INVENTION

### Problems to be Solved by the Invention

There is a demand for a thermoplastic polymer composition showing further improved processing stability. Means of Solving the Problems

The present inventors have conducted intensive studies in an attempt to solve the aforementioned problems and found that a thermoplastic polymer composition containing the following compound represented by the formula (1), the following compound represented by the formula (2), at least one selected from the group consisting of the following compounds represented by the formulas (3) - (7), or the following compound represented by the formula (8), glucose, and a thermoplastic polymer
shows superior processing stability. They have reached the following invention based on such findings.

[1] A thermoplastic polymer composition comprising a compound represented by the formula (1):

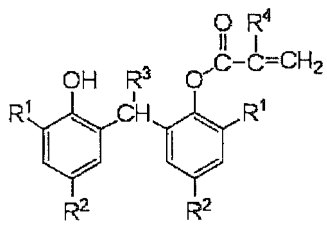

(1)

wherein in the formula (1),
each $R^1$ and/or each $R^2$ are/is independently a $C_{1-8}$ alkyl group, a $C_{6-12}$ aryl group or a $C_{7-18}$ aralkyl group,

$R^3$ is a hydrogen atom or a $C_{1-3}$ alkyl group, and
$R^4$ is a hydrogen atom or a methyl group,
glucose and a thermoplastic polymer.

[2] The thermoplastic polymer composition of the above-mentioned [1], wherein the total amount of the compound represented by the formula (1) and glucose is 0.001 - 3 parts by weight relative to 100 parts by weight of the thermoplastic polymer.
[3] A processing stabilizer comprising a compound represented by the formula (1) and glucose.
[4] The processing stabilizer of the above-mentioned [3], wherein the compound represented by the formula (1) is at least one selected from the group consisting of 2,4-di-t-pentyl-6-[1-(3,5-di-t-pentyl-2-hydroxyphenyl)ethyl]phenyl acrylate and 2-t-butyl-6-(3-t-butyl-2-hydroxy-5-methylbenzyl)-4-methylphenyl acrylate.
[5] The processing stabilizer of the above-mentioned [3] or [4], wherein the content of glucose is 0.1 - 95 wt% of the total of the compound represented by the formula (1) and glucose.
[6] The processing stabilizer of any one of the above-mentioned [3] - [5], further comprising a compound represented by the formula (2):

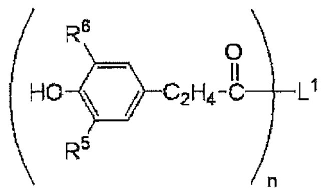
(2)

wherein in the formula (2),
each $R^5$ and/or each $R^6$ are/is independently a hydrogen atom or a $C_{1-6}$ alkyl group,
$L^1$ is an n-valent $C_{1-24}$ alcohol residue optionally containing a hetero atom,
n is an integer of 1 - 4, and
the alcohol residue here is a residue obtained by removing a hydrogen atom from the hydroxy group of the alcohol.

[7] The processing stabilizer of any one of the above-mentioned [3] - [6], further comprising at least one selected from the group consisting of the compounds represented by the formulas (3) - (7):

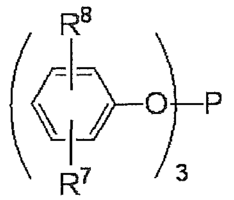
(3)

wherein in the formula (3), each $R^7$ and/or each $R^8$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
**[0013]**

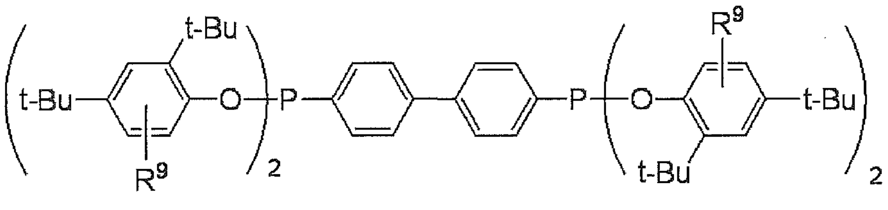
(4)

wherein in the formula (4), each $R^9$ is independently a hydrogen atom, a $C_{1-9}$ alkyl group, a $C_{5-8}$ cycloalkyl

group, a $C_{6-12}$ alkylcycloalkyl group, a $C_{7-12}$ aralkyl group or a phenyl group,

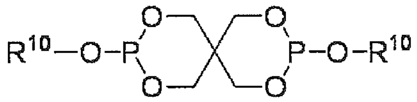

(5)

wherein in the formula (5), each $R^{10}$ is independently a $C_{1-18}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group,

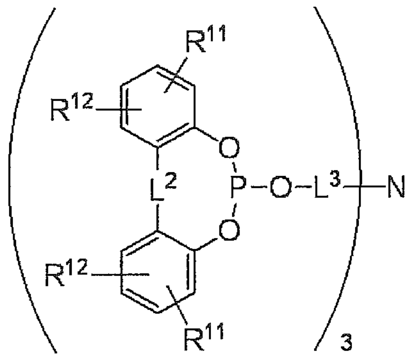

(6)

wherein in the formula (6),
each $R^{11}$ and/or each $R^{12}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
each $L^2$ is independently a single bond, a sulfur atom or a divalent group represented by the formula (6a):

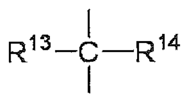

(6a)

wherein in the formula (6a), $R^{13}$ and $R^{14}$ are each independently a hydrogen atom or a $C_{1-7}$ alkyl group, and the total carbon number of $R^{13}$ and $R^{14}$ is not more than 7, and
each $L^3$ is independently a $C_{2-8}$ alkylene group,

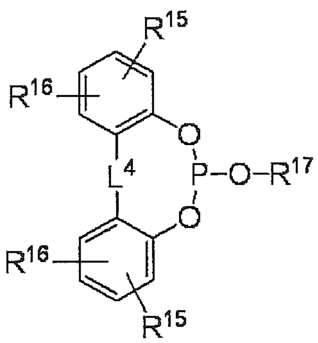

(7)

wherein in the formula (7),
each $R^{15}$ and/or each $R^{16}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
$R^{17}$ is a $C_{1-8}$ alkyl group or a phenyl group optionally substituted by at least one selected from the group consisting of

a $C_{1-9}$ alkyl group, a $C_{5-8}$ cycloalkyl group, a $C_{6-12}$ alkylcycloalkyl group and a $C_{7-12}$ aralkyl group, and $L^4$ is a single bond, a sulfur atom or a divalent group represented by the formula (7a):

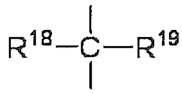

(7a)

wherein in the formula (7a), $R^{18}$ and $R^{19}$ are each independently a hydrogen atom or a $C_{1-7}$ alkyl group, and the total carbon number of $R^{18}$ and $R^{19}$ is not more than 7.

[8] The processing stabilizer of any one of the above-mentioned [3] - [6], further comprising a compound represented by the formula (3).

[9] A method of producing a thermoplastic polymer composition comprising mixing the processing stabilizer of any one of the above-mentioned [3] - [8] and a thermoplastic polymer.

[10] Use of the processing stabilizer of any one of the above-mentioned [3] - [8] for improving the processing stability of a thermoplastic polymer composition.

[11] A thermoplastic polymer composition comprising a compound represented by the formula (8):

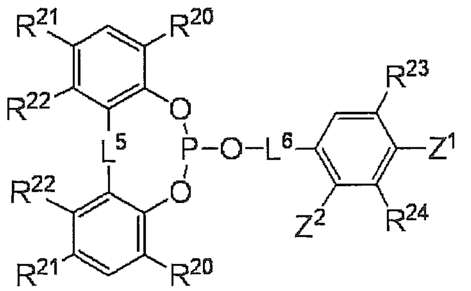

(8)

wherein in the formula (8),
each $R^{20}$ and/or each $R^{21}$ are/is independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group,
$R^{23}$ and $R^{24}$ are each independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group,
each $R^{22}$ is independently a hydrogen atom or a $C_{1-8}$ alkyl group,
$L^5$ is a single bond, a sulfur atom or a divalent group represented by the formula (8a):

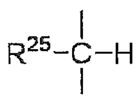

(8a)

wherein in the formula (8a), $R^{25}$ is a hydrogen atom, a $C_{1-8}$ alkyl group or a $C_{5-8}$ cycloalkyl group,
$L^6$ is a $C_{2-8}$ alkylene group or a divalent group represented by the formula (8b):

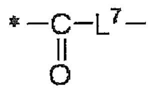

(8b)

wherein in the formula (8b), $L^7$ is a single bond or a $C_{1-8}$ alkylene group, and * shows bonding to the oxygen atom side, and
one of $Z^1$ and $Z^2$ is a hydroxy group, a $C_{1-8}$ alkyl group, a $C_{1-8}$ alkoxy group or a $C_{7-12}$ aralkyloxy group, and the other

is a hydrogen atom or a $C_{1-8}$ alkyl group, glucose and a thermoplastic polymer.

[12] The thermoplastic polymer composition of the above-mentioned [11], wherein the total amount of the compound represented by the formula (8) and glucose is 0.001 - 3 parts by weight relative to 100 parts by weight of the thermoplastic polymer.
[13] A processing stabilizer comprising a compound represented by the formula (8) and glucose.
[14] The processing stabilizer of the above-mentioned [13], wherein the compound represented by the formula (8) is 6-[3-(3-t-butyl-4-hydroxy-5-methylphenyl)propoxy]-2,4,8,10-tetra-t-butyldibenzo[d,f][1,3,2]dioxaphosphepine.
[15] The processing stabilizer of the above-mentioned [13] or [14], wherein the content of glucose is 0.1 - 95 wt% of the total of the compound represented by the formula (8) and glucose.
[16] The processing stabilizer of any one of the above-mentioned [13] - [15], further comprising a compound represented by the formula (2).
[17] The processing stabilizer of any one of the above-mentioned [13] - [16], further comprising at least one selected from the group consisting of the compounds represented by the formulas (3) - (7).
[18] The processing stabilizer of any one of the above-mentioned [13] - [16], further comprising a compound represented by the formula (3).
[19] A method of producing a thermoplastic polymer composition comprising mixing the processing stabilizer of any one of the above-mentioned [13] - [18] and a thermoplastic polymer.
[20] Use of the processing stabilizer of any one of the above-mentioned [13] - [18] for improving the processing stability of a thermoplastic polymer composition.

[ 21] A thermoplastic polymer composition comprising a compound represented by the formula (2), glucose and a thermoplastic polymer.
[22] The thermoplastic polymer composition of the above-mentioned [21], wherein the total amount of the compound represented by the formula (2) and glucose is 0.001 - 3 parts by weight relative to 100 parts by weight of the thermoplastic polymer.
[23] The thermoplastic polymer composition of the above-mentioned [21] or [22], wherein the thermoplastic polymer is a styrene-butadiene block copolymer.
[24] A processing stabilizer comprising a compound represented by the formula (2) and glucose.
[25] A processing stabilizer consisting of a compound represented by the formula (2) and glucose.
[26] The processing stabilizer of the above-mentioned [24] or [25], wherein the compound represented by the formula (2) is at least one selected from the group consisting of octadecyl 3-(3,5-di-t-butyl-4-hydroxyphenyl)propionate, 3,9-bis[2-{3-(3-t-butyl-4-hydroxy-5-methylphenyl)propionyloxy}-1,1-dimethylethyl]-2,4,8,10-tetraoxaspiro[5.5]undecane and pentaerythritol tetrakis[3-(3,5-di-t-butyl-4-hydroxyphenyl)propionate].
[27] The processing stabilizer of any one of the above-mentioned [24] - [26], wherein the content of glucose is 0.1 - 95 wt% of the total of the compound represented by the formula (2) and glucose.
[28] A method of producing a thermoplastic polymer composition comprising mixing the processing stabilizer of any one of the above-mentioned [24] - [27] and a thermoplastic polymer.
[29] Use of the processing stabilizer of any one of the above-mentioned [24] - [27] for improving the processing stability of a thermoplastic polymer composition.

[30] A thermoplastic polymer composition comprising glucose, a thermoplastic polymer and at least one selected from the group consisting of the compounds represented by the formulas (3) - (7).
[31] The thermoplastic polymer composition of the above-mentioned [30], wherein the total amount of glucose and the compound selected from the group consisting of the compounds represented by the formulas (3) - (7) is 0.001 - 3 parts by weight relative to 100 parts by weight of the thermoplastic polymer.
[32] The thermoplastic polymer composition of the above-mentioned [30] or [31], wherein the thermoplastic polymer is a styrene-butadiene block copolymer.
[33] A processing stabilizer comprising glucose and at least one selected from the group consisting of the compounds represented by the formulas (3) - (7).
[34] A processing stabilizer consisting of glucose and at least one selected from the group consisting of the compounds represented by the formulas (3) - (7).
[35] The processing stabilizer of the above-mentioned [33] or [34], wherein at least one selected from the group

consisting of the compounds represented by the formulas (3) - (7) is the compound represented by the formula (3).
[36] The processing stabilizer of the above-mentioned [35], wherein the compound represented by the formula (3) is tris(2,4-di-t-butylphenyl) phosphite.
[37] A method of producing a thermoplastic polymer composition comprising mixing the processing stabilizer of any one of the above-mentioned [33] - [36] and a thermoplastic polymer.
[38] Use of the processing stabilizer of any one of the above-mentioned [33] - [36] for improving the processing stability of a thermoplastic polymer composition.

In the present invention, the "$C_{a-b}$" means that the carbon number is not less than a and not more than b. In the following, the "compound represented by the formula (1)" and the like are sometimes abbreviated as "compound (1)" and the like. Similarly, the "divalent group represented by the formula (6a)" and the like are sometimes abbreviated as "divalent group (6a)" and the like.

**Effect of the Invention**

By using compound (1), compound (2), at least one selected from the group consisting of compounds (3) - (7) or compound (8) in combination with glucose, the processing stability of a thermoplastic polymer composition can be improved.

**Description of Embodiments**

The present invention is explained successively in the following. In the following, the thermoplastic polymer composition of the present invention and the processing stabilizer of the present invention, which contain compound (1) and glucose as essential components, are sometimes referred to as "the first thermoplastic polymer composition" and "the first processing stabilizer", respectively.
In addition, the thermoplastic polymer composition of the present invention and the processing stabilizer of the present invention, which contain compound (8) and glucose as essential components, are sometimes referred to as "the second thermoplastic polymer composition" and "the second processing stabilizer", respectively.
Furthermore, the thermoplastic polymer composition of the present invention and the processing stabilizer of the present invention, which contain compound (2) and glucose as essential components, are sometimes referred to as "the third thermoplastic polymer composition" and "the third processing stabilizer", respectively.
Moreover, the thermoplastic polymer composition of the present invention and the processing stabilizer of the present invention, which contain glucose and at least one selected from the group consisting of compounds (3) - (7) as essential components, are sometimes referred to as "the fourth thermoplastic polymer composition" and "the fourth processing stabilizer", respectively.
Here, the "processing stabilizer" means an agent used for improving the processing stability of the thermoplastic polymer composition. The processing stability of the thermoplastic polymer composition can be evaluated by the method described in the below-mentioned Examples.
The thermoplastic polymer composition of the present invention characteristically contains the processing stabilizer of the present invention (i.e., compound (1), compound (2), at least one selected from the group consisting of the compounds represented by the formulas (3) - (7), or compound (8), and glucose). The processing stabilizer of the present invention is explained in the following.
The first processing stabilizer contains compound (1) as one of the characteristics. Only one kind of compound (1) may be used or two or more kinds thereof may be used in combination. In the following, compound (1) is explained successively.
Each $R^1$ and/or each $R^2$ in the formula (1) are/is independently a $C_{1-8}$ alkyl group, a $C_{6-12}$ aryl group or a $C_{7-18}$ aralkyl group. While there are two $R^1$, they may be the same or different, and they are preferably the same. The same applies to $R^2$.
The $C_{1-8}$ alkyl group may be a chain or a cyclic group, preferably a chain (linear or branched chain), more preferably a branched chain. The $C_{1-8}$ alkyl group includes a linear $C_{1-8}$ alkyl group (e.g., a methyl group, an ethyl group, a propyl group, a butyl group, a pentyl group (to be also referred to as an amyl group) and the like), a branched chain $C_{3-8}$ alkyl group (e.g., an isopropyl group, an isobutyl group, a sec-butyl group, a t-butyl group, a t-pentyl group, a 2-ethylhexyl group and the like), and a cyclic $C_{3-8}$ alkyl group (i.e., a $C_{3-8}$ cycloalkyl group, for example, a cyclopentyl group, a cyclohexyl group and the like). Examples of the $C_{6-12}$ aryl group include a phenyl group, a 1-naphthyl group, a 2-naphthyl group and the like. Examples of the $C_{7-18}$ aralkyl group include a benzyl group, a 1-phenylethyl group, a 2-phenylethyl group and the like.
Preferably, each $R^1$ and/or each $R^2$ are/is independently a branched chain $C_{3-8}$ alkyl group, more preferably a $C_{4-8}$ alkyl group having a tertiary carbon atom, still more preferably a t-butyl group or a t-pentyl group, particularly

preferably a t-pentyl group.

$R^3$ in the formula (1) is a hydrogen atom or a $C_{1-3}$ alkyl group. The $C_{1-3}$ alkyl group may be a linear or branched chain. Examples of the $C_{1-3}$ alkyl group include a methyl group, an ethyl group, a propyl group and an isopropyl group. $R^3$ is preferably a hydrogen atom or a methyl group.

$R^4$ in the formula (1) is a hydrogen atom or a methyl group, preferably a hydrogen atom.

Examples of compound (1) include 2,4-di-t-butyl-6-[1-(3,5-di-t-butyl-2-hydroxyphenyl)ethyl]phenyl (meth)acrylate, 2-t-butyl-6-(3-t-butyl-2-hydroxy-5-methylbenzyl)-4-methylphenyl (meth)acrylate, 2,4-di-t-pentyl-6-[1-(3,5-di-t-pentyl-2-hydroxyphenyl)ethyl]phenyl (meth)acrylate, 2,4-di-t-butyl-6-(3,5-di-t-butyl-2-hydroxy-benzyl)phenyl (meth)acrylate, 2-t-butyl-6-(3-t-butyl-2-hydroxy-5-methylbenzyl)-4-ethylphenyl (meth)acrylate, 2-t-pentyl-6-(3-t-pentyl-2-hydroxy-5-methylbenzyl)-4-methylphenyl (meth)acrylate and the like. Here, the "(meth)acrylate" means "acrylate and methacrylate".

Preferable compound (1) is 2,4-di-t-pentyl-6-[1-(3,5-dit-pentyl-2-hydroxyphenyl)ethyl]phenyl acrylate (hereinafter sometimes to be abbreviated as " compound (1-1)"), and 2-t-butyl-6-(3-t-butyl-2-hydroxy-5-methylbenzyl)-4-methylphenyl acrylate (hereinafter sometimes to be abbreviated as "compound (1-2)"). Compound (1-1) is commercially available as Sumilizer (registered trade mark) GS(F) (manufactured by Sumitomo Chemical Company, Limited), and compound (1-2) is commercially available as Sumilizer (registered trade mark) GM (manufactured by Sumitomo Chemical Company, Limited).

As compound (1), a commercially available product can be used, or it can be produced according to a known method (e.g., the method described in JP-A-1-168643 or JP-A-58-84835).

The first processing stabilizer contains glucose as one of the characteristics. Glucose may be D-glucose or L-glucose or a mixture thereof, preferably D-glucose (dextrose). Glucose may be $\alpha$-form or $\beta$-form or a mixture thereof. Glucose may be of a pyranose type or a furanose type or a mixture thereof, preferably pyranose type. Glucose may be an anhydride or a hydrate, or a mixture thereof. Glucose is commercially available, and a commercially available product can be directly used.

The content of glucose in the first processing stabilizer is preferably not less than 0.1 wt% (more preferably not less than 1 wt%, still more preferably not less than 2 wt%, particularly preferably not less than 5 wt%), preferably not more than 95 wt% (more preferably not more than 90 wt%, still more preferably not more than 75 wt%, particularly preferably not more than 50 wt%), of the total of compound (1) and glucose.

The first processing stabilizer may consist of compound (1) and glucose, or may contain other component. For example, the first processing stabilizer may contain compound (2). Only one kind of compound (2) may be used or two or more kinds thereof may be used in combination. In the following, compound (2) is explained successively.

Each $R^5$ and/or each $R^6$ in the formula (2) are/is independently a hydrogen atom or a $C_{1-6}$ alkyl group. When n is two or more, $R^5$ may be the same as or different from each other, and they are preferably the same. The same applies to $R^6$. The $C_{1-6}$ alkyl group may be a chain or a cyclic group, and the chain may be a linear or branched chain. The $C_{1-6}$ alkyl group includes a linear $C_{1-6}$ alkyl group (a methyl group, an ethyl group, a propyl group, a butyl group, a pentyl group, a hexyl group), a branched chain $C_{3-6}$ alkyl group (e.g., an isopropyl group, an isobutyl group, a t-butyl group, an isopentyl group, a t-pentyl group, a t-hexyl group), and a cyclic $C_{3-6}$ alkyl group (i.e., a $C_{3-6}$ cycloalkyl group, for example, a cyclopentyl group, a cyclohexyl group). Preferably, each $R^5$ and/or each $R^6$ are/is independently a linear $C_{1-6}$ alkyl group or branched chain $C_{3-6}$ alkyl group, more preferably a methyl group or a t-butyl group. Still more preferably, each $R^5$ and each $R^6$ are t-butyl groups.

$L^1$ in the formula (2) is an n-valent $C_{1-24}$ alcohol residue optionally containing a hetero atom, and n is an integer of 1 - 4. Examples of the hetero atom include an oxygen atom, a sulfur atom, a nitrogen atom and the like. These hetero atoms may be replaced with the carbon atom of the n-valent $C_{1-24}$ alcohol residue. That is, the n-valent $C_{1-24}$ alcohol residue may have -O-, -S-, -NR- wherein R is a hydrogen atom or other substituent (e.g., a $C_{1-6}$ alkyl group)) and the like. As the hetero atom, an oxygen atom is preferable.

The n-valent $C_{1-24}$ alcohol residue (n=1 - 4) may be a chain or a cyclic residue, or a combination of these. The chain may be a linear or branched chain.

Examples of the monovalent $C_{1-24}$ alcohol residue include the residues of methanol, ethanol, propanol, isopropanol, butanol, t-butanol, hexanol, octanol, decanol, dodecanol, tetradecanol, hexadecanol, octadecanol and the like.

Examples of the divalent $C_{1-24}$ alcohol residue include the residues of ethylene glycol, 1,2-propanediol, 1,3-propanediol, 1,4-butanediol, 1,5-pentanediol, 1,6-hexanediol, 1,8-octanediol, 1,10-decanediol, 1,12-dodecanediol, 1,14-tetradecanediol, 1,16-hexadecanediol, diethylene glycol, triethylene glycol, 3,9-bis(1,1-dimethyl-2-hydroxyethyl)-2,4,8,10-tetraoxaspiro[5.5]undecane and the like.

Examples of the trivalent $C_{1-24}$ alcohol residue include the residues of glycerol and the like.

Examples of the tetravalent $C_{1-24}$ alcohol residue include the residues of erythritol, pentaerythritol and the like.

Examples of compound (2) include ester of 3-(3,5-di-t-butyl-4-hydroxyphenyl)propionic acid, 3-(3-t-butyl-4-hydroxy-5-methylphenyl)propionic acid or 3-(3,5-dicyclohexyl-4-hydroxyphenyl)propionic acid and a monovalent or polyvalent alcohol. Examples of the aforementioned monovalent or polyvalent alcohol include methanol, ethanol, octanol, octadecanol, ethylene glycol, 1,3-propanediol, 1,4-butanediol, 1,6-hexanediol, 1,9-nonanediol, neopentylglycol, diethylene glycol, thioethylene glycol, triethylene glycol, pentaerythritol, tris(hydroxyethyl)isocyanurate, N,N'-bis(hydroxyethyl) oxamide, 3-thiaundecanol, 3-thiapentadecanol, trimethylhexanediol, trimethylolpropane, 4-hydroxymethyl-1-phospha-2,6,7-trioxabicyclo[2,2,2]octane, 3,9-bis(1,1-dimethyl-2-hydroxyethyl)-2,4,8,10-tetraoxaspiro[5.5]undecane, a mixture thereof and the like.

Preferable compound (2) is octadecyl 3-(3,5-di-t-butyl-4-hydroxyphenyl)propionate (hereinafter sometimes to be abbreviated as " compound (2-1)"), 3,9-bis[2-{3-(3-t-butyl-4-hydroxy-5-methylphenyl)propionyloxy}-1,1-dimethylethyl]-2,4,8,10-tetraoxaspiro[5.5]undecane (hereinafter sometimes to be abbreviated as " compound (2-2)") and pentaerythritol tetrakis[3-(3,5-di-t-butyl-4-hydroxyphenyl)propionate] (hereinafter sometimes to be abbreviated as " compound (2-3)"). Compound (2-1) is commercially available as "Irganox (registered trade mark) 1076" (manufactured by BASF), compound (2-2) is commercially available as "Sumilizer (registered trade mark) GA-80" (manufactured by Sumitomo Chemical Company, Limited), and compound (2-3) is commercially available as "Irganox (registered trade mark) 1010" (manufactured by BASF).

As compound (2), a commercially available product can be used, or it can be produced according to a known method (e.g., the method described in US Patent No. 3330859, US Patent No. 3644482 or JP-A-59-25826).

The first processing stabilizer may further contain at least one selected from the group consisting of compounds (3) - (7). Only one kind of compounds (3) - (7) may be used or two or more kinds thereof may be used in combination. In the following, compounds (3) - (7) are explained successively.

Each $R^7$ and/or each $R^8$ in the formula (3) are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group. While there are three $R^7$, they may be the same as or different from each other, and they are preferably the same. The same applies to $R^8$. The positions of $R^7$ and $R^8$ are preferably the 2-position and the 4-position.

The $C_{1-9}$ alkyl group may be a linear or branched chain. The carbon number of the $C_{1-9}$ alkyl group is preferably not less than 3 and not more than 5. Examples of the $C_{1-9}$ alkyl group include a methyl group, an ethyl group, a propyl group, an isopropyl group, a butyl group, an isobutyl group, a sec-butyl group, a t-butyl group, a pentyl group, a t-pentyl group, a 2-ethylhexyl group, a nonyl group and the like.

The $C_{5-8}$ cycloalkyl group includes a cyclopentyl group, a cyclohexyl group, a cycloheptyl group and a cyclooctyl group.

Examples of the $C_{6-12}$ alkylcycloalkyl group include a 1-methylcyclopentyl group, a 2-methylcyclopentyl group, a 1-methylcyclohexyl group, a 2-methylcyclohexyl group, a 1-methyl-4-isopropylcyclohexyl group and the like.

Examples of the $C_{7-12}$ aralkyl group include a benzyl group, an $\alpha$-methylbenzyl group (also to be referred to as a 1-phenylethyl group), an $\alpha,\alpha$,-dimethylbenzyl group (also to be referred to as a 1-methyl-1-phenylethyl group or a cumyl group) and the like.

Preferably, each $R^7$ and/or each $R^8$ are/is independently a hydrogen atom or a $C_{1-9}$ alkyl group, more preferably a hydrogen atom, a t-butyl group or a nonyl group, still more preferably a t-butyl group.

Examples of compound (3) include tris(2,4-di-t-butylphenyl) phosphite (hereinafter sometimes to be abbreviated as " compound (3-1)"), triphenyl phosphite, tris(4-nonylphenyl) phosphite, tris(2,4-dinonylphenyl) phosphite and the like. Of these, compound (3-1) is preferable. Compound (3-1) is commercially available as "Irgafos (registered trade mark) 168" (manufactured by BASF).

Each $R^9$ in the formula (4) is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group. While there are four $R^9$, they may be the same as or different from each other, and they are preferably the same. Examples of the $C_{1-9}$ alkyl group, $C_{5-8}$ cycloalkyl group, $C_{6-12}$ alkylcycloalkyl group and $C_{7-12}$ aralkyl group for $R^9$ include those mentioned above. Each $R^9$ is preferably independently a hydrogen atom or a $C_{1-9}$ alkyl group, more preferably a hydrogen atom.

Examples of compound (4) include tetrakis(2,4-di-t-butylphenyl)-4,4-biphenylene diphoshonite (hereinafter sometimes to be abbreviated as " compound (4-1)"), tetrakis(2,4-di-t-butyl-5-methylphenyl)-4,4-biphenylene diphoshonite (hereinafter sometimes to be abbreviated as " compound (4-2)") and the like. Of these, compound (4-1) is preferable. Compound (4-1) is commercially available as "Sandostab (registered trade mark) P-EPQ" (manufactured by Clariant), and compound (4-2) is commercially available as "Yoshinox (registered trade mark) GSY-P101" (manufactured by API).

Each $R^{10}$ in the formula (5) is independently a $C_{1-18}$ alkyl group or a phenyl group. The phenyl group for $R^{10}$ may have, as a substituent, at least one selected from the group consisting of a $C_{1-9}$ alkyl group, a $C_{5-8}$ cycloalkyl group, a $C_{6-12}$ alkylcycloalkyl group and a $C_{7-12}$ aralkyl group. Examples of these substituents for phenyl group include those mentioned above. In addition, while there are two $R^{10}$, they may be the same as or different from each other, and they are preferably the same.

The $C_{1-18}$ alkyl group may be a linear or branched chain. The carbon number of the $C_{1-18}$ alkyl group is preferably not less than 12 and not more than 18. Examples of the $C_{1-18}$ alkyl group include a methyl group, an ethyl group, a propyl group, an isopropyl group, a butyl group, an isobutyl group, a t-butyl group, a hexyl group, an octyl group, a decyl group, a dodecyl group, a tetradecyl group, a hexadecyl group, an octadecyl group and the like.

Examples of the phenyl group substituted by a $C_{1-9}$ alkyl group include a 2-methylphenyl group, a 4-methylphenyl group, a 2-t-butylphenyl group, a 4-t-butylphenyl group, a 2-nonylphenyl group, a 4-nonylphenyl group, a 2,4-di-t-butylphenyl group, a 2,4-di-nonylphenyl group, a 2,6-di-t-butylphenyl group, a 2-t-butyl-4-methylphenyl group, a 2-t-butyl-4-ethylphenyl group, a 2,5-di-t-butylphenyl group, a 2,6-di-t-butyl-4-methylphenyl group and the like.

Examples of the phenyl group substituted by a $C_{5-8}$ cycloalkyl group include a 2-cyclopentylphenyl group, a 2-cyclohexylphenyl group, a 4-cyclohexylphenyl group, a 2,4-dicyclohexylphenyl group and the like.

Examples of the phenyl group substituted by a $C_{6-12}$ alkylcycloalkyl group include a 2-(2-methylcyclohexyl)phenyl group, a 4-(2-methylcyclohexyl)phenyl group, a 2,4-di-(2-methylcyclohexyl)phenyl group and the like.

Examples of the phenyl group substituted by a $C_{7-12}$ aralkyl group include a 2-benzylphenyl group, a 2-cumylphenyl group, a 4-cumylphenyl group, a 2,4-dicumylphenyl group and the like.

Examples of the phenyl group substituted by a $C_{1-9}$ alkyl group and a $C_{5-8}$ cycloalkyl group include a 2-methyl-4-cyclohexylphenyl group and the like. Examples of the phenyl group substituted by a $C_{1-9}$ alkyl group and a $C_{6-12}$ alkylcycloalkyl group include a 2-methyl-4-(2-methylcyclohexyl)phenyl group and the like. Examples of the phenyl group substituted by a $C_{1-9}$ alkyl group and a $C_{7-12}$ aralkyl group include a 2-benzyl-4-methylphenyl group and the like.

Each $R^{10}$ is preferably independently an octadecyl group (also to be referred to as a stearyl group), a 2,6-di-t-butyl-4-methylphenyl group, a 2,4-di-t-butylphenyl group or a 2,4-dicumylphenyl group.

Examples of compound (5) include bis(2,6-di-t-butyl-4-methylphenyl)pentaerythritol diphosphite (hereinafter sometimes to be abbreviated as "compound (5-1)"), bis(2,4-dit-butylphenyl)pentaerythritol diphosphite (hereinafter sometimes to be abbreviated as "compound (5-2)"), bis(2,4-dicumylphenyl)pentaerythritol diphosphite (hereinafter sometimes to be abbreviated as "compound (5-3)"), distearylpentaerythritol diphosphite (hereinafter sometimes to be abbreviated as "compound (5-4)"), diisodecylpentaerythritol diphosphite, bis(2,4-di-t-butylphenyl)pentaerythritol diphosphite, bis(2,4-di-t-butyl-6-methylphenyl)pentaerythritol diphosphite, bis(2,4,6-tri-t-butylphenyl)pentaerythritol diphosphite and the like. Of these, compound (5-1), compound (5-2) and compound (5-3) are preferable. Compound (5-1) is commercially available as "Adekastab (registered trade mark) PEP-36" (manufactured by ADEKA), compound (5-2) is commercially available as "Ultranox (registered trade mark) 626" (manufactured by GE Plastics), compound (5-3) is commercially available as "Doverphos S9228T" (manufactured by Dover Chemical Corporation), and compound (5-4) is commercially available as "Adekastab (registered trade mark) PEP-8" (manufactured by ADEKA).

Each $R^{11}$ and/or each $R^{12}$ in the formula (6) are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group. Examples of the $C_{1-9}$ alkyl group, $C_{5-8}$ cycloalkyl group, $C_{6-12}$ alkylcycloalkyl group and $C_{7-12}$ aralkyl group for $R^{11}$ or $R^{12}$ include those mentioned above. While there are six $R^{11}$, they may be the same as or different from each other, and they are preferably the same. The same applies to $R^{12}$. The positions of $R^{11}$ and $R^{12}$ are preferably the 3-position and the 5-position, when the position of the carbon atom on the benzene ring to which $L^2$ is bonded is the 1-position. Preferably, each $R^{11}$ and/or each $R^{12}$ are/is independently a $C_{1-9}$ alkyl group, more preferably a t-butyl group.

Each $L^2$ in the formula (6) is independently a single bond, a sulfur atom or a divalent group represented by the formula (6a). The total carbon number of $R^{13}$ and $R^{14}$ in the formula (6a) is not more than 7, and $R^{13}$ and $R^{14}$ are each independently a hydrogen atom or a $C_{1-7}$ alkyl group. While there are three $L^2$, they may be the same as or different from each other, and they are preferably the same.

The $C_{1-7}$ alkyl group may be a linear or branched chain. The carbon number of the $C_{1-7}$ alkyl group is preferably not less than 1 and not more than 3. The total carbon number of $R^{13}$ and $R^{14}$ is preferably not more than 3. Examples of the $C_{1-7}$ alkyl group include a methyl group, an ethyl group, a propyl group, an isopropyl group, a butyl group, an isobutyl group, a sec-butyl group, a t-butyl group, a pentyl group, an isopentyl group, a neopentyl group, a t-pentyl group, a hexyl group, a heptyl group and the like.

Examples of the divalent group (6a) include $-CH_2-$, $-CH(CH_3)-$, $-CH(C_2H_5)-$, $-C(CH_3)_2-$, $-CH(n\text{-}C_3H_7)-$ and the like.

Each $L^2$ is preferably $-CH_2-$ or a single bond, more preferably a single bond.

Each $L^3$ in the formula (6) is independently a $C_{2-8}$ alkylene group. While there are three $L^3$, they may be the same as or different from each other, and they are preferably the same.

Examples of the $C_{2-8}$ alkylene group include an ethylene group, a propylene group ($-CH(CH_3)CH_2-$, $-CH_2CH(CH_3)-$), a trimethylene group, a tetramethylene group, a pentamethylene group, a hexamethylene group, an octamethylene group, a 2,2-dimethyl-1,3-propylene group and the like.

Each $L^3$ is preferably independently an ethylene group or a trimethylene group, more preferably an ethylene group.

As compound (6), 6, 6', 6"-[nitrilotris(ethyleneoxy)]tris(2,4,8,10-tetra-t-butyldibenzo[d,f][1,3,2]dioxaphosphepine) (hereinafter sometimes to be abbreviated as "compound (6-1)") is preferable. Compound (6-1) is commercially available as "Irgafos (registered trade mark) 12" (manufactured by BASF).

Each $R^{15}$ and/or each $R^{16}$ in the formula (7) are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group. Examples of the $C_{1-9}$ alkyl group,

$C_{5-8}$ cycloalkyl group, $C_{6-12}$ alkylcycloalkyl group and $C_{7-12}$ aralkyl group for $R^{15}$ or $R^{16}$ include those mentioned above. While there are two $R^{15}$, they may be the same as or different from each other, and they are preferably the same. The same applies to $R^{16}$. The positions of $R^{15}$ and $R^{16}$ are preferably the 3-position and the 5-position, when the position of the carbon atom on the benzene ring to which $L^4$ is bonded is the 1-position. That is, when the position of the carbon atom on the benzene ring to which O is bonded is the 1-position, respectively, the 2-position and the 4-position are preferable. Preferably, each $R^{15}$ and/or each $R^{16}$ are/is independently a $C_{1-9}$ alkyl group, more preferably a t-butyl group.

$R^{17}$ in the formula (7) is a $C_{1-8}$ alkyl group or a phenyl group. The phenyl group for $R^{17}$ may have, as a substituent, at least one selected from the group consisting of a $C_{1-9}$ alkyl group, a $C_{5-8}$ cycloalkyl group, a $C_{6-12}$ alkylcycloalkyl group and a $C_{7-12}$ aralkyl group. Examples of the $C_{1-8}$ alkyl group and the phenyl group having a substituent for $R^{17}$ include those mentioned above. The carbon number of the $C_{1-8}$ alkyl group for $R^{17}$ is preferably not less than 4 and not more than 8. $R^{17}$ is preferably a $C_{1-8}$ alkyl group, more preferably an octyl group.

$L^4$ in the formula (7) is a single bond, a sulfur atom or a divalent group represented by the formula (7a). The total carbon number of $R^{18}$ and $R^{19}$ in the formula (7a) is not more than 7, and $R^{18}$ and $R^{19}$ are each independently a hydrogen atom or a $C_{1-7}$ alkyl group. Examples of the $C_{1-7}$ alkyl group for $R^{18}$ or $R^{19}$ include those mentioned above. The total carbon number for $R^{18}$ or $R^{19}$ is preferably not more than 3. Specific examples of the divalent group (7a) include those recited for the divalent group (6a). $L^4$ is preferably $-CH_2-$ or a single bond, more preferably $-CH_2-$.

Examples of compound (7) include 2,2-methylenebis(4,6-dit-butylphenyl) octyl phosphite (hereinafter sometimes to be abbreviated as "compound (7-1)") and 2,2'-methylenebis(4,6-dit-butylphenyl) 2-ethylhexyl phosphite. Of these, compound (7-1) is preferable. Compound (7-1) is commercially available as "Adekastab (registered trade mark) HP-10" (manufactured by ADEKA).

Among compounds (3) - (7), compound (3) is preferable, and compound (3-1) is more preferable.

When the first processing stabilizer contains at least one of compound (2) - compound (7), the content of each of compound (2) - compound (7) is preferably not less than 0.1 part by weight (more preferably not less than 10 parts by weight, still more preferably not less than 20 parts by weight), preferably not more than 200 parts by weight (more preferably not more than 90 parts by weight, still more preferably not more than 80 parts by weight), relative to 100 parts by weight of the total of compound (1) and glucose.

Next, the second processing stabilizer is explained. The second processing stabilizer contains compound (8) as one of the characteristics. Only one kind of compound (8) may be used or two or more kinds thereof may be used in combination. In the following, compound (8) is explained successively.

Each $R^{20}$ and/or each $R^{21}$ in the formula (8) are/is independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group. $R^{23}$ and $R^{24}$ in the formula (8) are each independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group. While there are two $R^{20}$, they may be the same as or different from each other, and they are preferably the same. The same applies to $R^{21}$.

The $C_{1-8}$ alkyl group may be a linear or branched chain. The carbon number of the $C_{1-8}$ alkyl group is preferably not less than 1 and not more than 5. Examples of the $C_{1-8}$ alkyl group include a methyl group, an ethyl group, a propyl group, an isopropyl group, a butyl group, an isobutyl group, a sec-butyl group, a t-butyl group, a t-pentyl group, an isooctyl group (also to be referred to as a 6-methylheptyl group), a t-octyl group (also to be referred to as a 1,1,3,3-tetramethylbutyl group), a 2-ethylhexyl group and the like.

The $C_{5-8}$ cycloalkyl group includes a cyclopentyl group, a cyclohexyl group, a cycloheptyl group and a cyclooctyl group.

Examples of the $C_{6-12}$ alkylcycloalkyl group include a 1-methylcyclopentyl group, a 2-methylcyclopentyl group, a 1-methylcyclohexyl group, a 2-methylcyclohexyl group, a 1-methyl-4-isopropylcyclohexyl group and the like.

Examples of the $C_{7-12}$ aralkyl group include a benzyl group, $\alpha$-methylbenzyl group (also to be referred to as a 1-phenylethyl group), an $\alpha,\alpha$-dimethylbenzyl group (also to be referred to as a 1-methyl-1-phenylethyl group or a cumyl group) and the like.

Preferably, each $R^{20}$ and/or $R^{23}$ are/is independently a $C_{1-8}$ alkyl group (more preferably a $C_{4-8}$ alkyl group having a tertiary carbon atom), a $C_{5-8}$ cycloalkyl group (more preferably a cyclohexyl group) or a $C_{6-12}$ alkylcycloalkyl group (more preferably a 1-methylcyclohexyl group). As the $C_{4-8}$ alkyl group having a tertiary carbon atom, a t-butyl group, a t-pentyl group and a t-octyl group are still more preferable.

Each $R^{21}$ is preferably independently a $C_{1-8}$ alkyl group, a $C_{5-8}$ cycloalkyl group or a $C_{6-12}$ alkylcycloalkyl group, more preferably a $C_{1-5}$ alkyl group. The $C_{1-5}$ alkyl group may be a linear or branched chain. Examples of the $C_{1-5}$ alkyl group include a methyl group, an ethyl group, a propyl group, an isopropyl group, a butyl group, an isobutyl group, a sec-butyl group, a t-butyl group, a t-pentyl group and the like. More preferably, each $R^{21}$ is independently a methyl group, a t-butyl group or a t-pentyl group.

$R^{24}$ is preferably a hydrogen atom or a $C_{1-5}$ alkyl group, more preferably a hydrogen atom or a methyl group. Examples of the $C_{1-5}$ alkyl group for $R^{24}$ include those mentioned above.

Each $R^{22}$ in the formula (8) is independently a hydrogen atom or a $C_{1-8}$ alkyl group. While there are two $R^{22}$,

they may be the same as or different from each other, and they are preferably the same. Each $R^{22}$ is preferably a hydrogen atom or a $C_{1-5}$ alkyl group, more preferably a methyl group or a hydrogen atom. Examples of the $C_{1-8}$ alkyl group and $C_{1-5}$ alkyl group for $R^{22}$ include those mentioned above.

$L^5$ in the formula (8) is a single bond, a sulfur atom or a divalent group represented by the formula (8a). $R^{25}$ in the formula (8a) is a hydrogen atom, a $C_{1-8}$ alkyl group or a $C_{5-8}$ cycloalkyl group. $R^{25}$ is preferably a hydrogen atom or a $C_{1-5}$ alkyl group. Examples of the $C_{1-8}$ alkyl group, $C_{1-5}$ alkyl group and $C_{5-8}$ cycloalkyl group for $R^{25}$ include those mentioned above. $L^5$ is preferably a single bond or the divalent group (8a), more preferably a single bond.

$L^6$ in the formula (8) is a $C_{2-8}$ alkylene group or a divalent group represented by the formula (8b). $L^7$ in the formula (8b) is a single bond or a $C_{1-8}$ alkylene group. The $C_{2-8}$ alkylene group and $C_{1-8}$ alkylene group may be each a linear or branched chain. Examples of the $C_{2-8}$ alkylene group include an ethylene group, a propylene group ($-CH(CH_3)CH_2-$, $-CH_2CH(CH_3)-$), a trimethylene group, a tetramethylene group, a pentamethylene group, a hexamethylene group, an octamethylene group, a 2,2-dimethyl-1,3-propylene group and the like. Examples of the $C_{1-8}$ alkylene group include a methylene group, the aforementioned $C_{2-8}$ alkylene group and the like.

$L^6$ is preferably a $C_{2-8}$ alkylene group, the divalent group (8b) wherein $L^7$ is a single bond (i.e., a carbonyl group), or the divalent group (8b) wherein $L^7$ is an ethylene group; more preferably a $C_{2-8}$ alkylene group; and still more preferably a trimethylene group.

One of $Z^1$ and $Z^2$ in the formula (8) is a hydroxy group, a $C_{1-8}$ alkyl group, a $C_{1-8}$ alkoxy group or a $C_{7-12}$ aralkyloxy group, and the other is a hydrogen atom or a $C_{1-8}$ alkyl group. Examples of the $C_{1-8}$ alkyl group for $Z^1$ and $Z^2$ include those mentioned above.

The $C_{1-8}$ alkoxy group may be a linear or branched chain. Examples of the $C_{1-8}$ alkoxy group include a methoxy group, an ethoxy group, a propoxy group, an isopropoxy group, a butoxy group, an isobutoxy group, a sec-butoxy group, a t-butoxy group, a t-pentyloxy group, an isooctyloxy group (also to be referred to as a 6-methylheptyloxy group), a t-octyloxy group (also to be referred to as a 1,1,3,3-tetramethylbutyloxy group), a 2-ethylhexyloxy group and the like.

Examples of the $C_{7-12}$ aralkyloxy group include a benzyloxy group, an α-methylbenzyloxy group, an α,α-dimethylbenzyloxy group and the like.

Preferably, one of $Z^1$ and $Z^2$ is a hydroxy group, and the other is a hydrogen atom.

A preferable combination of the substituents is a combination wherein each $R^{20}$ and/or $R^{23}$ are/is independently a $C_{4-8}$ alkyl group having a tertiary carbon atom, cyclohexyl or a 1-methylcyclohexyl group, each $R^{21}$ is independently a $C_{1-5}$ alkyl group, each $R^{22}$ is independently a hydrogen atom or a $C_{1-5}$ alkyl group, $R^{24}$ is a hydrogen atom or a $C_{1-5}$ alkyl group, $L^5$ is a single bond, $L^6$ is a $C_{2-8}$ alkylene group, and one of $Z^1$ and $Z^2$ is a hydroxy group and the other is a hydrogen atom. In this preferable combination, each $R^{20}$ is more preferably the same. The same applies to each $R^{21}$ and each $R^{22}$. In addition, in this preferable combination, each $R^{20}$, each $R^{22}$ and $R^{23}$ are all still more preferably t-butyl groups or t-pentyl groups (particularly t-butyl groups).

Examples of compound (8) include 6-[3-(3-t-butyl-4-hydroxy-5-methylphenyl)propoxy]-2,4,8,10-tetra-t-butyldibenzo[d,f][1,3,2]dioxaphosphepine, 2,10-dimethyl-4,8-di-t-butyl-6-[3-(3,5-di-t-butyl-4-hydroxyphenyl)propoxy]-12H-dibenzo[d,g][1,3,2]dioxaphosphocin, 2,4,8,10-tetra-t-butyl-6-[3-(3,5-di-t-butyl-4-hydroxyphenyl)propoxy]dibenzo[d,f][1,3,2]dioxaphosphepine, 2,4,8,10-tetra-t-pentyl-6-[3-(3,5-di-t-butyl-4-hydroxyphenyl)propoxy]-12-methyl-12H-dibenzo[d,g][1,3,2]dioxaphosphocin, 2,10-dimethyl-4,8-di-t-butyl-6-[3-(3,5-di-t-butyl-4-hydroxyphenyl)propionyloxy]-12H-dibenzo[d,g][1,3,2]dioxaphosphocin, 2,4,8,10-tetra-t-pentyl-6-[3-(3,5-di-t-butyl-4-hydroxyphenyl)propionyloxy]-12-methyl-12H-dibenzo[d,g][1,3,2]dioxaphosphocin, 2,4,8,10-tetra-t-butyl-6-[3-(3,5-di-t-butyl-4-hydroxyphenyl)propionyloxy]-dibenzo[d,f][1,3,2]dioxaphosphepine, 2,10-dimethyl-4,8-di-t-butyl-6-(3,5-di-t-butyl-4-hydroxybenzoyloxy)-12H-dibenzo[d,g][1,3,2]dioxaphosphocin, 2,4,8,10-tetra-t-butyl-6-(3,5-di-t-butyl-4-hydroxybenzoyloxy)-12-methyl-12H-dibenzo[d,g][1,3,2]dioxaphosphocin, 2,10-dimethyl-4,8-di-t-butyl-6-[3-(3-methyl-4-hydroxy-5-t-butylphenyl)propoxy]-12H-dibenzo[d,g][1,3,2]dioxaphosphocin, 2,4,8,10-tetra-t-butyl-6-[3-(3,5-di-t-butyl-4-hydroxyphenyl)propoxy]-12H-dibenzo[d,g][1,3,2]dioxaphosphocin, 2,10-diethyl-4,8-di-t-butyl-6-[3-(3,5-di-t-butyl-4-hydroxyphenyl)propoxy]-12H-dibenzo[d,g][1,3,2]dioxaphosphocin, 2,4,8,10-tetra-t-butyl-6-[2,2-dimethyl-3-(3-t-butyl-4-hydroxy-5-methylphenyl)propoxy]-dibenzo[d,f][1,3,2]dioxaphosphepine and the like.

Of compound (8), 6-[3-(3-t-butyl-4-hydroxy-5-methylphenyl)propoxy]-2,4,8,10-tetra-t-butyldibenzo[d,f][1,3,2]dioxaphosphepine (hereinafter sometimes to be abbreviated as " compound (8-1)") is preferable. Compound (8-1) is commercially available as "Sumilizer (registered trade mark) GP" (manufactured by Sumitomo Chemical Company, Limited).

As compound (8), a commercially available product can be used, or it can be produced according to a known method (e.g., the method described in JP-A-10-273494).

The second processing stabilizer contains glucose as one of the characteristics. Explanations of glucose are the same as those mentioned above.

The content of glucose in the second processing stabilizer is preferably not less than 0.1 wt% (more preferably not less than 1 wt%, still more preferably not less than 2 wt%, particularly preferably not less than 5 wt%), preferably not more than 95 wt% (more preferably not more than 90 wt%, still more preferably not more than 75 wt%, particularly

preferably not more than 50 wt%), of the total of compound (8) and glucose.

The second processing stabilizer may consist of compound (8) and glucose, or may contain other component. For example, the second processing stabilizer may further contain compound (2). Only one kind of compound (2) may be used or two or more kinds thereof may be used in combination. Explanations of compound (2) are the same as those mentioned above.

The second processing stabilizer may further contain at least one selected from the group consisting of compounds (3) - (7). Only one kind of compounds (3) - (7) may be used or two or more kinds thereof may be used in combination. Explanations of compounds (3) - (7) are the same as those mentioned above.

When the second processing stabilizer contains at least one of compound (2) - compound (7), the content of each of compound (2) - compound (7) is preferably not less than 0.1 part by weight (more preferably not less than 10 parts by weight, still more preferably not less than 20 parts by weight), preferably not more than 200 parts by weight (more preferably not more than 90 parts by weight, still more preferably not more than 80 parts by weight), relative to 100 parts by weight of the total of compound (8) and glucose.

Next, the third processing stabilizer is explained. The third processing stabilizer contains compound (2) as one of the characteristics. Only one kind of compound (2) may be used or two or more kinds thereof may be used in combination. Explanations of compound (2) are the same as those mentioned above.

The third processing stabilizer contains glucose as one of the characteristics. Explanations of glucose are the same as those mentioned above.

The content of glucose in the third processing stabilizer is preferably not less than 0.1 wt% (more preferably not less than 1 wt%, still more preferably not less than 2 wt%, particularly preferably not less than 5 wt%), preferably not more than 95 wt% (more preferably not more than 90 wt%, still more preferably not more than 75 wt%, particularly preferably not more than 50 wt%), of the total of compound (2) and glucose.

The third processing stabilizer may consist of compound (2) and glucose, or may contain other component. For example, the third processing stabilizer may contain compound (1). Only one kind of compound (1) may be used or two or more kinds thereof may be used in combination. Explanations of compound (1) are the same as those mentioned above.

The third processing stabilizer may further contain at least one selected from the group consisting of compounds (3) - (7). Only one kind of compounds (3) - (7) may be used or two or more kinds thereof may be used in combination. Explanations of compounds (3) - (7) are the same as those mentioned above.

The third processing stabilizer may further contain compound (8). Only one kind of compound (8) may be used or two or more kinds thereof may be used in combination. Explanations of compound (8) are the same as those mentioned above.

Of compound (1) and compounds (3) - (8) usable for the third processing stabilizer, compound (1), compound (3) and compound (8) are preferable, compound (1) and compound (8) are more preferable, and compound (1) is still more preferable.

When the third processing stabilizer contains at least one of compound (1), compound (3) - compound (8), the content of each of compound (1), compound (3) - compound (8) is preferably not less than 0.1 part by weight (more preferably not less than 10 parts by weight, still more preferably not less than 20 parts by weight), preferably not more than 200 parts by weight (more preferably not more than 90 parts by weight, still more preferably not more than 80 parts by weight), relative to 100 parts by weight of the total of compound (2) and glucose.

Next, the fourth processing stabilizer is explained. The fourth processing stabilizer contains at least one selected from the group consisting of compounds (3) - (7) (i.e., organic phosphorous compound) as one of the characteristics. Only one kind of compounds (3) - (7) may be used or two or more kinds thereof may be used in combination. Explanations of compounds (3) - (7) are the same as those mentioned above.

The fourth processing stabilizer contains glucose as one of the characteristics. Explanations of glucose are the same as those mentioned above.

The weight ratio of the compound selected from the group consisting of compounds (3) - (7) and glucose in the fourth processing stabilizer (i.e., compound selected from the group consisting of compounds (3) - (7):glucose) is preferably 1000:1 - 0.05:1. The compound selected from the group consisting of compounds (3) - (7):glucose is more preferably 1000:1 - 0.1:1 from the aspect of processing stability of a thermoplastic polymer composition, and still more preferably 1000:1 - 0.5:1, particularly preferably 1000:1 - 1:1, from the aspect of suppression of color change of a thermoplastic polymer composition.

The fourth processing stabilizer may consist of glucose and at least one selected from the group consisting of compounds represented by the formulas (3) - (7), or may contain other component. Here, "the fourth processing stabilizer consist of glucose and at least one selected from the group consisting of the compounds represented by the formulas (3) - (7)" means "the total amount of glucose and the compound selected from the group consisting of compound (3) - compound (7) is not less than 99 wt% of the fourth processing stabilizer".

The fourth processing stabilizer may further contain at least one selected from the group consisting of compound

(1), compound (2) and compound (8). Only one kind of each of compound (1), compound (2) and compound (8) may be used or two or more kinds thereof may be used in combination. Explanations of compound (1), compound (2) and compound (8) are the same as those mentioned above.

The content of each of compound (1), compound (2) and compound (8), which can be used in combination in the fourth processing stabilizer is preferably 0 - 90 wt%, more preferably 0.1 - 80 wt%, of the fourth processing stabilizer.

The processing stabilizer of the present invention (i.e., the first - fourth processing stabilizers) may contain additives other than the above-mentioned components (hereinafter to be abbreviated as "other additives"). Only one kind of other additives may be used or two or more kinds thereof may be used in combination. Examples of other additive include antioxidant, UV absorber, light stabilizer, stabilizer, lubricant, metal deactivator, nucleating agent, antistatic agent, flame-retardant, filler, pigment, inorganic filler and the like.

Examples of the antioxidant include phenol antioxidant (excluding compound (1) and compound (2)), sulfur antioxidant, phosphorus antioxidant (excluding compounds (3) - (8)), hydroquinone antioxidant and the like.

Examples of the phenol antioxidant include those described in the following [1] - [16] and the like.

[1] alkylated monophenol such as 2,6-di-t-butyl-4-methylphenol, 2,4,6-tri-t-butylphenol, 2,6-di-t-butylphenol, 2-t-butyl-4,6-dimethylphenol, 2,6-di-t-butyl-4-ethylphenol, 2,6-di-t-butyl-4-n-butylphenol, 2,6-di-t-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-t-butyl-4-methoxymethylphenol, 2,6-di-nonyl-4-methylphenol, 2,4-dimethyl-6-(1'-methylundecyl-1'-yl)phenol, 2,4-dimethyl-6-(1'-methylheptadecyl-1'-yl)phenol, 2,4-dimethyl-6-(1'-methyltridecyl-1'-yl)phenol and the like.

[2] alkylthiomethylphenol such as 2,4-bis(octylthiomethyl)-6-t-butylphenol, 2,4-bis(octylthiomethyl)-6-methylphenol, 2,4-bis(octylthiomethyl)-6-ethylphenol, 2,6-bis(dodecylthiomethyl)-4-nonylphenol and the like.

[3] alkylidene bisphenol and derivatives thereof such as 2,2'-methylenebis(4-methyl-6-t-butylphenol), 2,2'-methylenebis(4-ethyl-6-t-butylphenol), 2,2'-methylenebis[4-methyl-6-(α-methylcyclohexyl)phenol], 2,2'-methylenebis(4-methyl-6-cyclohexylphenol), 2,2'-methylenebis(4-methyl-6-nonylphenol), 2,2'-methylenebis(4,6-di-t-butylphenol), 2,2'-ethylidenebis(4,6-di-t-butylphenol), 2,2'-ethylidenebis(4-isobutyl-6-t-butylphenol), 2,2'-methylenebis[6-(α,-methylbenzyl)-4-nonylphenol], 2,2'-methylenebis[6-(α,α-dimethylbenzyl)-4-nonylphenol], 4,4'-methylenebis(6-t-butyl-2-methylphenol), 4,4'-methylenebis(2,6-di-t-butylphenol), 4,4'-butylidenebis(3-methyl-6-t-butylphenol), 1,1-bis(4-hydroxyphenyl) cyclohexane, 1,1-bis(5-t-butyl-4-hydroxy-2-methylphenyl)butane, 2,6-bis(3-t-butyl-5-methyl-2-hydroxybenzyl)-4-methylphenol, 1,1,3-tris(5-t-butyl-4-hydroxy-2-methylphenyl)butane, 1,1-bis(5-t-butyl-4-hydroxy-2-methylphenyl)-3-n-dodecylmercaptobutane, ethylene glycol bis[3,3-bis(3'-t-butyl-4'-hydroxyphenyl)butyrate], bis(3-t-butyl-4-hydroxy-5-methylphenyl)dicyclopentadiene, bis[2-(3'-t-butyl-2'-hydroxy-5'-methylbenzyl)-6-t-butyl-4-methylphenyl] terephthalate, 1,1-bis (3,5-dimethyl-2-hydroxyphenyl)butane, 2,2-bis(3,5-di-t-butyl-4-hydroxyphenyl)propane, 2,2-bis(5-t-butyl-4-hydroxy-2-methylphenyl)-4-n-dodecylmercaptobutane, 1,1,5,5-tetra(5-t-butyl-4-hydroxy-2-methylphenyl)pentane and the like.

[4] acylaminophenol derivative such as 4-hydroxylauryl anilide, 4-hydroxystearic anilide, octyl-N-(3,5-di-t-butyl-4-hydroxyphenyl)carbamate and the like.

[5] ester of β-(3,5-di-t-butyl-4-hydroxyphenyl)propionic acid and a monovalent or polyvalent alcohol (e.g., methanol, ethanol, octanol, octadecanol, ethylene glycol, 1,3-propanediol, 1,4-butanediol, 1,6-hexanediol, 1,9-nonanediol, neopentylglycol, diethylene glycol, thioethylene glycol, spiroglycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane or a mixture thereof and the like).

[6] bis(hydroxyphenyl)sulfide such as 2,2'-thiobis(6-t-butylphenol), 2,2'-thiobis(4-methyl-6-t-butylphenol), 2,2'-thiobis(4-octylphenol), 4,4'-thiobis(2-methyl-6-t-butylphenol), 4,4'-bis(2,6-dimethyl-4-hydroxyphenyl)sulfide and the like.

[7] O-benzyl derivative, N-benzyl derivative and S-benzyl derivative such as 3,5,3',5'-tetra-t-butyl-4,4'-dihydroxydibenzyl ether, octadecyl 4-hydroxy-3,5-dimethylbenzylmercaptoacetate, tris(3,5-di-t-butyl-4-hydroxybenzyl)amine, bis (4-t-butyl-3-hydroxy-2,6-dimethylbenzyl) dithioterephthalate, bis(3,5-di-t-butyl-4-hydroxybenzyl)sulfide, isooctyl 3,5-di-t-butyl-4-hydroxybenzylmercaptoacetate and the like.

[8] triazine derivative such as 2,4-bis(n-octylthio)-6-(4-hydroxy-3,5-di-t-butylanilino)-1,3,5-triazine, 2-n-octylthio-4,6-bis(4-hydroxy-3,5-di-t-butylanilino)-1,3,5-triazine, 2-n-octylthio-4,6-bis(4-hydroxy-3,5-di-t-butylphenoxy)-1,3,5-triazine, 2,4,6-tris(3,5-di-t-butyl-4-phenoxy)-1,3,5-triazine, tris(4-t-butyl-3-hydroxy-2,6-dimethylbenzyl)isocyanurate, tris (3,5-di-t-butyl-4-hydroxybenzyl)isocyanurate, 2,4,6-tris(3,5-di-t-butyl-4-hydroxyphenylethyl)-1,3,5-triazine, 2,4,6-tris (3,5-di-t-butyl-4-hydroxyphenylpropyl)-1,3,5-triazine, tris(3,5-dicyclohexyl-4-hydroxybenzyl)isocyanurate, tris[2-(3',5'-di-t-butyl-4'-hydroxycinnamoyloxy)ethyl]isocyanurate and the like.

[9] hydroxybenzylated malonate derivative such as dioctadecyl 2,2-bis(3,5-di-t-butyl-2-hydroxybenzyl)malonate, dioctadecyl 2-(3-t-butyl-4-hydroxy-5-methylbenzyl)malonate, didodecylmercaptoethyl 2,2-bis(3,5-di-t-butyl-4-hydroxybenzyl)malonate, bis[4-(1,1,3,3-tetramethylbutyl)phenyl] 2,2-bis(3,5-di-t-butyl-4-hydroxybenzyl)malonate and the like.

[10] aromatic hydroxybenzyl derivative such as 1,3,5-trimethyl-2,4,6-tris(3,5-di-t-butyl-4-hydroxybenzyl)benzene, 1,4-bis(3,5-di-t-butyl-4-hydroxybenzyl)-2,3,5,6-tetramethylbenzene, 2,4,6-tris(3,5-di-t-butyl-4-hydroxybenzyl)phenol and the like.

[11] benzylphosphonate derivative such as dimethyl 3,5-di-t-butyl-4-hydroxybenzylphosphonate, diethyl 3,5-di-t-butyl-4-hydroxybenzylphosphonate, dioctadecyl 3,5-di-t-butyl-4-hydroxybenzylphosphonate, dioctadecyl 5-t-butyl-4-hydroxy-3-methylbenzylphosphonate, calcium salt of 3,5-di-t-butyl-4-hydroxybenzylphosphonic acid monoester and the like.

[12] ester of β-(5-t-butyl-4-hydroxy-3-methylphenyl)propionic acid and a monovalent or polyvalent alcohol (e.g., methanol, ethanol, octanol, octadecanol, ethylene glycol, 1,3-propanediol, 1,4-butanediol, 1,6-hexanediol, 1,9-nonanediol, neopentylglycol, diethylene glycol, thioethylene glycol, spiroglycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane or a mixture thereof and the like).

[13] ester of β-(3,5-dicyclohexyl-4-hydroxyphenyl)propionic acid and a monovalent or polyvalent alcohol (e.g., methanol, ethanol, octanol, octadecanol, ethylene glycol, 1,3-propanediol, 1,4-butanediol, 1,6-hexanediol, 1,9-nonanediol, neopentylglycol, diethylene glycol, thioethylene glycol, spiroglycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane or a mixture thereof and the like).

[14] ester of 3,5-di-t-butyl-4-hydroxyphenylacetic acid and a monovalent or polyvalent alcohol (e.g., methanol, ethanol, octanol, octadecanol, ethylene glycol, 1,3-propanediol, 1,4-butanediol, 1,6-hexanediol, 1,9-nonanediol, neopentylglycol, diethylene glycol, thioethylene glycol, spiroglycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane or a mixture thereof).

[15] amide of β-(3,5-di-t-butyl-4-hydroxyphenyl)propionic acid such as N,N'-bis[3-(3',5'-di-t-butyl-4'-hydroxyphenyl)propionyl]hydrazine, N,N'-bis[3-(3',5'-di-t-butyl-4'-hydroxyphenyl)propionyl]hexamethylenediamine, N,N'-bis [3-(3',5'-di-t-butyl-4'-hydroxyphenyl)propionyl]trimethylenediamine and the like.

[16] tocopherols such as α-tocopherol, β-tocopherol, γ-tocopherol, δ-tocopherol and the like.

Examples of the sulfur antioxidant include dilauryl 3,3'-thiodipropionate, tridecyl 3,3'-thiodipropionate, dimyristyl 3,3'-thiodipropionate, distearyl 3,3'-thiodipropionate, lauryl stearyl 3,3'-thiodipropionate, neopentanetetrakis(3-lauryl thiopropionate) and the like.

Examples of the phosphorus antioxidant include trilauryl phosphite, trioctadecyl phosphite, tristearylsorbitol triphosphite, 2,2'-ethylidenebis(4,6-di-t-butylphenyl) fluorophosphite, bis(2,4-di-t-butyl-6-methylphenyl)ethyl phosphite, bis(2,4-di-t-butyl-6-methylphenyl)methyl phosphite, 2-(2,4,6-tri-t-butylphenyl)-5-ethyl-5-butyl-1,3,2-oxaphosphorinan and the like.

Examples of the hydroquinone antioxidant include 2,6-dit-butyl-4-methoxyphenol, 2,5-di-t-butylhydroquinone, 2,5-di-t-pentylhydroquinone, 2,6-diphenyl-4-octadecyloxyphenol, 2,6-dit-butylhydroquinone, 2,5-di-t-butyl-4-hydroxyanisole, 3,5-dit-butyl-4-hydroxyphenyl stearate, bis(3,5-di-t-butyl-4-hydroxyphenyl) adipate and the like.

Examples of the UV absorber include those described in the following [1] - [3] and the like.

[1] salicylate derivative such as phenyl salicylate, 4-t-butylphenyl salicylate, 2,4-di-t-butylphenyl 3',5'-di-t-butyl-4'-hydroxybenzoate, 4-t-octylphenyl salicylate, bis(4-t-butylbenzoyl)resorcinol, benzoylresorcinol, hexadecyl 3',5'-di-t-butyl-4'-hydroxybenzoate, octadecyl 3',5'-di-t-butyl-4'-hydroxybenzoate, 2-methyl-4,6-di-t-butylphenyl 3',5'-di-t-butyl-4'-hydroxybenzoate and the like.

[2] 2-hydroxybenzophenone derivative such as 2,4-dihydroxybenzophenone, 2-hydroxy-4-methoxybenzophenone, 2-hydroxy-4-octoxybenzophenone, 2,2'-dihydroxy-4-methoxybenzophenone, bis(5-benzoyl-4-hydroxy-2-methoxyphenyl)methane, 2,2',4,4'-tetrahydroxybenzophenone and the like.

[3] 2-(2'-hydroxyphenyl)benzotriazoles such as 2-(2-hydroxy-5-methylphenyl)benzotriazole, 2-(3',5'-di-t-butyl-2'-hydroxyphenyl)benzotriazole, 2-(5'-t-butyl-2'-hydroxyphenyl)benzotriazole, 2-(2'-hydroxy-5'-t-octylphenyl)benzotriazole, 2-(3-t-butyl-2-hydroxy-5-methylphenyl)-5-chlorobenzotriazole, 2-(3'-sec-butyl-2'-hydroxy-5'-t-butylphenyl)benzotriazole, 2-(2'-hydroxy-4'-octyloxyphenyl)benzotriazole, 2-(3',5'-di-t-pentyl-2'-hydroxyphenyl)benzotriazole, 2-[2'-hydroxy-3',5'-bis(α,α-dimethylbenzyl)phenyl]-2H-benzotriazole, 2-[(3'-t-butyl-2'-hydroxyphenyl)-5'-(2-octyloxycarbonylethyl) phenyl]-5-chlorobenzotriazole, 2-[3'-t-butyl-5'-[2-(2-ethylhexyloxy)carbonylethyl]-2'-hydroxyphenyl]-5-chlorobenzotriazole, 2-[3'-t-butyl-2'-hydroxy-5'-(2-methoxycarbonylethyl)phenyl]-5-chlorobenzotriazole, 2-[3'-t-butyl-2'-hydroxy-5'-(2-methoxycarbonylethyl)phenyl]benzotriazole, 2-[3'-t-butyl-2'-hydroxy-5-(2-octyloxycarbonylethyl)phenyl]benzotriazole, 2-[3'-t-butyl-2'-hydroxy-5'-[2-(2-ethylhexyloxy)carbonylethyl]phenyl]benzotriazole, 2-[2-hydroxy-3-(3,4,5,6-tetrahydrophthalimidomethyl)-5-methylphenyl]benzotriazole, 2-(3,5-di-t-butyl-2-hydroxyphenyl)-5-chlorobenzotriazole, mixture of 2-(3'-dodecyl-2'-hydroxy-5'-methylphenyl)benzotriazole and 2-[3'-t-butyl-2'-hydroxy-5'-(2-isooctyloxycarbonylethyl)phenyl]benzotriazole, 2,2'-methylenebis[6-(2H-benzotriazol-2-yl)-4-(1,1,3,3-tetramethylbutyl)phenol], 2,2'-methylenebis[4-t-butyl-6-(2H-benzotriazol-2-yl)phenol], condensate of poly(3 - 11)(ethylene glycol) and 2-[3'-t-butyl-2'-hydroxy-5'-(2-methoxycarbonylethyl)phenyl]benzotriazole, condensate of poly(3-11)(ethylene glycol) and methyl 3-[3-(2H-benzotriazol-2-yl)-5-t-butyl-4-hydroxyphenyl]propionate, 2-ethylhexyl 3-[3-t-butyl-5-(5-chloro-2H-benzotriazol-2-yl)-4-hydroxyphenyl]propionate, octyl 3-[3-t-butyl-5-(5-chloro-2H-benzotriazol-2-yl)-4-hydroxyphenyl]propionate, methyl 3-[3-t-butyl-5-(5-chloro-2H-benzotriazol-2-yl)-4-hydroxyphenyl]propionate, 3-[3-t-butyl-5-(5-chloro-2H-benzotriazol-2-yl)-4-hydroxyphenyl]propionic acid and the like.

Examples of the light stabilizer include those described in the following [1] - [5] and the like.

[1] hindered amine light stabilizer, for example, those described in the following [a] - [c]. [a] bis(2,2,6,6-tetramethyl-4-piperidyl) sebacate, bis(2,2,6,6-tetramethyl-4-piperidyl) succinate, bis(1,2,2,6,6-pentamethyl-4-piperidyl) sebacate, bis (N-octoxy-2,2,6,6-tetramethyl-4-piperidyl) sebacate, bis(N-benzyloxy-2,2,6,6-tetramethyl-4-piperidyl) sebacate, bis(N-cyclohexyloxy-2,2,6,6-tetramethyl-4-piperidyl) sebacate, bis(1,2,2,6,6-pentamethyl-4-piperidyl) 2-(3,5-di-t-butyl-4-hydroxybenzyl)-2-butylmalonate, bis(1-acryloyl-2,2,6,6-tetramethyl-4-piperidyl) 2,2-bis(3,5-di-t-butyl-4-hydroxybenzyl) malonate, bis(1,2,2,6,6-pentamethyl-4-piperidyl) decanedioate, 2,2,6,6-tetramethyl-4-piperidyl methacrylate, 4-[3-(3,5-di-t-butyl-4-hydroxyphenyl)propionyloxy]-1-[2-(3-(3,5-di-t-butyl-4-hydroxyphenyl)propionyloxy)ethyl]-2,2,6,6-tetramethylpiperidine, 2-methyl-2-(2,2,6,6-tetramethyl-4-piperidyl)amino-N-(2,2,6,6-tetramethyl-4-piperidyl)propionamide, tetrakis(2,2,6,6-tetramethyl-4-piperidyl) 1,2,3,4-butanetetracarboxylate, tetrakis(1,2,2,6,6-pentamethyl-4-piperidyl) 1,2,3, 4-butanetetracarboxylate.

[b] mixed ester of 1,2,3,4-butanetetracarboxylic acid and 1,2,2,6,6-pentamethyl-4-piperidinol and 1-tridecanol, mixed ester of 1,2,3,4-butanetetracarboxylic acid and 2,2,6,6-tetramethyl-4-piperidinol and 1-tridecanol, mixed ester of 1,2,3,4-butanetetracarboxylic acid and 1,2,2,6,6-pentamethyl-4-piperidinol and 3,9-bis(2-hydroxy-1,1-dimethylethyl)-2,4,8,10-tetraoxaspiro[5.5]undecane, mixed ester of 1,2,3,4-butanetetracarboxylic acid and 2,2,6,6-tetramethyl-4-piperidinol and 3,9-bis(2-hydroxy-1,1-dimethylethyl)-2,4,8,10-tetraoxaspiro[5.5]undecane.

[c] polycondensate of dimethyl succinate and 1-(2-hydroxyethyl)-4-hydroxy-2,2,6,6-tetramethylpiperidine, poly[(6-morpholino-1,3,5-triazine-2,4-diyl)((2,2,6,6-tetramethyl-4-piperidyl)imino)hexamethylene((2,2,6,6-tetramethyl-4-piperidyl)imino)], poly[(6-(1,1,3,3-tetramethylbutyl)imino-1,3,5-triazine-2,4-diyl)((2,2,6,6-tetramethyl-4-piperidyl)imino) hexamethylene((2,2,6,6-tetramethyl-4-piperidyl)imino)], polycondensate of N,N'-bis(2,2,6,6-tetramethyl-4-piperidyl) hexamethylenediamine and 1,2-dibromoethane, N,N',4,7-tetrakis[4,6-bis(N-butyl-N-(2,2,6,6-tetramethyl-4-piperidyl) amino)-1,3,5-triazin-2-yl]-4,7-diazadecane-1,10-diamine, N,N',4-tris[4,6-bis(N-butyl-N-(2,2,6,6-tetramethyl-4-piperidyl) amino)-1,3,5-triazin-2-yl]-4,7-diazadecane-1,10-diamine, N,N',4,7-tetrakis[4,6-bis(N-butyl-N-(1,2,2,6,6-pentamethyl-4-piperidyl)amino)-1,3,5-triazin-2-yl]-4,7-diazadecane-1,10-diamine, N,N',4-tris[4,6-bis(N-butyl-N-(1,2,2,6,6-pentamethyl-4-piperidyl)amino)-1,3,5-triazin-2-yl]-4,7-diazadecane-1,10-diamine.

[2] acrylate light stabilizer such as ethyl α-cyano-β,β-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxycinnamate, methyl α-carbomethoxy-p-methoxycinnamate, N-(β-carbomethoxy-β-cyanovinyl)-2-methylindoline and the like.

[3] nickel light stabilizer such as nickel complex of 2,2'-thiobis-[4-(1,1,3,3-tetramethylbutyl)phenol], nickel dibutyldithiocarbamate, nickel salt of monoalkylester, nickel complex of ketoxime and the like.

[4] oxamide light stabilizer such as 4,4'-dioctyloxyoxanilide, 2,2'-diethoxyoxanilide, 2,2'-dioctyloxy-5,5'-di-t-butylanilide, 2,2'-didodecyloxy-5,5'-di-t-butylanilide, 2-ethoxy-2'-ethyloxanilide, N,N'-bis(3-dimethylaminopropyl)oxamide, 2-ethoxy-5-t-butyl-2'-ethoxyanilide, 2-ethoxy-5,4'-di-t-butyl-2'-ethyloxanilide and the like.

[5] 2-(2-hydroxyphenyl)-1,3,5-triazine light stabilizer such as 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethylphenyl)-1,3,5-triazine, 2-[2-hydroxy-4-(2-hydroxy-3-octyloxypropoxy)phenyl]-4,6-bis(2,4-dimethylphenyl)-1,3,5-triazine and the like.

Examples of the stabilizer include hydroxyamines such as N,N-dibenzylhydroxyamine, N,N-diethylhydroxyamine, N,N-dioctylhydroxyamine, N,N-dilauryl hydroxyamine, N,N-ditetradecylhydroxyamine, N,N-dihexadecylhydroxyamine, N,N-dioctadecylhydroxyamine, N-hexadecyl-N-octadecylhydroxyamine, N-heptadecyl-N-octadecylhydroxyamine and the like, and the like.

Examples of the lubricant include aliphatic hydrocarbon such as paraffin, wax and the like, $C_{8-22}$ higher fatty acid, metal (Al, Ca, Mg, Zn) salt of $C_{8-22}$ higher fatty acid, $C_{8-22}$ aliphatic alcohol, polyglycol, ester of $C_{4-22}$ fatty acid and $C_{4-18}$ aliphatic monovalent alcohol, $C_{8-22}$ higher aliphatic amide, silicone oil, rosin derivative and the like.

Of the aforementioned other additives, phenol antioxidant, phosphorus antioxidant, sulfur antioxidant, UV absorber and hindered amine light stabilizer are preferable, and phenol antioxidant is more preferable.

Examples of particularly preferable phenol antioxidant include those described below: 2,6-di-t-butyl-4-methylphenol, 2,4,6-tri-t-butylphenol, 2,4-bis(octylthiomethyl)-6-t-butylphenol, 2,2'-thiobis(6-t-butylphenol), 2,2'-methylenebis (4-methyl-6-t-butylphenol), 2,2'-methylenebis(4-ethyl-6-t-butylphenol), 2,2'-methylenebis[4-methyl-6-(α-methylcyclohexyl)phenol], 2,2'-methylenebis(4-methyl-6-cyclohexylphenol), 2,2'-methylenebis(4,6-di-t-butylphenol), 2,2'-ethylidenebis(4,6-di-t-butylphenol), 4,4'-methylenebis(6-t-butyl-2-methylphenol), 4,4'-methylenebis(2,6-di-t-butylphenol), 4,4'-butylidenebis(3-methyl-6-t-butylphenol), 1,1-bis(4-hydroxyphenyl)cyclohexane, 1,1-bis(5-t-butyl-4-hydroxy-2-methylphenyl)butane, 1,1,3-tris(5-t-butyl-4-hydroxy-2-methylphenyl)butane, ethylene glycol bis[3,3-bis(3'-t-butyl-4'-hydroxyphenyl)butyrate], 2,4,6-tris(3,5-di-t-butyl-4-phenoxy)-1,3,5-triazine, tris(4-t-butyl-3-hydroxy-2,6-dimethylbenzyl)isocyanurate, bis(3,5-di-t-butyl-4-hydroxybenzyl)isocyanurate, tris[2-(3',5'-di-t-butyl-4'-hydroxycinnamoyloxy)ethyl]isocyanurate, diethyl 3,5-di-t-butyl-4-hydroxybenzylphosphonate, di-n-octadecyl 3,5-di-t-butyl-4-hydroxybenzylphosphonate, calcium salt of 3,5-di-t-butyl-4-hydroxybenzylphosphonic acid monoester, neopentanetetrayl tetrakis(3,5-di-t-butyl-4-hydroxycinnamate), thiodiethylene bis(3,5-di-t-butyl-4-hydroxycinnamate), 1,3,5-trimethyl-2,4,6-tris(3,5-di-t-butyl-4-hydroxybenzyl)benzene, 3,6-dioxaoctamethylene bis(3,5-di-t-butyl-4-hydroxycinnamate), hexamethylene bis(3,5-di-t-butyl-4-hydroxycinnamate), triethylene glycol bis(5-t-butyl-4-hydroxy-3-methylcinnamate), 3,9-bis[2-(3-(3-t-butyl-4-hydroxy-5-methylphenyl)propionyloxy)-1,1-dimethylethyl]-2,4,8,10-tetraoxaspiro[5.5]undecane, N,N'-bis[3-(3',5'-di-t-butyl-4'-hydroxyphenyl)propionyl]hydrazine, N,N'-bis[3-(3',5'-di-t-butyl-4'-hydroxyphenyl)propionyl]hexamethylenediamine.

Examples of particularly preferable phosphorus antioxidant include those described below: 2,2'-ethylidenebis (4,6-di-t-butylphenyl) fluorophosphite, bis(2,4-di-t-butyl-6-methylphenyl) ethyl phosphite, 2-(2,4,6-tri-t-butylphenyl)-5-ethyl-5-butyl-1,3,2-oxaphosphorinan.

Examples of particularly preferable UV absorber include those described below: phenyl salicylate, 4-t-butylphenyl salicylate, 2,4-di-t-butylphenyl 3',5'-di-t-butyl-4'-hydroxybenzoate, 4-t-octylphenyl salicylate, 2,4-dihydroxybenzophenone, 2-hydroxy-4-methoxybenzophenone, 2-hydroxy-4-octoxybenzophenone, 2,2'-dihydroxy-4-methoxybenzophenone, bis(5-benzoyl-4-hydroxy-2-methoxyphenyl)methane, 2,2',4,4'-tetrahydroxybenzophenone, 2-(2-hydroxy-5-methylphenyl)benzotriazole, 2-(3',5'-di-t-butyl-2'-hydroxyphenyl)benzotriazole, 2-(5'-t-butyl-2'-hydroxyphenyl)benzotriazole, 2-(2'-hydroxy-5'-t-octylphenyl)benzotriazole, 2-(3-t-butyl-2-hydroxy-5-methylphenyl)-5-chlorobenzotriazole, 2-(3'-sec-butyl-2'-hydroxy-5'-t-butylphenyl)benzotriazole, 2-(2'-hydroxy-4'-octyloxyphenyl)benzotriazole, 2-(3',5'-di-t-pentyl-2'-hydroxyphenyl)benzotriazole, 2-[2'-hydroxy-3',5'-bis($\alpha$,$\alpha$-dimethylbenzyl)phenyl]-2H-benzotriazole.

Examples of particularly preferable hindered amine light stabilizer include those described below: bis(2,2,6,6-tetramethyl-4-piperidyl) sebacate, bis(1,2,2,6,6-pentamethyl-4-piperidyl) sebacate, bis(N-octoxy-2,2,6,6-tetramethyl-4-piperidyl) sebacate, bis(N-benzyloxy-2,2,6,6-tetramethyl-4-piperidyl) sebacate, bis(N-cyclohexyloxy-2,2,6,6-tetramethyl-4-piperidyl) sebacate, bis(1,2,2,6,6-pentamethyl-4-piperidyl) 2-(3,5-di-t-butyl-4-hydroxybenzyl)-2-butylmalonate, bis (1-acryloyl-2,2,6,6-tetramethyl-4-piperidyl) 2,2-bis(3,5-di-t-butyl-4-hydroxybenzyl)-2-butylmalonate, bis(2,2,6,6-tetramethyl-4-piperidyl) succinate, 2,2,6,6-tetramethyl-4-piperidyl methacrylate, 4-[3-(3,5-di-t-butyl-4-hydroxyphenyl)propionyloxy]-1-[2-(3-(3,5-di-t-butyl-4-hydroxyphenyl)propionyloxy)ethyl]-2,2,6,6-tetramethylpiperidine, 2-methyl-2-(2,2,6,6-tetramethyl-4-piperidyl)amino-N-(2,2,6,6-tetramethyl-4-piperidyl)propionamide, tetrakis(2,2,6,6-tetramethyl-4-piperidyl) 1,2,3,4-butanetetracarboxylate, tetrakis(1,2,6,6-pentamethyl-4-piperidyl) 1,2,3,4-butanetetracarboxylate, mixed ester of 1,2,3,4-butanetetracarboxylic acid and 1,2,2,6,6-pentamethyl-4-piperidinol and 1-tridecanol, mixed ester of 1,2,3,4-butanetetracarboxylic acid and 2,2,6,6-tetramethyl-4-piperidinol and 1-tridecanol, mixed ester of 1,2,3,4-butanetetracarboxylic acid and 1,2,2,6,6-pentamethyl-4-piperidinol and 3,9-bis(2-hydroxy-1,1-dimethylethyl)-2,4,8,10-tetraoxaspiro [5.5]undecane, mixed ester of 1,2,3,4-butanetetracarboxylic acid and 2,2,6,6-tetramethyl-4-piperidinol and 3,9-bis(2-hydroxy-1,1-dimethylethyl)-2,4,8,10-tetraoxaspiro[5.5]undecane, polycondensate of dimethyl succinate and 1-(2-hydroxyethyl)-4-hydroxy-2,2,6,6-tetramethylpiperidine, poly[(6-morpholino-1,3,5-triazine-2,4-diyl)((2,2,6,6-tetramethyl-4-piperidyl)imino)hexamethylene((2,2,6,6-tetramethyl-4-piperidyl)imino)], poly[(6-(1,1,3,3-tetramethylbutyl)imino-1,3,5-triazine-2,4-diyl)((2,2,6,6-tetramethyl-4-piperidyl)imino)hexamethylene((2,2,6,6-tetramethyl-4-piperidyl)imino)].

Examples of the production method of the processing stabilizer of the present invention include a method including mixing the essential components and optional components used as necessary (i.e., compounds (1) - (8), glucose and other additives) of the first - fourth processing stabilizers in a blending machine such as Henschel mixer, super mixer, high speed mixer and the like and the like. The thus-obtained mixture (processing stabilizer) may be further subjected to extrusion molding or agitation granulation.

Next, the thermoplastic polymer composition of the present invention is explained. The thermoplastic polymer composition of the present invention contains respective essential components of the first - fourth processing stabilizers (i.e., compound (1), compound (2), at least one selected from the group consisting of compounds represented by the formulas (3) - (7) or compound (8), and glucose) and a thermoplastic polymer. The thermoplastic polymer composition of the present invention may contain each optional component of the first - fourth processing stabilizers (i.e., compound (1) - compound (8), which are not essential components, and the aforementioned other additives). Only one kind of thermoplastic polymers may be used or two or more kinds thereof may be used in combination.

Examples of the thermoplastic polymer include polyethylene resin (high density polyethylene (HDPE), low density polyethylene (LDPE), linear low density polyethylene (LLDPE), ethylene-vinyl alcohol copolymer (EVOH), ethylene-ethyl acrylate copolymer (EEA), ethylene-vinyl acetate copolymer (EVA) and the like), polypropylene resin (crystalline propylene homopolymer, propylene-ethylene random copolymer, propylene-$\alpha$-olefin random copolymer, propylene-ethylene-$\alpha$-olefin copolymer, polypropylene block copolymer comprised of a block of propylene homopolymer or copolymer containing propylene as a main component and a block of copolymer of propylene and ethylene and/or other $\alpha$-olefin, and the like), methylpentene polymer, polystyrene resin (polystyrenes such as polystyrene (PS), poly(p-methylstyrene), poly($\alpha$-methylstyrene) and the like, acrylonitrile-styrene copolymer (SAN), acrylonitrile-butadiene-styrene

copolymer (ABS), special acrylic rubber-acrylonitrile-styrene copolymer, acrylonitrile-chlorinated polyethylene-styrene copolymer (ACS) and the like), polybutadiene resin (polybutadiene; polybutadiene rubber (BR); styrene-butadiene copolymer (SB); styrene-butadiene block copolymer (SBS); impact resistance polystyrene (HI-PS) modified by polybutadiene, styrene-butadiene copolymer or SBS and the like), chlorinated polyethylene (CPE), polychloroprene, chlorinated rubber, poly(vinyl chloride) thermoplastic elastomer, poly(vinyl chloride) (PVC), poly(vinylidene chloride) (PVDC), methacrylate resin, fluororesin, polyacetal (POM), grafted poly(phenylene ether) resin, poly(phenylene sulfide) resin (PPS), polyurethane (PU), polyamide (PA), polyester resin (e.g., poly(ethylene terephthalate) (PET), poly(butylene terephthalate) (PBT) and the like), poly(lactic acid) (PLA), polycarbonate (PC), polyacrylate, polysulfone (PPSU), poly(ether ether ketone) (PEEK), poly(ether sulfone) (PES), aromatic polyester, diallyl phthalate prepolymer, silicone resin (SI), 1,2-polybutadiene, polyisoprene, butadiene-acrylonitrile copolymer (NBR), ethylene-methyl methacrylate copolymer (EMMA) and the like.

Of these, due to good molding processability, polyethylene resin, polypropylene resin, polystyrene resin and polybutadiene resin are preferable, polyethylene resin and polybutadiene resin are more preferable. In the first - third thermoplastic polymer compositions, ethylene-vinyl alcohol copolymer (EVOH) and styrene-butadiene block copolymer (SBS) are more preferable, and in the fourth thermoplastic polymer composition, a styrene-butadiene block copolymer (SBS) is still more preferable.

While the weight average molecular weight (Mw) of the thermoplastic polymer to be used is not particularly limited, it is generally not less than 1000 and not more than 300,000. Mw can be measured by, for example, gel permeation chromatography (GPC) using polystyrene as a standard.

The content of the first processing stabilizer in the first thermoplastic polymer composition is determined by the total amount of compound (1) and glucose. The total amount of compound (1) and glucose in the first thermoplastic polymer composition is preferably not less than 0.001 part by weight (more preferably not less than 0.02 parts by weight, still more preferably not less than 0.1 part by weight, particularly preferably not less than 0.5 parts by weight), preferably not more than 3 parts by weight (more preferably not more than 2 parts by weight, still more preferably not more than 1 part by weight), relative to 100 parts by weight of the thermoplastic polymer.

When the first processing stabilizer containing at least one of compound (2) - compound (7) is used, the content of each of compound (2) - compound (7) in the first thermoplastic polymer composition is preferably not less than 0.001 part by weight (more preferably not less than 0.02 parts by weight), preferably not more than 3 parts by weight (more preferably not more than 2 parts by weight), relative to 100 parts by weight of the thermoplastic polymer.

The content of the second processing stabilizer in the second thermoplastic polymer composition is determined by the total amount of compound (8) and glucose. The total amount of compound (8) and glucose in the second thermoplastic polymer composition is preferably not less than 0.001 part by weight (more preferably not less than 0.02 parts by weight, still more preferably not less than 0.1 part by weight, particularly preferably not less than 0.5 parts by weight), preferably not more than 3 parts by weight (more preferably not more than 2 parts by weight, more preferably not more than 1 part by weight), relative to 100 parts by weight of the thermoplastic polymer.

When the second processing stabilizer containing at least one of compound (2) - compound (7) is used, the content of each of compound (2) - compound (7) in the second thermoplastic polymer composition is preferably not less than 0.001 part by weight (more preferably not less than 0.02 parts by weight), preferably not more than 3 parts by weight (more preferably not more than 2 parts by weight), relative to 100 parts by weight of the thermoplastic polymer.

The content of the third processing stabilizer in the third thermoplastic polymer composition is determined by the total amount of compound (2) and glucose. The total amount of compound (2) and glucose in the third thermoplastic polymer composition is preferably not less than 0.001 part by weight (more preferably not less than 0.02 parts by weight, still more preferably not less than 0.1 part by weight, particularly preferably not less than 0.5 parts by weight), preferably not more than 3 parts by weight (more preferably not more than 2 parts by weight, still more preferably not more than 1 part by weight), relative to 100 parts by weight of the thermoplastic polymer.

When the third processing stabilizer containing at least one of compound (1), compound (3) - compound (8) is used, the content of each of compound (1), compound (3) - compound (8) in the third thermoplastic polymer composition is preferably not less than 0.001 part by weight (more preferably not less than 0.02 parts by weight), preferably not more than 3 parts by weight (more preferably not more than 2 parts by weight), relative to 100 parts by weight of the thermoplastic polymer.

The content of the fourth processing stabilizer in the fourth thermoplastic polymer composition is determined by the total amount of glucose and the compound selected from the group consisting of compound (3) - compound (7). The total amount of glucose and the compound selected from the group consisting of compound (3) - compound (7) in the fourth thermoplastic polymer composition is preferably 0.001 - 3 parts by weight, more preferably 0.02 - 2 parts by weight, still more preferably 0.02 - 1 part by weight, relative to 100 parts by weight of the thermoplastic polymer. The preferable range of weight ratio of the compound selected from the group consisting of compound (3) - compound (7) and glucose (i.e., compound selected from the group consisting of compound (3) - compound (7):glucose) in the fourth thermoplastic polymer composition is the same as the preferable range of weight ratio in the aforementioned fourth

processing stabilizer.

When the fourth processing stabilizer containing at least one of compound (1), compound (2) and compound (8) is used, the content of each of compound (1), compound (2) and compound (8) in the fourth thermoplastic polymer composition is preferably 0.001 - 3 parts by weight, more preferably 0.02 - 2 parts by weight, relative to 100 parts by weight of the thermoplastic polymer.

Examples of the production method of the thermoplastic polymer composition of the present invention include a method including mixing the processing stabilizer of the present invention produced as mentioned above and a thermoplastic polymer and the like. This production method also includes, for example, a method including separately adding, when kneading a thermoplastic polymer, each component that can be contained in the processing stabilizer of the present invention, i.e., compounds (1) - (8), glucose and other additives, to a thermoplastic polymer, and mixing them (i.e., the processing stabilizer of the present invention and thermoplastic polymer).

Examples of the mixing method of a processing stabilizer and a thermoplastic polymer include (a) a method including dry-blending a processing stabilizer and a thermoplastic polymer, melt-kneading them and extruding the mixture in a single screw or multiscrew extruder to give pellets of a thermoplastic polymer composition; (b) a method including dissolving a processing stabilizer in a solvent such as cyclohexane and the like to give a solution of the processing stabilizer, adding the solution to a polymer solution after completion of thermoplastic polymer polymerization, and desolvating the mixture; and the like.

The obtained thermoplastic polymer composition may be supplied in a molten state without cooling to a molding machine for molding. The molding method is not particularly limited and, for example, molding method such as injection molding method, extrusion molding method, extrusion blow molding method, injection blow molding method, biaxial orientation blow molding method and the like can be used.

By cooling after molding, a thermoplastic polymer molded product comprised of the thermoplastic polymer composition of the present invention is obtained. Examples of the use of the obtained thermoplastic polymer molding product include electronic component (e.g., coil bobbin, connector, switch, resistor component, socket, relay, condenser case, fuse, motor, oven, printed circuit board, IC manufacturing equipment, lamp and the like), automobile part (e.g., air outlet garnish, hood vent, distributor cap, exhaust gas control valve and the like), clock component (e.g., machine component such as gear, cam and the like, ground plane and the like), camera component (e.g., bottom cover, barrel, lever and the like), component of leisure goods (e.g., reel and the like), household electrical appliance housing, illumination wiring equipment, film, bottle, fiber, septic tank, toilet tank, bath tub, unit bath, water tank, boats and ships, chemicals tank, pipe, corrugated plate, flat plate, paint, decorative laminate, mounting agent for electronic component, resin concrete and the like.

**Examples**

The present invention is explained in more detail in the following by referring to Examples and the like. In the following, "part" and "%" is, unless particularly explained, on the weight basis. In addition, the "melt flow rate" is described as "MFR".

[1] Components

The components used in the following Examples and the like are as follows.

compound (1-1): 2,4-di-t-pentyl-6-[1-(3,5-di-t-pentyl-2-hydroxyphenyl)ethyl]phenyl acrylate ("Sumilizer (registered trade mark) GS(F)" manufactured by Sumitomo Chemical Company, Limited)
compound (1-2): 2-t-butyl-6-(3-t-butyl-2-hydroxy-5-methylbenzyl)-4-methylphenyl acrylate ("Sumilizer (registered trade mark) GM" manufactured by Sumitomo Chemical Company, Limited)
compound (2-1): octadecyl 3-(3,5-di-t-butyl-4-hydroxyphenyl)propionate ("Irganox (registered trade mark) 1076" manufactured by BASF)
compound (2-2): 3,9-bis[2-{3-(3-t-butyl-4-hydroxy-5-methylphenyl)propionyloxy}-1,1-dimethylethyl]-2,4,8,10-tetraoxaspiro[5.5]undecane ("Sumilizer (registered trade mark) GA-80" manufactured by Sumitomo Chemical Company, Limited)
compound (2-3): pentaerythritol tetrakis[3-(3,5-di-t-butyl-4-hydroxyphenyl)propionate] ("Irganox (registered trade mark) 1010" manufactured by BASF)
compound (3-1): tris(2,4-di-t-butylphenyl) phosphite ("Irgafos (registered trade mark) 168" manufactured by BASF)
compound (4-1):tetrakis(2,4-di-t-butylphenyl)-4,4-biphenylene diphoshonite ("Sandostab (registered trade mark) P-EPQ" manufactured by Clariant)
compound (5-1): bis(2,6-di-t-butyl-4-methylphenyl)pentaerythritol diphosphite ("Adekastab (registered trade mark) PEP-36" manufactured by ADEKA)

compound (5-2): bis(2,4-di-t-butylphenyl)pentaerythritol diphosphite ("Ultranox (registered trade mark) 626" manufactured by GE Plastics)
compound (5-3): bis(2,4-dicumylphenyl)pentaerythritol diphosphite ("Doverphos S9228T" manufactured by Dover Chemical Corporation)
compound (6-1): 6,6',6"-[nitrilotris(ethyleneoxy)]tris(2,4,8,10-tetra-t-butyldibenzo[d,f][1,3,2]dioxaphosphepine) ("Irgafos (registered trade mark) 12" manufactured by BASF)
compound (7-1): 2,2-methylenebis(4,6-di-t-butylphenyl) octyl phosphite ("Adekastab (registered trade mark) HP-10" manufactured by ADEKA)
compound (8-1): 6-[3-(3-t-butyl-4-hydroxy-5-methylphenyl)propoxy]-2,4,8,10-tetra-t-butyldibenzo[d,f][1,3,2]dioxaphosphepine ("Sumilizer (registered trade mark) GP" manufactured by Sumitomo Chemical Company, Limited)

D-glucose (manufactured by Wako Pure Chemical Industries, Ltd.)

In the following Example 1-1 - Example 1-181, the first processing stabilizer containing compound (1) and D-glucose as essential components is used, in Example 2-1 - Example 2-173, the second processing stabilizer containing compound (8) and D-glucose as essential components is used, in Example 3-1 - Example 3-130, the third processing stabilizer containing compound (2) and D-glucose as essential components is used, and in Example 4-1 - Example 4-196, the fourth processing stabilizer containing D-glucose and at least one selected from the group consisting of compounds (3) - (7) as essential components is used.

[2] Evaluation of processing stability of thermoplastic polymer composition

The processing stability of the thermoplastic polymer compositions obtained in the following Examples and the like was evaluated by the method of the following (1) or (2).

(1) MFR variation rate

Dwell MFR tests were performed using the pellets of the thermoplastic polymer compositions. The test was based on JIS K 7210, and 0 min Dwell MFR (g/10 min) and 30 min Dwell MFR (g/10 min) were measured by a melt indexer (L217-E14011 manufactured by Technol Seven Co., Ltd.) under the conditions of temperature in a cylinder 270° C and load 2.16 kg. The 0 min Dwell MFR was measured after 5-min preheating time after filling pellets of the thermoplastic polymer composition in the cylinder. The MFR variation rate was calculated by the following formula and using the thus-measured 0 min Dwell MFR and 30 min Dwell MFR:

MFR variation rate (%)=
absolute value of (30 min Dwell MFR−0 min Dwell MFR) x 100/(0 min Dwell MFR)

A smaller MFR variation rate means better processing stability of the thermoplastic polymer composition.

(2) Inhibition rate of MFR increment

Dwell MFR tests were performed using the pellets of the thermoplastic polymer compositions. The test was based on JIS K 7210, 0 min Dwell MFR (g/10 min) and 30 min Dwell MFR (g/10 min) were measured by a melt indexer (L217-E14011 manufactured by Technol Seven Co., Ltd.) under the conditions of temperature in a cylinder 270°C and load 2.16 kg. The 0 min Dwell MFR was measured after 5-min preheating time after filling pellets of the thermoplastic polymer composition in the cylinder. The 30 min Dwell MFR was measured after 30 min dwell time, including the preheating time, of the pellets of the thermoplastic polymer composition in the cylinder. The inhibition rate of MFR increment was calculated by the following formula and using the 30 min Dwell MFR obtained in the Example and the 30 min Dwell MFR of Comparative Example:

inhibition rate of MFR increment (%)=
(30 min Dwell MFR of Comparative Example - 30 min Dwell MFR of Example) x 100/(30 min Dwell MFR of Comparative Example)

When polypropylene is used as a thermoplastic polymer, decomposition of polypropylene is accelerated by the heat of processing, and 30 min Dwell MFR increases. Therefore, in a thermoplastic polymer composition containing polypropylene, the processing stability of a thermoplastic polymer composition becomes higher as 30 min Dwell MFR is smaller and the inhibition rate of MFR increment is larger.

Example 1-1: Production of processing stabilizer

Compound (1-1) and D-glucose in the amounts described in Table 1 were mixed to produce a processing stabilizer.

Example 1-2: Production of processing stabilizer

Compound (1-1), D-glucose and compound (2-1) in the amounts described in Table 1 were mixed to produce a processing stabilizer.

Example 1-3: Production of thermoplastic polymer composition

The processing stabilizer (0.31 part) obtained in Example 1-1 and a styrene-butadiene block copolymer ("Asaflex 830" manufactured by Asahi Kasei Corp.) (100 parts) were dry-blended, the obtained mixture was knead-extruded by a single screw extruder having a screw diameter of 30 mm ("VS30-28 type extruder" manufactured by TANABE PLASTICS MACHINERY CO., LTD.) under the conditions of temperature 230°C and screw rotation 50 rpm to give strands, and the strands were cut by a pelletizer to give a thermoplastic polymer composition as pellets. The results of the processing stability of the obtained thermoplastic polymer composition are shown in Table 2.

Example 1-4: Production of thermoplastic polymer composition

In the same manner as in Example 1-3 except that the stabilizer composition (0.51 part) obtained in Example 1-2 was used instead of the stabilizer composition obtained in Example 1-1, a thermoplastic polymer composition was obtained as pellets. The results of the processing stability of the obtained thermoplastic polymer composition are shown in Table 2.

Example 1-5 - Example 1-9: Production of processing stabilizer

Compound (1-1) and D-glucose in the amounts described in Table 1 were mixed to produce processing stabilizers.

Reference Example 1-1: Production of processing stabilizer

Compound (1-1) and compound (2-1) in the amounts described in Table 1 were mixed to produce a processing stabilizer.

Example 1-10 - Example 1-14: Production of thermoplastic polymer composition

In the same manner as in Example 1-3 except that the stabilizer compositions (0.2 part) obtained in Example 1-5 - Example 1-9 were used instead of the stabilizer composition obtained in Example 1-1, thermoplastic polymer compositions were obtained as pellets. The results of the processing stability of the obtained thermoplastic polymer composition are shown in Table 2.

Comparative Example 1-1: Production of thermoplastic polymer composition

In the same manner as in Example 1-3 except that compound (1-1) (0.3 part) alone was used instead of the processing stabilizer obtained in Example 1-1, a thermoplastic polymer composition was obtained as pellets. The results of the processing stability of the obtained thermoplastic polymer composition are shown in Table 2.

Reference Example 1-2: Production of thermoplastic polymer composition

In the same manner as in Example 1-3 except that the processing stabilizer (0.5 part) obtained in Reference Example 1-1 was used instead of the processing stabilizer obtained in Example 1-1, a thermoplastic polymer composition

was obtained as pellets. The results of the processing stability of the obtained thermoplastic polymer composition are shown in Table 2.

[Table 1]

Table 1: processing stabilizer

| | compound (1-1) (part) | D-glucose (part) | compound (2-1) (part) |
|---|---|---|---|
| Ex. 1-1 | 0.3 | 0.01 | - |
| Ex. 1-2 | 0.3 | 0.01 | 0.2 |
| Ex. 1-5 | 0.1998 | 0.0002 | - |
| Ex. 1-6 | 0.1996 | 0.0004 | - |
| Ex. 1-7 | 0.198 | 0.002 | - |
| Ex. 1-8 | 0.1818 | 0.0182 | - |
| Ex. 1-9 | 0.0667 | 0.1333 | - |
| Ref. Ex. 1-1 | 0.3 | - | 0.2 |

[Table 2]

Table 2: thermoplastic polymer composition

| | thermoplastic polymer | processing stabilizer | | 0 min Dwell MFR (g/10 min) | 30 min Dwell MFR (g/10 min) | MFR variation rate (%) |
|---|---|---|---|---|---|---|
| | SBS (part) | kind | amount (part) | | | |
| Ex. 1-3 | 100 | Ex. 1-1 | 0.31 | 19.2 | 7.8 | 59.4 |
| Ex. 1-4 | 100 | Ex. 1-2 | 0.51 | 19.7 | 9.0 | 54.3 |
| Ex. 1-10 | 100 | Ex. 1-5 | 0.2 | 15.5 | 8.8 | 43.2 |
| Ex. 1-11 | 100 | Ex. 1-6 | 0.2 | 16.3 | 8.2 | 49.7 |
| Ex. 1-12 | 100 | Ex. 1-7 | 0.2 | 16.5 | 9.3 | 43.6 |
| Ex. 1-13 | 100 | Ex. 1-8 | 0.2 | 18.8 | 12.4 | 34.0 |
| Ex. 1-14 | 100 | Ex. 1-9 | 0.2 | 17.7 | 9.7 | 45.2 |
| Comp.Ex. 1-1 | 100 | compound (1-1) | 0.3 | 18.2 | 2.1 | 88.5 |
| Ref. Ex. 1-2 | 100 | Ref. Ex. 1-1 | 0.5 | 19.2 | 5.6 | 70.8 |
| SBS: styrene-butadiene block copolymer | | | | | | |

From the results shown in Table 2, it is clear that a combined use of compound (1) and glucose improves the processing stability of thermoplastic polymer compositions as compared to a single use of compound (1). In addition, it is clear that the processing stability of thermoplastic polymer compositions is improved by using glucose in combination, even when compound (2) is used in addition to compound (1).

Example 1-15 - Example 1-101: Production of processing stabilizer

By mixing the components described in Table 3-1 - Table 3-3, processing stabilizers are obtained.

[Table 3-1]

Table 3-1: processing stabilizer

| Example | compound (1) | | D-glucose | compound (2) | | compounds (3) - (7) | |
|---|---|---|---|---|---|---|---|
| | kind | amount (part) | amount (part) | kind | amount (part) | kind | amount (part) |
| 1-15 | (1-1) | 0.01 | 0.2 | - | - | - | - |
| 1-16 | (1-1) | 0.05 | 0.15 | - | - | - | - |
| 1-17 | (1-1) | 0.1 | 0.1 | - | - | - | - |
| 1-18 | (1-1) | 0.15 | 0.05 | - | - | - | - |
| 1-19 | (1-1) | 0.2 | 0.01 | - | - | - | - |
| 1-20 | (1-1) | 0.2 | 0.005 | - | - | - | - |
| 1-21 | (1-1) | 0.2 | 0.001 | - | - | - | - |
| 1-22 | (1-1) | 0.2 | 0.0005 | - | - | - | - |
| 1-23 | (1-1) | 0.2 | 0.0002 | - | - | - | - |
| 1-24 | (1-1) | 0.01 | 0.2 | (2-2) | 0.2 | - | - |
| 1-25 | (1-1) | 0.1 | 0.1 | (2-2) | 0.2 | - | - |
| 1-26 | (1-1) | 0.2 | 0.01 | (2-2) | 0.2 | - | - |
| 1-27 | (1-1) | 0.2 | 0.005 | (2-2) | 0.2 | - | - |
| 1-28 | (1-1) | 0.2 | 0.001 | (2-2) | 0.2 | - | - |
| 1-29 | (1-1) | 0.2 | 0.0005 | (2-2) | 0.2 | - | - |
| 1-30 | (1-1) | 0.01 | 0.2 | (2-3) | 0.2 | - | - |
| 1-31 | (1-1) | 0.1 | 0.1 | (2-3) | 0.2 | - | - |
| 1-32 | (1-1) | 0.2 | 0.01 | (2-3) | 0.2 | - | - |
| 1-33 | (1-1) | 0.2 | 0.005 | (2-3) | 0.2 | - | - |
| 1-34 | (1-1) | 0.2 | 0.001 | (2-3) | 0.2 | - | - |
| 1-35 | (1-1) | 0.2 | 0.0005 | (2-3) | 0.2 | - | - |
| 1-36 | (1-1) | 0.01 | 0.2 | - | - | (4-1) | 0.2 |
| 1-37 | (1-1) | 0.1 | 0.1 | - | - | (4-1) | 0.2 |
| 1-38 | (1-1) | 0.2 | 0.01 | - | - | (4-1) | 0.2 |
| 1-39 | (1-1) | 0.2 | 0.005 | - | - | (4-1) | 0.2 |
| 1-40 | (1-1) | 0.2 | 0.001 | - | - | (4-1) | 0.2 |
| 1-41 | (1-1) | 0.2 | 0.0005 | - | - | (4-1) | 0.2 |
| 1-42 | (1-1) | 0.01 | 0.2 | - | - | (5-1) | 0.2 |
| 1-43 | (1-1) | 0.1 | 0.1 | - | - | (5-1) | 0.2 |

[Table 3-2]

Table 3-2: processing stabilizer

| Example | compound (1) | | D-glucose | compound (2) | | compounds (3) - (7) | |
|---|---|---|---|---|---|---|---|
| | kind | amount (part) | amount (part) | amount kind (part) | | kind | amount (part) |
| 1-44 | (1-1) | 0.2 | 0.01 | - | - | (5-1) | 0.2 |

(continued)

| Example | compound (1) | | D-glucose | compound (2) | | compounds (3) - (7) | |
|---|---|---|---|---|---|---|---|
| | kind | amount (part) | amount (part) | amount kind (part) | | kind | amount (part) |
| 1-45 | (1-1) | 0.2 | 0.005 | - | - | (5-1) | 0.2 |
| 1-46 | (1-1) | 0.2 | 0.001 | - | - | (5-1) | 0.2 |
| 1-47 | (1-1) | 0.2 | 0.0005 | - | - | (5-1) | 0.2 |
| 1-48 | (1-1) | 0.01 | 0.2 | - | - | (5-2) | 0.2 |
| 1-49 | (1-1) | 0.1 | 0.1 | - | - | (5-2) | 0.2 |
| 1-50 | (1-1) | 0.2 | 0.01 | - | - | (5-2) | 0.2 |
| 1-51 | (1-1) | 0.2 | 0.005 | - | - | (5-2) | 0.2 |
| 1-52 | (1-1) | 0.2 | 0.001 | - | - | (5-2) | 0.2 |
| 1-53 | (1-1) | 0.2 | 0.0005 | - | - | (5-2) | 0.2 |
| 1-54 | (1-1) | 0.01 | 0.2 | - | - | (5-3) | 0.2 |
| 1-55 | (1-1) | 0.1 | 0.1 | - | - | (5-3) | 0.2 |
| 1-56 | (1-1) | 0.2 | 0.01 | - | - | (5-3) | 0.2 |
| 1-57 | (1-1) | 0.2 | 0.005 | - | - | (5-3) | 0.2 |
| 1-58 | (1-1) | 0.2 | 0.001 | - | - | (5-3) | 0.2 |
| 1-59 | (1-1) | 0.2 | 0.0005 | - | - | (5-3) | 0.2 |
| 1-60 | (1-1) | 0.01 | 0.2 | - | - | (6-1) | 0.2 |
| 1-61 | (1-1) | 0.1 | 0.1 | - | - | (6-1) | 0.2 |
| 1-62 | (1-1) | 0.2 | 0.01 | - | - | (6-1) | 0.2 |
| 1-63 | (1-1) | 0.2 | 0.005 | - | - | (6-1) | 0.2 |
| 1-64 | (1-1) | 0.2 | 0.001 | - | - | (6-1) | 0.2 |
| 1-65 | (1-1) | 0.2 | 0.0005 | - | - | (6-1) | 0.2 |
| 1-66 | (1-1) | 0.01 | 0.2 | - | - | (7-1) | 0.2 |
| 1-67 | (1-1) | 0.1 | 0.1 | - | - | (7-1) | 0.2 |
| 1-68 | (1-1) | 0.2 | 0.01 | - | - | (7-1) | 0.2 |
| 1-69 | (1-1) | 0.2 | 0.005 | - | - | (7-1) | 0.2 |
| 1-70 | (1-1) | 0.2 | 0.001 | - | - | (7-1) | 0.2 |
| 1-71 | (1-1) | 0.2 | 0.0005 | - | - | (7-1) | 0.2 |
| 1-72 | (1-1) | 0.01 | 0.2 | (2-1) | 0.2 | (3-1) | 0.2 |

[Table 3-3]

Table 3-3: processing stabilizer

| Example | compound (1) | | D-glucose | compound (2) | | compounds (3) - (7) | |
|---|---|---|---|---|---|---|---|
| | kind | amount (part) | amount (part) | kind | amount (part) | kind | amount (part) |
| 1-73 | (1-1) | 0.1 | 0.1 | (2-1) | 0.2 | (3-1) | 0.2 |
| 1-74 | (1-1) | 0.2 | 0.01 | (2-1) | 0.2 | (3-1) | 0.2 |
| 1-75 | (1-1) | 0.2 | 0.005 | (2-1) | 0.2 | (3-1) | 0.2 |
| 1-76 | (1-1) | 0.2 | 0.001 | (2-1) | 0.2 | (3-1) | 0.2 |

(continued)

| Example | compound (1) | | D-glucose | compound (2) | | compounds (3) - (7) | |
|---|---|---|---|---|---|---|---|
| | kind | amount (part) | amount (part) | kind | amount (part) | kind | amount (part) |
| 1-77 | (1-1) | 0.2 | 0.0005 | (2-1) | 0.2 | (3-1) | 0.2 |
| 1-78 | (1-1) | 0.01 | 0.2 | (2-2) | 0.2 | (3-1) | 0.2 |
| 1-79 | (1-1) | 0.1 | 0.1 | (2-2) | 0.2 | (4-1) | 0.2 |
| 1-80 | (1-1) | 0.2 | 0.01 | (2-2) | 0.2 | (3-1) | 0.2 |
| 1-81 | (1-1) | 0.2 | 0.005 | (2-2) | 0.2 | (3-1) | 0.2 |
| 1-82 | (1-1) | 0.2 | 0.001 | (2-2) | 0.2 | (3-1) | 0.2 |
| 1-83 | (1-1) | 0.2 | 0.0005 | (2-2) | 0.2 | (3-1) | 0.2 |
| 1-84 | (1-1) | 0.01 | 0.2 | (2-3) | 0.2 | (3-1) | 0.2 |
| 1-85 | (1-1) | 0.1 | 0.1 | (2-3) | 0.2 | (3-1) | 0.2 |
| 1-86 | (1-1) | 0.2 | 0.01 | (2-3) | 0.2 | (3-1) | 0.2 |
| 1-87 | (1-1) | 0.2 | 0.005 | (2-3) | 0.2 | (3-1) | 0.2 |
| 1-88 | (1-1) | 0.2 | 0.001 | (2-3) | 0.2 | (3-1) | 0.2 |
| 1-89 | (1-1) | 0.2 | 0.0005 | (2-3) | 0.2 | (3-1) | 0.2 |
| 1-90 | (1-2) | 0.01 | 0.2 | - | - | - | - |
| 1-91 | (1-2) | 0.05 | 0.15 | - | - | - | - |
| 1-92 | (1-2) | 0.1 | 0.1 | - | - | - | - |
| 1-93 | (1-2) | 0.15 | 0.05 | - | - | - | - |
| 1-94 | (1-2) | 0.2 | 0.01 | - | - | - | - |
| 1-95 | (1-2) | 0.2 | 0.005 | - | - | - | - |
| 1-96 | (1-2) | 0.2 | 0.001 | - | - | - | - |
| 1-97 | (1-2) | 0.2 | 0.0005 | - | - | - | - |
| 1-98 | (1-2) | 0.2 | 0.0002 | - | - | - | - |
| 1-99 | (1-2) | 0.1 | 0.1 | (2-1) | 0.2 | - | - |
| 1-100 | (1-2) | 0.1 | 0.1 | - | - | (3-1) | 0.2 |
| 1-101 | (1-2) | 0.1 | 0.1 | (2-1) | 0.2 | (3-1) | 0.2 |

Example 1-102 - Example 1-181: Production of thermoplastic polymer composition

In the same manner as in Example 1-3 except that the thermoplastic polymers and processing stabilizers described in Table 4-1 - Table 4-3 are used, thermoplastic polymer compositions are obtained as pellets.

The meanings of the abbreviations of the thermoplastic polymers described in Table 4-1 - Table 4-3 are as follows.

P1-1: high density polyethylene (HDPE)
P1-2: low density polyethylene (LDPE)
P1-3: linear low density polyethylene (LLDPE)
P1-4: ethylene-vinyl alcohol copolymer (EVOH)
P1-5: ethylene-ethyl acrylate copolymer (EEA)
P1-6: ethylene-vinyl acetate copolymer (EVA)
P1-7: crystalline propylene homopolymer
P1-8: propylene-ethylene random copolymer
P1-9 propylene-$\alpha$-olefin random copolymer

P1-10: propylene-ethylene-α-olefin copolymer
P1-11 polystyrene (PS)
P1-12: acrylonitrile-styrene copolymer (SAN)
P1-13: acrylonitrile-butadiene-styrene copolymer (ABS)
P1-14: special acrylic rubber-acrylonitrile-styrene copolymer
P1-15: acrylonitrile-chlorinated polyethylene-styrene copolymer (ACS)
P1-16: polybutadiene rubber (BR)
P1-17: styrene-butadiene copolymer (SB)
P1-18: chlorinated polyethylene (CPE)
P1-19: polychloroprene
P1-20: chlorinated rubber
P1-21 poly(vinyl chloride) (PVC)
P1-22: poly(vinylidene chloride) (PVDC)
P1-23 methacrylate resin
P1-24: fluororesin
P1-25: polyacetal (POM)
P1-26 grafted poly(phenylene ether) resin
P1-27: poly(phenylene sulfide) resin (PPS)
P1-28: polyurethane (PU)
P1-29: polyamide (PA)
P1-30: poly(ethylene terephthalate)(PET)
P1-31: poly(butylene terephthalate)(PBT)
P1-32: polylactic acid (PLA)
P1-33: polycarbonate (PC)
P1-34: polyacrylate
P1-35: polysulfone (PPSU)
P1-36: poly(ether ether ketone) (PEEK)
P1-37: poly(ether sulfone) (PES)
P1-38: aromatic polyester
P1-39: diallyl phthalate prepolymer
P1-40: silicone resin (SI)
P1-41 1,2-polybutadiene
P1-42: polyisoprene
P1-43: butadiene-acrylonitrile copolymer (NBR)
P1-44: ethylene-methyl methacrylate copolymer (EMMA)

[Table 4-1]

Table 4-1: thermoplastic polymer composition

| Example | thermoplastic polymer | | processing stabilizer | |
|---|---|---|---|---|
| | kind | amount (part) | kind | amount (part) |
| 1-102 | P1-1 | 100 | Ex. 1-1 | 0.31 |
| 1-103 | P1-2 | 100 | Ex. 1-1 | 0.31 |
| 1-104 | P1-3 | 100 | Ex. 1-1 | 0.31 |
| 1-105 | P1-3 | 100 | Ex. 1-2 | 0.51 |
| 1-106 | P1-3 | 100 | Ex. 1-5 | 0.2 |
| 1-107 | P1-3 | 100 | Ex. 1-6 | 0.2 |
| 1-108 | P1-3 | 100 | Ex. 1-7 | 0.2 |
| 1-109 | P1-3 | 100 | Ex. 1-8 | 0.2 |
| 1-110 | P1-3 | 100 | Ex. 1-9 | 0.2 |
| 1-111 | P1-4 | 100 | Ex. 1-1 | 0.31 |
| 1-112 | P1-4 | 100 | Ex. 1-2 | 0.51 |

(continued)

| Example | thermoplastic polymer | | processing stabilizer | |
|---|---|---|---|---|
| | kind | amount (part) | kind | amount (part) |
| 1-113 | P1-4 | 100 | Ex. 1-5 | 0.2 |
| 1-114 | P1-4 | 100 | Ex. 1-6 | 0.2 |
| 1-115 | P1-4 | 100 | Ex. 1-7 | 0.2 |
| 1-116 | P1-4 | 100 | Ex. 1-8 | 0.2 |
| 1-117 | P1-4 | 100 | Ex. 1-9 | 0.2 |
| 1-118 | P1-5 | 100 | Ex. 1-1 | 0.31 |
| 1-119 | P1-6 | 100 | Ex. 1-1 | 0.31 |
| 1-120 | P1-7 | 100 | Ex. 1-1 | 0.31 |
| 1-121 | P1-7 | 100 | Ex. 1-2 | 0.51 |
| 1-122 | P1-7 | 100 | Ex. 1-5 | 0.2 |
| 1-123 | P1-7 | 100 | Ex. 1-6 | 0.2 |
| 1-124 | P1-7 | 100 | Ex. 1-7 | 0.2 |
| 1-125 | P1-7 | 100 | Ex. 1-8 | 0.2 |
| 1-126 | P1-7 | 100 | Ex. 1-9 | 0.2 |
| 1-127 | P1-8 | 100 | Ex. 1-1 | 0.31 |

[Table 4-2]

Table 4-2: thermoplastic polymer composition

| Example | thermoplastic polymer | | processing stabilizer | |
|---|---|---|---|---|
| | kind | amount (part) | kind | amount (part) |
| 1-128 | P1-9 | 100 | Ex. 1-1 | 0.31 |
| 1-129 | P1-10 | 100 | Ex. 1-1 | 0.31 |
| 1-130 | P1-11 | 100 | Ex. 1-1 | 0.31 |
| 1-131 | P1-11 | 100 | Ex. 1-2 | 0.51 |
| 1-132 | P1-11 | 100 | Ex. 1-5 | 0.2 |
| 1-133 | P1-11 | 100 | Ex. 1-6 | 0.2 |
| 1-134 | P1-11 | 100 | Ex. 1-7 | 0.2 |
| 1-135 | P1-11 | 100 | Ex. 1-8 | 0.2 |
| 1-136 | P1-11 | 100 | Ex. 1-9 | 0.2 |
| 1-137 | P1-12 | 100 | Ex. 1-1 | 0.31 |
| 1-138 | P1-13 | 100 | Ex. 1-1 | 0.31 |
| 1-139 | P1-13 | 100 | Ex. 1-2 | 0.51 |
| 1-140 | P1-13 | 100 | Ex. 1-5 | 0.2 |
| 1-141 | P1-13 | 100 | Ex. 1-6 | 0.2 |
| 1-142 | P1-13 | 100 | Ex. 1-7 | 0.2 |
| 1-143 | P1-13 | 100 | Ex. 1-8 | 0.2 |
| 1-144 | P1-13 | 100 | Ex. 1-9 | 0.2 |

(continued)

| Example | thermoplastic polymer | | processing stabilizer | |
|---|---|---|---|---|
| | kind | amount (part) | kind | amount (part) |
| 1-145 | P1-14 | 100 | Ex. 1-1 | 0.31 |
| 1-146 | P1-15 | 100 | Ex. 1-1 | 0.31 |
| 1-147 | P1-16 | 100 | Ex. 1-1 | 0.31 |
| 1-148 | P1-17 | 100 | Ex. 1-1 | 0.31 |
| 1-149 | P1-17 | 100 | Ex. 1-2 | 0.51 |
| 1-150 | P1-17 | 100 | Ex. 1-5 | 0.2 |
| 1-151 | P1-17 | 100 | Ex. 1-6 | 0.2 |
| 1-152 | P1-17 | 100 | Ex. 1-7 | 0.2 |
| 1-153 | P1-17 | 100 | Ex. 1-8 | 0.2 |
| 1-154 | P1-17 | 100 | Ex. 1-9 | 0.2 |

[Table 4-3]

Table 4-3: thermoplastic polymer composition

| Example | thermoplastic polymer | | processing stabilizer | |
|---|---|---|---|---|
| | kind | amount (part) | kind | amount (part) |
| 1-155 | P1-18 | 100 1 | Ex. 1-1 | 0.31 |
| 1-156 | P1-19 | 100 | Ex. 1-1 | 0.31 |
| 1-157 | P1-20 | 100 | Ex. 1-1 | 0.31 |
| 1-158 | P1-21 | 100 | Ex. 1-1 | 0.31 |
| 1-159 | P1-22 | 100 | Ex. 1-1 | 0.31 |
| 1-160 | P1-23 | 100 | Ex. 1-1 | 0.31 |
| 1-161 | P1-24 | 100 | Ex. 1-1 | 0.31 |
| 1-162 | P1-25 | 100 | Ex. 1-1 | 0.31 |
| 1-163 | P1-26 | 100 | Ex. 1-1 | 0.31 |
| 1-164 | P1-27 | 100 | Ex. 1-1 | 0.31 |
| 1-165 | P1-28 | 100 | Ex. 1-1 | 0.31 |
| 1-166 | P1-29 | 100 | Ex. 1-1 | 0.31 |
| 1-167 | P1-30 | 100 | Ex. 1-1 | 0.31 |
| 1-168 | P1-31 | 100 | Ex. 1-1 | 0.31 |
| 1-169 | P1-32 | 100 | Ex. 1-1 | 0.31 |
| 1-170 | P1-33 | 100 | Ex. 1-1 | 0.31 |
| 1-171 | P1-34 | 100 | Ex. 1-1 | 0.31 |
| 1-172 | P1-35 | 100 | Ex. 1-1 | 0.31 |
| 1-173 | P1-36 | 100 | Ex. 1-1 | 0.31 |
| 1-174 | P1-37 | 100 | Ex. 1-1 | 0.31 |
| 1-175 | P1-38 | 100 | Ex. 1-1 | 0.31 |
| 1-176 | P1-39 | 100 | Ex. 1-1 | 0.31 |

(continued)

| Example | thermoplastic polymer | | processing stabilizer | |
|---|---|---|---|---|
| | kind | amount (part) | kind | amount (part) |
| 1-177 | P1-40 | 100 | Ex. 1-1 | 0.31 |
| 1-178 | P1-41 | 100 | Ex. 1-1 | 0.31 |
| 1-179 | P1-42 | 100 | Ex. 1-1 | 0.31 |
| 1-180 | P1-43 | 100 | Ex. 1-1 | 0.31 |
| 1-181 | P1-44 | 100 | Ex. 1-1 | 0.31 |

Example 2-1: Production of processing stabilizer

Compound (8-1) and D-glucose in the amounts described in Table 5 were mixed to produce a processing stabilizer.

Example 2-2: Production of thermoplastic polymer composition

The processing stabilizer (0.11 part) obtained in Example 2-1 and an ethylene-vinyl alcohol copolymer ("EVAL F171B" manufactured by KURARAY CO., LTD.) (100 parts) were dry-blended, the obtained mixture was knead-extruded by a single screw extruder having a screw diameter of 30 mm ("VS30-28 type extruder" manufactured by TANABE PLASTICS MACHINERY CO., LTD.) under the conditions of temperature 230°C and screw rotation 50 rpm to give strands, and the strands were cut by a pelletizer to give a thermoplastic polymer composition as pellets. The results of the processing stability of the obtained thermoplastic polymer composition are shown in Table 6.

Example 2-3 - Example 2-7: Production of processing stabilizer

Compound (8-1) and D-glucose in the amounts described in Table 5 were mixed to produce processing stabilizers.

Example 2-8 - Example 2-12: Production of thermoplastic polymer composition

In the same manner as in Example 2-2 except that the stabilizer compositions (0.2 part) obtained in Example 2-3 - Example 2-7 were used instead of the stabilizer composition obtained in Example 2-1, thermoplastic polymer compositions were obtained as pellets. The results of the processing stability of the obtained thermoplastic polymer composition are shown in Table 6.

Comparative Example 2-1: Production of thermoplastic polymer composition

In the same manner as in Example 2-2 except that compound (8-1) (0.1 part) alone was used instead of the processing stabilizer obtained in Example 2-1, a thermoplastic polymer composition was obtained as pellets. The results of the processing stability of the obtained thermoplastic polymer composition are shown in Table 6.

[Table 5]

Table 5: processing stabilizer

| | compound (8-1) (part) | D-glucose (part) | mass ratio of compound (8-1):D-glucose |
|---|---|---|---|
| Ex. 2-1 | 0.1 | 0.01 | 10:1 |
| Ex. 2-3 | 0.1998 | 0.0002 | 999 : 1 |
| Ex. 2-4 | 0.1996 | 0.0004 | 500: 1 |
| Ex. 2-5 | 0.198 | 0.002 | 100:1 |
| Ex. 2-6 | 0.1818 | 0.0182 | 10:1 |
| Ex. 2-7 | 0.0667 | 0.1333 | 0.5:1 |

[Table 6]

Table 6: thermoplastic polymer composition

| | thermoplastic polymer | processing stabilizer | | 0 min Dwell MFR (g/10 min) | 30 min Dwell MFR (g/10 min) | MFR variation rate (%) |
|---|---|---|---|---|---|---|
| | EVOH (part) | kind | amount (part) | | | |
| Ex. 2-2 | 100 | Ex. 2-1 | 0.11 | 13.1 | 9.6 | 27 |
| Ex. 2-8 | 100 | Ex. 2-3 | 0.2 | 18.7 | 8.6 | 54 |
| Ex. 2-9 | 100 | Ex. 2-4 | 0.2 | 19.5 | 8.9 | 54 |
| Ex. 2-10 | 100 | Ex. 2-5 | 0.2 | 20.1 | 8.7 | 57 |
| Ex. 2-11 | 100 | Ex. 2-6 | 0.2 | 20.5 | 8.7 | 57 |
| Ex. 2-12 | 100 | Ex. 2-7 | 0.2 | 22.1 | 9.2 | 58 |
| Comp. Ex. 2-1 | 100 | compound (8-1) | 0.1 | 14.5 | 35.7 | 146 |
| EVOH: ethylene-vinyl alcohol copolymer | | | | | | |

From the comparison of Example 2-2 and Example 2-8 - Example 2-12 with Comparative Example 2-1, it is clear that a combined use of compound (8) and glucose improves the processing stability of thermoplastic polymer compositions as compared to a single use of compound (8).

Example 2-13 - Example 2-99: Production of processing stabilizer

By mixing the components described in Table 7-1 - Table 7-3, processing stabilizers are obtained.

[Table 7-1]

Table 7-1: processing stabilizer

| Example | compound (8-1) | D-glucose | compound (2) | | compounds (3) - (7) | |
|---|---|---|---|---|---|---|
| | amount (part) | amount (part) | kind | amount (part) | kind | amount (part) |
| 2-13 | 0.01 | 0.2 | - | - | - | - |
| 2-14 | 0.05 | 0.15 | - | - | - | - |
| 2-15 | 0.1 | 0.1 | - | - | - | - |
| 2-16 | 0.15 | 0.05 | - | - | - | - |
| 2-17 | 0.2 | 0.01 | - | - | - | - |
| 2-18 | 0.2 | 0.005 | - | - | - | - |
| 2-19 | 0.2 | 0.001 | - | - | - | - |
| 2-20 | 0.2 | 0.0005 | - | - | - | - |
| 2-21 | 0.2 | 0.0002 | - | - | - | - |
| 2-22 | 0.01 | 0.2 | (2-1) | 0.2 | - | - |
| 2-23 | 0.1 | 0.1 | (2-1) | 0.2 | - | - |
| 2-24 | 0.2 | 0.01 | (2-1) | 0.2 | - | - |
| 2-25 | 0.2 | 0.005 | (2-1) | 0.2 | - | - |
| 2-26 | 0.2 | 0.001 | (2-1) | 0.2 | - | - |
| 2-27 | 0.2 | 0.0005 | (2-1) | 0.2 | - | - |
| 2-28 | 0.01 | 0.2 | (2-2) | 0.2 | - | - |

(continued)

| Example | compound (8-1) | D-glucose | compound (2) | | compounds (3) - (7) | |
|---|---|---|---|---|---|---|
| | amount (part) | amount (part) | kind | amount (part) | kind | amount (part) |
| 2-29 | 0.1 | 0.1 | (2-2) | 0.2 | - | - |
| 2-30 | 0.2 | 0.01 | (2-2) | 0.2 | - | - |
| 2-31 | 0.2 | 0.005 | (2-2) | 0.2 | - | - |
| 2-32 | 0.2 | 0.001 | (2-2) | 0.2 | - | - |
| 2-33 | 0.2 | 0.0005 | (2-2) | 0.2 | - | - |
| 2-34 | 0.01 | 0.2 | (2-3) | 0.2 | - | - |
| 2-35 | 0.1 | 0.1 | (2-3) | 0.2 | - | - |
| 2-36 | 0.2 | 0.01 | (2-3) | 0.2 | - | - |
| 2-37 | 0.2 | 0.005 | (2-3) | 0.2 | - | - |
| 2-38 | 0.2 | 0.001 | (2-3) | 0.2 | - | - |
| 2-39 | 0.2 | 0.0005 | (2-3) | 0.2 | - | - |
| 2-40 | 0.01 | 0.2 | - | - | (3-1) | 0.2 |
| 2-41 | 0.1 | 0.1 | - | - | (3-1) | 0.2 |

[Table 7-2]

Table 7-2: processing stabilizer

| Example | compound (8-1) | D-glucose | compound (2) | | compounds (3) - (7) | |
|---|---|---|---|---|---|---|
| | amount (part) | amount (part) | kind | amount (part) | kind | amount (part) |
| 2-42 | 0.2 | 0.01 | - | - | (3-1) | 0.2 |
| 2-43 | 0.2 | 0.005 | - | - | (3-1) | 0.2 |
| 2-44 | 0.2 | 0.001 | - | - | (3-1) | 0.2 |
| 2-45 | 0.2 | 0.0005 | - | - | (3-1) | 0.2 |
| 2-46 | 0.01 | 0.2 | - | - | (4-1) | 0.2 |
| 2-47 | 0.1 | 0.1 | - | - | (4-1) | 0.2 |
| 2-48 | 0.2 | 0.01 | - | - | (4-1) | 0.2 |
| 2-49 | 0.2 | 0.005 | - | - | (4-1) | 0.2 |
| 2-50 | 0.2 | 0.001 | - | - | (4-1) | 0.2 |
| 2-51 | 0.2 | 0.0005 | - | - | (4-1) | 0.2 |
| 2-52 | 0.01 | 0.2 | - | - | (5-1) | 0.2 |
| 2-53 | 0.1 | 0.1 | - | - | (5-1) | 0.2 |
| 2-54 | 0.2 | 0.01 | - | - | (5-1) | 0.2 |
| 2-55 | 0.2 | 0.005 | - | - | (5-1) | 0.2 |
| 2-56 | 0.2 | 0.001 | - | - | (5-1) | 0.2 |
| 2-57 | 0.2 | 0.0005 | - | - | (5-1) | 0.2 |
| 2-58 | 0.01 | 0.2 | - | - | (5-2) | 0.2 |
| 2-59 | 0.1 | 0.1 | - | - | (5-2) | 0.2 |
| 2-60 | 0.2 | 0.01 | - | - | (5-2) | 0.2 |

(continued)

| Example | compound (8-1) | D-glucose | compound (2) | | compounds (3) - (7) | |
|---|---|---|---|---|---|---|
| | amount (part) | amount (part) | kind | amount (part) | kind | amount (part) |
| 2-61 | 0.2 | 0.005 | - | - | (5-2) | 0.2 |
| 2-62 | 0.2 | 0.001 | - | - | (5-2) | 0.2 |
| 2-63 | 0.2 | 0.0005 | - | - | (5-2) | 0.2 |
| 2-64 | 0.01 | 0.2 | - | - | (5-3) | 0.2 |
| 2-65 | 0.1 | 0.1 | - | - | (5-3) | 0.2 |
| 2-66 | 0.2 | 0.01 | - | - | (5-3) | 0.2 |
| 2-67 | 0.2 | 0.005 | - | - | (5-3) | 0.2 |
| 2-68 | 0.2 | 0.001 | - | - | (5-3) | 0.2 |
| 2-69 | 0.2 | 0.0005 | - | - | (5-3) | 0.2 |
| 2-70 | 0.01 | 0.2 | - | - | (6-1) | 0.2 |

[Table 7-3]

Table 7-3: processing stabilizer

| Example | compound (8-1) | D- compound (2) glucose | | | compounds (3) - (7) | |
|---|---|---|---|---|---|---|
| | amount (part) | amount (part) | kind | amount (part) | kind | amount (part) |
| 2-71 | 0.1 | 0.1 | - | - | (6-1) | 0.2 |
| 2-72 | 0.2 | 0.01 | - | - | (6-1) | 0.2 |
| 2-73 | 0.2 | 0.005 | - | - | (6-1) | 0.2 |
| 2-74 | 0.2 | 0.001 | - | - | (6-1) | 0.2 |
| 2-75 | 0.2 | 0.0005 | - | - | (6-1) | 0.2 |
| 2-76 | 0.01 | 0.2 | - | - | (7-1) | 0.2 |
| 2-77 | 0.1 | 0.1 | - | - | (7-1) | 0.2 |
| 2-78 | 0.2 | 0.01 | - | - | (7-1) | 0.2 |
| 2-79 | 0.2 | 0.005 | - | - | (7-1) | 0.2 |
| 2-80 | 0.2 | 0.001 | - | - | (7-1) | 0.2 |
| 2-81 | 0.2 | 0.0005 | - | - | (7-1) | 0.2 |
| 2-82 | 0.01 | 0.2 | (2-1) | 0.2 | (3-1) | 0.2 |
| 2-83 | 0.1 | 0.1 | (2-1) | 0.2 | (3-1) | 0.2 |
| 2-84 | 0.2 | 0.01 | (2-1) | 0.2 | (3-1) | 0.2 |
| 2-85 | 0.2 | 0.005 | (2-1) | 0.2 | (3-1) | 0.2 |
| 2-86 | 0.2 | 0.001 | (2-1) | 0.2 | (3-1) | 0.2 |
| 2-87 | 0.2 | 0.0005 | (2-1) | 0.2 | (3-1) | 0.2 |
| 2-88 | 0.01 | 0.2 | (2-2) | 0.2 | (3-1) | 0.2 |
| 2-89 | 0.1 | 0.1 | (2-2) | 0.2 | (3-1) | 0.2 |
| 2-90 | 0.2 | 0.01 | (2-2) | 0.2 | (3-1) | 0.2 |
| 2-91 | 0.2 | 0.005 | (2-2) | 0.2 | (3-1) | 0.2 |
| 2-92 | 0.2 | 0.001 | (2-2) | 0.2 | (3-1) | 0.2 |

(continued)

| Example | compound (8-1) | D- compound (2) glucose | | | compounds (3) - (7) | |
|---|---|---|---|---|---|---|
| | amount (part) | amount (part) | kind | amount (part) | kind | amount (part) |
| 2-93 | 0.2 | 0.0005 | (2-2) | 0.2 | (3-1) | 0.2 |
| 2-94 | 0.01 | 0.2 | (2-3) | 0.2 | (3-1) | 0.2 |
| 2-95 | 0.1 | 0.1 | (2-3) | 0.2 | (3-1) | 0.2 |
| 2-96 | 0.2 | 0.01 | (2-3) | 0.2 | (3-1) | 0.2 |
| 2-97 | 0.2 | 0.005 | (2-3) | 0.2 | (3-1) | 0.2 |
| 2-98 | 0.2 | 0.001 | (2-3) | 0.2 | (3-1) | 0.2 |
| 2-99 | 0.2 | 0.0005 | (2-3) | 0.2 | (3-1) | 0.2 |

Example 2-100 - Example 2-173: Production of thermoplastic polymer composition

In the same manner as in Example 2-2 except that the thermoplastic polymers and processing stabilizers described in Table 8-1 - Table 8-3 are used, thermoplastic polymer compositions are obtained as pellets.

The meanings of the abbreviations of the thermoplastic polymers described in Table 8-1 - Table 8-3 are as follows.

P2-1: high density polyethylene (HDPE)
P2-2: low density polyethylene (LDPE)
P2-3: linear low density polyethylene (LLDPE)
P2-4: ethylene-ethyl acrylate copolymer (EEA)
P2-5: ethylene-vinyl acetate copolymer (EVA)
P2-6: crystalline propylene homopolymer
P2-7: propylene-ethylene random copolymer
P2-8: propylene-$\alpha$-olefin random copolymer
P2-9: propylene-ethylene-$\alpha$-olefin copolymer
P2-10: polystyrene (PS)
P2-11: acrylonitrile-styrene copolymer (SAN)
P2-12: acrylonitrile-butadiene-styrene copolymer (ABS)
P2-13: special acrylic rubber-acrylonitrile-styrene copolymer
P2-14: acrylonitrile-chlorinated polyethylene-styrene copolymer (ACS)
P2-15: polybutadiene rubber (BR)
P2-16: styrene-butadiene copolymer (SB)
P2-17: styrene-butadiene block copolymer (SBS)
P2-18: chlorinated polyethylene (CPE)
P2-19: polychloroprene
P2-20: chlorinated rubber
P2-21: poly(vinyl chloride) (PVC)
P2-22: poly(vinylidene chloride) (PVDC)
P2-23: methacrylate resin
P2-24: fluororesin
P2-25: polyacetal (POM)
P2-26: grafted poly(phenylene ether) resin
P2-27: poly(phenylene sulfide) resin (PPS)
P2-28: polyurethane (PU)
P2-29: polyamide (PA)
P2-30: poly(ethylene terephthalate) (PET)
P2-31: poly(butylene terephthalate) (PBT)
P2-32: polylactic acid (PLA)
P2-33: polycarbonate (PC)
P2-34: polyacrylate
P2-35: polysulfone (PPSU)

P2-36: poly(ether ether ketone) (PEEK)
P2-37: poly(ether sulfone) (PES)
P2-38: aromatic polyester
P2-39: diallyl phthalate prepolymer
P2-40: silicone resin (SI)
P2-41: 1,2-polybutadiene
P2-42: polyisoprene
P2-43: butadiene-acrylonitrile copolymer (NBR)
P2-44: ethylene-methyl methacrylate copolymer (EMMA)

[Table 8-1]

Table 8-1: thermoplastic polymer composition

| Example | thermoplastic polymer | | processing stabilizer | |
|---|---|---|---|---|
| | kind | amount (part) | kind | amount (part) |
| 2-100 | P2-1 | 100 | Ex. 2-1 | 0.11 |
| 2-101 | P2-2 | 100 | Ex. 2-1 | 0.11 |
| 2-102 | P2-3 | 100 | Ex. 2-1 | 0.11 |
| 2-103 | P2-3 | 100 | Ex. 2-3 | 0.2 |
| 2-104 | P2-3 | 100 | Ex. 2-4 | 0.2 |
| 2-105 | P2-3 | 100 | Ex. 2-5 | 0.2 |
| 2-106 | P2-3 | 100 | Ex. 2-6 | 0.2 |
| 2-107 | P2-3 | 100 | Ex. 2-7 | 0.2 |
| 2-108 | P2-4 | 100 | Ex. 2-1 | 0.11 |
| 2-109 | P2-5 | 100 | Ex. 2-1 | 0.11 |
| 2-110 | P2-6 | 100 | Ex. 2-1 | 0.11 |
| 2-111 | P2-6 | 100 | Ex. 2-3 | 0.2 |
| 2-112 | P2-6 | 100 | Ex. 2-4 | 0.2 |
| 2-113 | P2-6 | 100 | Ex. 2-5 | 0.2 |
| 2-114 | P2-6 | 100 | Ex. 2-6 | 0.2 |
| 2-115 | P2-6 | 100 | Ex. 2-7 | 0.2 |
| 2-116 | P2-7 | 100 | Ex. 2-1 | 0.11 |
| 2-117 | P2-8 | 100 | Ex. 2-1 | 0.11 |
| 2-118 | P2-9 | 100 | Ex. 2-1 | 0.11 |
| 2-119 | P2-10 | 100 | Ex. 2-1 | 0.11 |
| 2-120 | P2-10 | 100 | Ex. 2-3 | 0.2 |
| 2-121 | P2-10 | 100 | Ex. 2-4 | 0.2 |
| 2-122 | P2-10 | 100 | Ex. 2-5 | 0.2 |
| 2-123 | P2-10 | 100 | Ex. 2-6 | 0.2 |
| 2-124 | P2-10 | 100 | Ex. 2-7 | 0.2 |

[Table 8-2]

Table 8-2: thermoplastic polymer composition

| Example | thermoplastic polymer | | processing stabilizer | |
|---|---|---|---|---|
| | kind | amount (part) | kind | amount (part) |
| 2-125 | P2-11 | 100 | Ex. 2-1 | 0.11 |
| 2-126 | P2-12 | 100 | Ex. 2-1 | 0.11 |
| 2-127 | P2-12 | 100 | Ex. 2-3 | 0.2 |
| 2-128 | P2-12 | 100 | Ex. 2-4 | 0.2 |
| 2-129 | P2-12 | 100 | Ex. 2-5 | 0.2 |
| 2-130 | P2-12 | 100 | Ex. 2-6 | 0.2 |
| 2-131 | P2-12 | 100 | Ex. 2-7 | 0.2 |
| 2-132 | P2-13 | 100 | Ex. 2-1 | 0.11 |
| 2-133 | P2-14 | 100 | Ex. 2-1 | 0.11 |
| 2-134 | P2-15 | 100 | Ex. 2-1 | 0.11 |
| 2-135 | P2-16 | 100 | Ex. 2-1 | 0.11 |
| 2-136 | P2-16 | 100 | Ex. 2-3 | 0.2 |
| 2-137 | P2-16 | 100 | Ex. 2-4 | 0.2 |
| 2-138 | P2-16 | 100 | Ex. 2-5 | 0.2 |
| 2-139 | P2-16 | 100 | Ex. 2-6 | 0.2 |
| 2-140 | P2-16 | 100 | Ex. 2-7 | 0.2 |
| 2-141 | P2-17 | 100 | Ex. 2-1 | 0.11 |
| 2-142 | P2-17 | 100 | Ex. 2-3 | 0.2 |
| 2-143 | P2-17 | 100 | Ex. 2-4 | 0.2 |
| 2-144 | P2-17 | 100 | Ex. 2-5 | 0.2 |
| 2-145 | P2-17 | 100 | Ex. 2-6 | 0.2 |
| 2-146 | P2-17 | 100 | Ex. 2-7 | 0.2 |
| 2-147 | P2-18 | 100 | Ex. 2-1 | 0.11 |
| 2-148 | P2-19 | 100 | Ex. 2-1 | 0.11 |
| 2-149 | P2-20 | 100 | Ex. 2-1 | 0.11 |
| 2-150 | P2-21 | 100 | Ex. 2-1 | 0.11 |

[Table 8-3]

Table 8-3: thermoplastic polymer composition

| Example | thermoplastic polymer | | processing stabilizer | |
|---|---|---|---|---|
| | kind | amount (part) | kind | amount (part) |
| 2-151 | P2-22 | 100 | Ex. 2-1 | 0.11 |
| 2-152 | P2-23 | 100 | Ex. 2-1 | 0.11 |
| 2-153 | P2-24 | 100 | Ex. 2-1 | 0.11 |
| 2-154 | P2-25 | 100 | Ex. 2-1 | 0.11 |
| 2-155 | P2-26 | 100 | Ex. 2-1 | 0.11 |
| 2-156 | P2-27 | 100 | Ex. 2-1 | 0.11 |

(continued)

| Example | thermoplastic polymer | | processing stabilizer | |
|---|---|---|---|---|
| | kind | amount (part) | kind | amount (part) |
| 2-157 | P2-28 | 100 | Ex. 2-1 | 0.11 |
| 2-158 | P2-29 | 100 | Ex. 2-1 | 0.11 |
| 2-159 | P2-30 | 100 | Ex. 2-1 | 0.11 |
| 2-160 | P2-31 | 100 | Ex. 2-1 | 0.11 |
| 2-161 | P2-32 | 100 | Ex. 2-1 | 0.11 |
| 2-162 | P2-33 | 100 | Ex. 2-1 | 0.11 |
| 2-163 | P2-34 | 100 | Ex. 2-1 | 0.11 |
| 2-164 | P2-35 | 100 | Ex. 2-1 | 0.11 |
| 2-165 | P2-36 | 100 | Ex. 2-1 | 0.11 |
| 2-166 | P2-37 | 100 | Ex. 2-1 | 0.11 |
| 2-167 | P2-38 | 100 | Ex. 2-1 | 0.11 |
| 2-168 | P2-39 | 100 | Ex. 2-1 | 0.11 |
| 2-169 | P2-40 | 100 | Ex. 2-1 | 0.11 |
| 2-170 | P2-41 | 100 | Ex. 2-1 | 0.11 |
| 2-171 | P2-42 | 100 | Ex. 2-1 | 0.11 |
| 2-172 | P2-43 | 100 | Ex. 2-1 | 0.11 |
| 2-173 | P2-44 | 100 | Ex. 2-1 | 0.11 |

Example 3-1: Production of processing stabilizer

Compound (2-1) and D-glucose in the amounts described in Table 9 were mixed to produce a processing stabilizer.

Example 3-2: Production of processing stabilizer

Compound (2-1), D-glucose and compound (1-1) in the amounts described in Table 9 were mixed to produce a processing stabilizer.

Reference Example 3-1: Production of processing stabilizer

Compound (2-1) and compound (1-1) in the amounts described in Table 9 were mixed to produce a processing stabilizer.

Example 3-3: Production of thermoplastic polymer composition

The processing stabilizer (0.21 part) obtained in Example 3-1 and a styrene-butadiene block copolymer ("Asaflex 830" manufactured by Asahi Kasei Corp.) (100 parts) were dry-blended, the obtained mixture was knead-extruded by a single screw extruder having a screw diameter of 30 mm ("VS30-28 type extruder" manufactured by TANABE PLASTICS MACHINERY CO., LTD.) under the conditions of temperature 230°C and screw rotation 50 rpm to give strands, and the strands were cut by a pelletizer to give a thermoplastic polymer composition as pellets. The results of the processing stability of the obtained thermoplastic polymer composition are shown in Table 10.

Comparative Example 3-1: Production of thermoplastic polymer composition

In the same manner as in Example 3-3 except that compound (2-1) (0.2 part) alone was used instead of the processing stabilizer obtained in Example 3-1, a thermoplastic polymer composition was obtained as pellets. The results

of the processing stability of the obtained thermoplastic polymer composition are shown in Table 10.

Example 3-4: Production of thermoplastic polymer composition

In the same manner as in Example 3-3 except that the stabilizer composition (0.51 part) obtained in Example 3-2 was used instead of the stabilizer composition obtained in Example 3-1, a thermoplastic polymer composition was obtained as pellets. The results of the processing stability of the obtained thermoplastic polymer composition are shown in Table 10.

Reference Example 3-2: Production of thermoplastic polymer composition

In the same manner as in Example 3-3 except that the processing stabilizer (0.5 part) obtained in Reference Example 3-1 was used instead of the processing stabilizer obtained in Example 3-1, a thermoplastic polymer composition was obtained as pellets. The results of the processing stability of the obtained thermoplastic polymer composition are shown in Table 10.

Example 3-5: Production of processing stabilizer

Compound (2-2) and D-glucose in the amounts described in Table 9 were mixed to produce a processing stabilizer.

Example 3-6: Production of thermoplastic polymer composition

In the same manner as in Example 3-3 except that the processing stabilizer (0.2 part) obtained in Example 3-5 was used instead of the processing stabilizer obtained in Example 3-1, and polypropylene ("NOBRENE" manufactured by Sumitomo Chemical Company, Limited) (100 parts) was used instead of a styrene-butadiene block copolymer, a thermoplastic polymer composition was obtained as pellets. The results of the processing stability of the obtained thermoplastic polymer composition are shown in Table 10.

Comparative Example 3-2: Production of thermoplastic polymer composition

In the same manner as in Example 3-6 except that compound (2-2) (0.1 part) alone was used instead of the processing stabilizer obtained in Example 3-5, a thermoplastic polymer composition was obtained as pellets. The results of the processing stability of the obtained thermoplastic polymer composition are shown in Table 10.

[Table 9]

Table 9: processing stabilizer

| | compound (2) | | D-glucose (part) | compound (1-1) (part) |
|---|---|---|---|---|
| | kind | amount (part) | | |
| Ex. 3-1 | (2-1) | 0.2 | 0.01 | - |
| Ex. 3-2 | (2-1) | 0.2 | 0.01 | 0.3 |
| Ref. Ex. 3-1 | (2-1) | 0.2 | - | 0.3 |
| Ex. 3-5 | (2-2) | 0.1 | 0.1 | 0.2 |

[Table 10]

Table 10: thermoplastic polymer composition

| | thermo-plastic polymer | | processing stabilizer | | 0 min Dwell MFR (g/10 min) | 3 0 min Dwell MFR (g/10 min) | MFR variation rate (%) |
|---|---|---|---|---|---|---|---|
| | SBS (part) | PP (part) | kind | amount (part) | | | |
| Ex. 3-3 | 100 | - | Ex. 3-1 | 0.21 | 16.8 | 2.6 | 84.5 |

(continued)

| | thermo-plastic polymer | | processing stabilizer | | 0 min Dwell MFR (g/10 min) | 3 0 min Dwell MFR (g/10 min) | MFR variation rate (%) |
|---|---|---|---|---|---|---|---|
| | SBS (part) | PP (part) | kind | amount (part) | | | |
| Comp. Ex. 3-1 | 100 | - | compound (2-1) | 0.2 | 16.2 | 0.6 | 96.3 |
| Ex. 3-4 | 100 | - | Ex. 3-2 | 0.51 | 19.7 | 9.0 | 54.3 |
| Ref. Ex. 3-2 | 100 | - | Ref. Ex. 3-1 | 0.5 | 19.2 | 5.6 | 70.8 |
| Ex. 3-6 | - | 100 | Ex. 3-5 | 0.2 | 11.4 | 11.9 | 4.4 |
| Comp. Ex. 3-2 | - | 100 | compound (2-2) | 0.1 | 19.3 | 22.8 | 18.1 |
| SBS: styrene-butadiene block copolymer<br>PP: polypropylene | | | | | | | |

From the results shown in Table 10, it is clear that a combined use of compound (2) and glucose improves the processing stability of thermoplastic polymer compositions as compared to a single use of compound (2). In addition, it is clear that the processing stability of thermoplastic polymer compositions is improved by using glucose in combination, even when compound (1) is used in addition to compound (2).

Example 3-7 - Example 3-74: Production of processing stabilizer

By mixing the components described in Table 11-1 - Table 11-3, processing stabilizers are obtained.

[Table 11-1]

Table 11-1: processing stabilizer

| Example | compound (2) | | D-glucose | compound (1) | | compounds (3) - (7) | | compound (8) | |
|---|---|---|---|---|---|---|---|---|---|
| | kind | amount (part) | amount (part) | kind | amount (part) | kind | amount (part) | kind | amount (part) |
| 3-7 | (2-1) | 0.01 | 0.2 | - | - | - | - | - | - |
| 3-8 | (2-1) | 0.05 | 0.15 | - | - | - | - | - | - |
| 3-9 | (2-1) | 0.1 | 0.1 | - | - | - | - | - | - |
| 3-10 | (2-1) | 0.15 | 0.05 | - | - | - | - | - | - |
| 3-11 | (2-1) | 0.2 | 0.001 | - | - | - | - | - | - |
| 3-12 | (2-1) | 0.2 | 0.0002 | - | - | - | - | - | - |
| 3-13 | (2-2) | 0.01 | 0.2 | - | - | - | - | - | - |
| 3-14 | (2-2) | 0.05 | 0.15 | - | - | - | - | - | - |
| 3-15 | (2-2) | 0.1 | 0.1 | - | - | - | - | - | - |
| 3-16 | (2-2) | 0.15 | 0.05 | - | - | - | - | - | - |
| 3-17 | (2-2) | 0.2 | 0.01 | - | - | - | - | - | - |
| 3-18 | (2-2) | 0.2 | 0.001 | - | - | - | - | - | - |
| 3-19 | (2-2) | 0.2 | 0.0002 | - | - | - | - | - | - |
| 3-20 | (2-3) | 0.01 | 0.2 | - | - | - | - | - | - |
| 3-21 | (2-3) | 0.05 | 0.15 | - | - | - | - | - | - |
| 3-22 | (2-3) | 0.1 | 0.1 | - | - | - | - | - | - |

(continued)

| Example | compound (2) | | D-glucose | compound (1) | | compounds (3) - (7) | | compound (8) | |
|---|---|---|---|---|---|---|---|---|---|
| | kind | amount (part) | amount (part) | kind | amount (part) | kind | amount (part) | kind | amount (part) |
| 3-23 | (2-3) | 0.15 | 0.05 | - | - | - | - | - | - |
| 3-24 | (2-3) | 0.2 | 0.01 | - | - | - | - | - | - |
| 3-25 | (2-3) | 0.2 | 0.001 | - | - | - | - | - | - |
| 3-26 | (2-3) | 0.2 | 0.0002 | - | - | - | - | - | - |
| 3-27 | (2-1) | 0.01 | 0.2 | (1-1) | 0.2 | - | - | - | - |
| 3-28 | (2-1) | 0.2 | 0.01 | (1-1) | 0.2 | - | - | - | - |
| 3-29 | (2-1) | 0.2 | 0.0002 | (1-1) | 0.2 | - | - | - | - |

[Table 11-2]

Table 11-2: processing stabilizer

| Example | compound (2) | | D-glucose | compound (1) | | compounds (3) - (7) | | compound (8) | |
|---|---|---|---|---|---|---|---|---|---|
| | kind | amount (part) | amount (part) | kind | amount (part) | kind | amount (part) | kind | amount (part) |
| 3-30 | (2-2) | 0.01 | 0.2 | (1-1) | 0.2 | - | - | - | - |
| 3-31 | (2-2) | 0.2 | 0.01 | (1-1) | 0.2 | - | - | - | - |
| 3-32 | (2-2) | 0.2 | 0.0002 | (1-1) | 0.2 | - | - | - | - |
| 3-33 | (2-3) | 0.01 | 0.2 | (1-1) | 0.2 | - | - | - | - |
| 3-34 | (2-3) | 0.2 | 0.01 | (1-1) | 0.2 | - | - | - | - |
| 3-35 | (2-3) | 0.2 | 0.0002 | (1-1) | 0.2 | - | - | - | - |
| 3-36 | (2-1) | 0.01 | 0.2 | (1-2) | 0.2 | - | - | - | - |
| 3-37 | (2-1) | 0.2 | 0.01 | (1-2) | 0.2 | - | - | - | - |
| 3-38 | (2-1) | 0.2 | 0.0002 | (1-2) | 0.2 | - | - | - | - |
| 3-39 | (2-1) | 0.2 | 0.01 | - | - | (3-1) | 0.2 | - | - |
| 3-40 | (2-2) | 0.2 | 0.01 | - | - | (3-1) | 0.2 | - | - |
| 3-41 | (2-3) | 0.2 | 0.01 | - | - | (3-1) | 0.2 | - | - |
| 3-42 | (2-1) | 0.2 | 0.01 | - | - | (4-1) | 0.2 | - | - |
| 3-43 | (2-2) | 0.2 | 0.01 | - | - | (4-1) | 0.2 | - | - |
| 3-44 | (2-3) | 0.2 | 0.01 | - | - | (4-1) | 0.2 | - | - |
| 3-45 | (2-1) | 0.2 | 0.01 | - | - | (5-1) | 0.2 | - | - |
| 3-46 | (2-2) | 0.2 | 0.01 | - | - | (5-1) | 0.2 | - | - |
| 3-47 | (2-3) | 0.2 | 0.01 | - | - | (5-1) | 0.2 | - | - |
| 3-48 | (2-1) | 0.2 | 0.01 | - | - | (5-2) | 0.2 | - | - |
| 3-49 | (2-2) | 0.2 | 0.01 | - | - | (5-2) | 0.2 | - | - |
| 3-50 | (2-3) | 0.2 | 0.01 | - | - | (5-2) | 0.2 | - | - |
| 3-51 | (2-1) | 0.2 | 0.01 | - | - | (5-3) | 0.2 | - | - |
| 3-52 | (2-2) | 0.2 | 0.01 | - | - | (5-3) | 0.2 | - | - |

[Table 11-3]

Table 11-3: processing stabilizer

| Example | compound (2) | | D-glucose | compound (1) | | compounds (3) - (7) | | compound (8) | |
|---|---|---|---|---|---|---|---|---|---|
| | kinds | amount (part) | amount (part) | kind | amount (part) | kind | amount (part) | kind | amount (part) |
| 3-53 | (2-3) | 0.2 | 0.01 | - | - | (5-3) | 0.2 | - | - |
| 3-54 | (2-1) | 0.2 | 0.01 | - | - | (6-1) | 0.2 | - | - |
| 3-55 | (2-2) | 0.2 | 0.01 | - | - | (6-1) | 0.2 | - | - |
| 3-56 | (2-3) | 0.2 | 0.01 | - | - | (6-1) | 0.2 | - | - |
| 3-57 | (2-1) | 0.2 | 0.01 | - | - | (7-1) | 0.2 | - | - |
| 3-58 | (2-2) | 0.2 | 0.01 | - | - | (7-1) | 0.2 | - | - |
| 3-59 | (2-3) | 0.2 | 0.01 | - | - | (7-1) | 0.2 | - | - |
| 3-60 | (2-1) | 0.2 | 0.01 | - | - | - | - | (8-1) | 0.2 |
| 3-61 | (2-2) | 0.2 | 0.01 | - | - | - | - | (8-1) | 0.2 |
| 3-62 | (2-3) | 0.2 | 0.01 | - | - | - | - | (8-1) | 0.2 |
| 3-63 | (2-1) | 0.2 | 0.01 | (1-1) | 0.2 | (3-1) | 0.2 | - | - |
| 3-64 | (2-2) | 0.2 | 0.01 | (1-1) | 0.2 | (3-1) | 0.2 | - | - |
| 3-65 | (2-3) | 0.2 | 0.01 | (1-1) | 0.2 | (3-1) | 0.2 | - | - |
| 3-66 | (2-1) | 0.2 | 0.01 | (1-1) | 0.2 | - | - | (8-1) | 0.2 |
| 3-67 | (2-2) | 0.2 | 0.01 | (1-1) | 0.2 | - | - | (8-1) | 0.2 |
| 3-68 | (2-3) | 0.2 | 0.01 | (1-1) | 0.2 | - | - | (8-1) | 0.2 |
| 3-69 | (2-1) | 0.2 | 0.01 | - | - | (3-1) | 0.2 | (8-1) | 0.2 |
| 3-70 | (2-2) | 0.2 | 0.01 | - | - | (3-1) | 0.2 | (8-1) | 0.2 |
| 3-71 | (2-3) | 0.2 | 0.01 | - | - | (3-1) | 0.2 | (8-1) | 0.2 |
| 3-72 | (2-1) | 0.2 | 0.01 | (1-1) | 0.2 | (3-1) | 0.2 | (8-1) | 0.2 |
| 3-73 | (2-2) | 0.2 | 0.01 | (1-1) | 0.2 | (3-1) | 0.2 | (8-1) | 0.2 |
| 3-74 | (2-3) | 0.2 | 0.01 | (1-1) | 0.2 | (3-1) | 0.2 | (8-1) | 0.2 |

Example 3-75 - Example 3-130: Production of thermoplastic polymer composition

In the same manner as in Example 3-3 except that the thermoplastic polymers and processing stabilizers described in Table 12-1 and Table 12-2 are used, thermoplastic polymer compositions are obtained as pellets.

The meanings of the abbreviations of the thermoplastic polymers described in Table 12-1 and Table 12-2 are as follows.

P3-1: high density polyethylene (HDPE)
P3-2: low density polyethylene (LDPE)
P3-3: linear low density polyethylene (LLDPE)
P3-4: ethylene-vinyl alcohol copolymer (EVOH)
P3-5: ethylene-ethyl acrylate copolymer (EEA)
P3-6: ethylene-vinyl acetate copolymer (EVA)
P3-7: propylene-ethylene random copolymer
P3-8: propylene-$\alpha$-olefin random copolymer
P3-9: propylene-ethylene-$\alpha$-olefin copolymer
P3-10: polystyrene (PS)
P3-11: acrylonitrile-styrene copolymer (SAN)

P3-12: acrylonitrile-butadiene-styrene copolymer (ABS)
P3-13: special acrylic rubber-acrylonitrile-styrene copolymer
P3-14: acrylonitrile-chlorinated polyethylene-styrene copolymer (ACS)
P3-15: polybutadiene rubber (BR)
P3-16: styrene-butadiene copolymer (SB)
P3-17: styrene-butadiene block copolymer (SBS)
P3-18: chlorinated polyethylene (CPE)
P3-19: polychloroprene
P3-20: chlorinated rubber
P3-21: poly(vinyl chloride) (PVC)
P3-22: poly(vinylidene chloride) (PVDC)
P3-23: methacrylate resin
P3-24: fluororesin
P3-25: polyacetal (POM)
P3-26: grafted poly(phenylene ether) resin
P3-27: poly(phenylene sulfide) resin (PPS)
P3-28: polyurethane (PU)
P3-29: polyamide (PA)
P3-30: poly(ethylene terephthalate) (PET)
P3-31: poly(butylene terephthalate) (PBT)
P3-32: poly(lactic acid) (PLA)
P3-33: polycarbonate (PC)
P3-34: polyacrylate
P3-35: polysulfone (PPSU)
P3-36: poly(ether ether ketone) (PEEK)
P3-37: poly(ether sulfone) (PES)
P3-38: aromatic polyester
P3-39: diallyl phthalate prepolymer
P3-40: silicone resin (SI)
P3-41: 1,2-polybutadiene
P3-42: polyisoprene
P3-43: butadiene-acrylonitrile copolymer (NBR)
P3-44: ethylene-methyl methacrylate copolymer (EMMA)

[Table 12-1]

Table 12-1: thermoplastic polymer composition

| Example | thermoplastic polymer | | processing stabilizer | |
|---|---|---|---|---|
| | kind | amount (part) | kind | amount (part) |
| 3-75 | P3-1 | 100 | Ex. 3-1 | 0.21 |
| 3-76 | P3-2 | 100 | Ex. 3-1 | 0.21 |
| 3-77 | P3-3 | 100 | Ex. 3-1 | 0.21 |
| 3-78 | P3-3 | 100 | Ex. 3-2 | 0.51 |
| 3-79 | P3-3 | 100 | Ex. 3-31 | 0.41 |
| 3-80 | P3-3 | 100 | Ex. 3-63 | 0.61 |
| 3-81 | P3-4 | 100 | Ex. 3-1 | 0.21 |
| 3-82 | P3-4 | 100 | Ex. 3-2 | 0.51 |
| 3-83 | P3-4 | 100 | Ex. 3-31 | 0.41 |
| 3-84 | P3-4 | 100 | Ex. 3-63 | 0.61 |
| 3-85 | P3-5 | 100 | Ex. 3-1 | 0.21 |
| 3-86 | P3-6 | 100 | Ex. 3-1 | 0.21 |

(continued)

| Example | thermoplastic polymer | | processing stabilizer | |
|---|---|---|---|---|
| | kind | amount (part) | kind | amount (part) |
| 3-87 | P3-7 | 100 | Ex. 3-1 | 0.21 |
| 3-88 | P3-8 | 100 | Ex. 3-1 | 0.21 |
| 3-89 | P3-9 | 100 | Ex. 3-1 | 0.21 |
| 3-90 | P3-10 | 100 | Ex. 3-1 | 0.21 |
| 3-91 | P3-10 | 100 | Ex. 3-2 | 0.51 |
| 3-92 | P3-10 | 100 | Ex. 3-31 | 0.41 |
| 3-93 | P3-10 | 100 | Ex. 3-63 | 0.61 |
| 3-94 | P3-11 | 100 | Ex. 3-1 | 0.21 |
| 3-95 | P3-12 | 100 | Ex. 3-1 | 0.21 |
| 3-96 | P3-12 | 100 | Ex. 3-2 | 0.51 |
| 3-97 | P3-12 | 100 | Ex. 3-31 | 0.41 |
| 3-98 | P3-12 | 100 | Ex. 3-63 | 0.61 |
| 3-99 | P3-13 | 100 | Ex. 3-1 | 0.21 |
| 3-100 | P3-14 | 100 | Ex. 3-1 | 0.21 |
| 3-101 | P3-15 | 100 | Ex. 3-1 | 0.21 |
| 3-102 | P3-16 | 100 | Ex. 3-1 | 0.21 |

[Table 12-2]

Table 12-2: thermoplastic polymer composition

| Example | thermoplastic polymer | | processing stabilizer | |
|---|---|---|---|---|
| | kind | amount (part) | kind | amount (part) |
| 3-103 | P3-17 | 100 | Ex. 3-1 | 0.21 |
| 3-104 | P3-18 | 100 | Ex. 3-1 | 0.21 |
| 3-105 | P3-19 | 100 | Ex. 3-1 | 0.21 |
| 3-106 | P3-20 | 100 | Ex. 3-1 | 0.21 |
| 3-107 | P3-21 | 100 | Ex. 3-1 | 0.21 |
| 3-108 | P3-22 | 100 | Ex. 3-1 | 0.21 |
| 3-109 | P3-23 | 100 | Ex. 3-1 | 0.21 |
| 3-110 | P3-24 | 100 | Ex. 3-1 | 0.21 |
| 3-111 | P3-25 | 100 | Ex. 3-1 | 0.21 |
| 3-112 | P3-26 | 100 | Ex. 3-1 | 0.21 |
| 3-113 | P3-27 | 100 | Ex. 3-1 | 0.21 |
| 3-114 | P3-28 | 100 | Ex. 3-1 | 0.21 |
| 3-115 | P3-29 | 100 | Ex. 3-1 | 0.21 |
| 3-116 | P3-30 | 100 | Ex. 3-1 | 0.21 |
| 3-117 | P3-31 | 100 | Ex. 3-1 | 0.21 |
| 3-118 | P3-32 | 100 | Ex. 3-1 | 0.21 |

(continued)

| Example | thermoplastic polymer | | processing stabilizer | |
|---|---|---|---|---|
| | kind | amount (part) | kind | amount (part) |
| 3-119 | P3-33 | 100 | Ex. 3-1 | 0.21 |
| 3-120 | P3-34 | 100 | Ex. 3-1 | 0.21 |
| 3-121 | P3-35 | 100 | Ex. 3-1 | 0.21 |
| 3-122 | P3-36 | 100 | Ex. 3-1 | 0.21 |
| 3-123 | P3-37 | 100 | Ex. 3-1 | 0.21 |
| 3-124 | P3-38 | 100 | Ex. 3-1 | 0.21 |
| 3-125 | P3-39 | 100 | Ex. 3-1 | 0.21 |
| 3-126 | P3-40 | 100 | Ex. 3-1 | 0.21 |
| 3-127 | P3-41 | 100 | Ex. 3-1 | 0.21 |
| 3-128 | P3-42 | 100 | Ex. 3-1 | 0.21 |
| 3-129 | P3-43 | 100 | Ex. 3-1 | 0.21 |
| 3-130 | P3-44 | 100 | Ex. 3-1 | 0.21 |

Example 4-1: Production of processing stabilizer

Compound (3-1) (0.1 part) and D-glucose (0.01 part) were mixed to produce a processing stabilizer.

Example 4-2: Production of thermoplastic polymer composition

The processing stabilizer (0.11 part) obtained in Example 4-1 and polypropylene ("NOBRENE" manufactured by Sumitomo Chemical Company, Limited) (100 parts) were dry-blended, the obtained mixture was knead-extruded by a single screw extruder having a screw diameter of 30 mm ("VS30-28 type extruder" manufactured by TANABE PLASTICS MACHINERY CO., LTD.) under the conditions of temperature 230°C and screw rotation 50 rpm to give strands, and the strands were cut by a pelletizer to give a thermoplastic polymer composition as pellets.

Comparative Example 4-1: Production of thermoplastic polymer composition

In the same manner as in Example 4-2 except that compound (3-1) (0.3 part) alone was used instead of the processing stabilizer obtained in Example 4-1, a thermoplastic polymer composition was obtained as pellets.

The composition of the processing stabilizer obtained in Example 4-1 is shown in Table 13, and the compositions and the results of processing stability of the thermoplastic polymer compositions obtained in Example 4-2 and Comparative Example 4-1 are shown in Table 14.

[Table 13]

Table 13: processing stabilizer

| | compound (3-1) (part) | D-glucose (part) | mass ratio of compound (3-1):D-glucose |
|---|---|---|---|
| Ex. 4-1 | 0.1 | 0.01 | 10:1 |

[Table 14]

Table 14: thermoplastic polymer composition

| | thermoplastic polymer | processing stabilizer | | 30 min dwell MFR (g/10 min) | inhibition rate of MFR increment (%) |
|---|---|---|---|---|---|
| | polypropylene (part) | kind | amount (part) | | |
| Ex. 4-2 | 100 | Ex. 4-1 | 0.11 | 12.8 | 20.0 |
| Comp. Ex. 4-1 | 100 | compound (3-1) | 0.1 | 16.0 | - |

Example 4-3 - Example 4-132: Production of processing stabilizer

By mixing the components described in Table 15-1 - Table 15-4, processing stabilizers are obtained. These processing stabilizers are predicted to improve the processing stability of a thermoplastic polymer composition (that is, they inhibit MFR variation rate or increase inhibition rate of MFR increment).

[Table 15-1]

Table 15-1: processing stabilizer

| Example | compounds (3) - (7) | | D-glucose | compound (1) | | compound (2) | | compound (8) | |
|---|---|---|---|---|---|---|---|---|---|
| | kind | amount (part) | amount (part) | kind | amount (part) | kind | amount (part) | kind | amount (part) |
| 4-3 | (3-1) | 0.01 | 0.2 | - | - | - | - | - | - |
| 4-4 | (3-1) | 0.05 | 0.15 | - | - | - | - | - | - |
| 4-5 | (3-1) | 0.1 | 0.1 | - | - | - | - | - | - |
| 4-6 | (3-1) | 0.15 | 0.05 | - | - | - | - | - | - |
| 4-7 | (3-1) | 0.2 | 0.01 | - | - | - | - | - | - |
| 4-8 | (3-1) | 0.2 | 0.001 | - | - | - | - | - | - |
| 4-9 | (3-1) | 0.2 | 0.0002 | - | - | - | - | - | - |
| 4-10 | (4-1) | 0.01 | 0.2 | - | - | - | - | - | - |
| 4-11 | (4-1) | 0.05 | 0.15 | - | - | - | - | - | - |
| 4-12 | (4-1) | 0.1 | 0.1 | - | - | - | - | - | - |
| 4-13 | (4-1) | 0.15 | 0.05 | - | - | - | - | - | - |
| 4-14 | (4-1) | 0.2 | 0.01 | - | - | - | - | - | - |
| 4-15 | (4-1) | 0.2 | 0.001 | - | - | - | - | - | - |
| 4-16 | (4-1) | 0.2 | 0.0002 | - | - | - | - | - | - |
| 4-17 | (5-1) | 0.01 | 0.2 | - | - | - | - | - | - |
| 4-18 | (5-1) | 0.05 | 0.15 | - | - | - | - | - | - |
| 4-19 | (5-1) | 0.1 | 0.1 | - | - | - | - | - | - |
| 4-20 | (5-1) | 0.15 | 0.05 | - | - | - | - | - | - |
| 4-21 | (5-1) | 0.2 | 0.01 | - | - | - | - | - | - |
| 4-22 | (5-1) | 0.2 | 0.001 | - | - | - | - | - | - |
| 4-23 | (5-1) | 0.2 | 0.0002 | - | - | - | - | - | - |
| 4-24 | (5-2) | 0.01 | 0.2 | - | - | - | - | - | - |
| 4-25 | (5-2) | 0.05 | 0.15 | - | - | - | - | - | - |
| 4-26 | (5-2) | 0.1 | 0.1 | - | - | - | - | - | - |

(continued)

| Example | compounds (3) - (7) | | D-glucose | compound (1) | | compound (2) | | compound (8) | |
|---|---|---|---|---|---|---|---|---|---|
| | kind | amount (part) | amount (part) | kind | amount (part) | kind | amount (part) | kind | amount (part) |
| 4-27 | (5-2) | 0.15 | 0.05 | - | - | - | - | - | - |
| 4-28 | (5-2) | 0.2 | 0.01 | - | - | - | - | - | - |
| 4-29 | (5-2) | 0.2 | 0.001 | - | - | - | - | - | - |
| 4-30 | (5-2) | 0.2 | 0.0002 | - | - | - | - | - | - |

[Table 15-2]

Table 15-2: processing stabilizer

| Example | compounds (3) - (7) | | D-glucose | compound (1) | | compound (2) | | compound (8) | |
|---|---|---|---|---|---|---|---|---|---|
| | kind | amount (part) | amount (part) | kind | amount (part) | kind | amount (part) | kind | amount (part) |
| 4-31 | (5-3) | 0.01 | 0.2 | - | - | - | - | - | - |
| 4-32 | (5-3) | 0.05 | 0.15 | - | - | - | - | - | - |
| 4-33 | (5-3) | 0.1 | 0.1 | - | - | - | - | - | - |
| 4-34 | (5-3) | 0.15 | 0.05 | - | - | - | - | - | - |
| 4-35 | (5-3) | 0.2 | 0.01 | - | - | - | - | - | - |
| 4-36 | (5-3) | 0.2 | 0.001 | - | - | - | - | - | - |
| 4-37 | (5-3) | 0.2 | 0.0002 | - | - | - | - | - | - |
| 4-38 | (6-1) | 0.01 | 0.2 | - | - | - | - | - | - |
| 4-39 | (6-1) | 0.05 | 0.15 | - | - | - | - | - | - |
| 4-40 | (6-1) | 0.1 | 0.1 | - | - | - | - | - | - |
| 4-41 | (6-1) | 0.15 | 0.05 | - | - | - | - | - | - |
| 4-42 | (6-1) | 0.2 | 0.01 | - | - | - | - | - | - |
| 4-43 | (6-1) | 0.2 | 0.001 | - | - | - | - | - | - |
| 4-44 | (6-1) | 0.2 | 0.0002 | - | - | - | - | - | - |
| 4-45 | (7-1) | 0.01 | 0.2 | - | - | - | - | - | - |
| 4-46 | (7-1) | 0.05 | 0.15 | - | - | - | - | - | - |
| 4-47 | (7-1) | 0.1 | 0.1 | - | - | - | - | - | - |
| 4-48 | (7-1) | 0.15 | 0.05 | - | - | - | - | - | - |
| 4-49 | (7-1) | 0.2 | 0.01 | - | - | - | - | - | - |
| 4-50 | (7-1) | 0.2 | 0.001 | - | - | - | - | - | - |
| 4-51 | (7-1) | 0.2 | 0.0002 | - | - | - | - | - | - |
| 4-52 | (3-1) | 0.01 | 0.2 | (1-1) | 0.2 | - | - | - | - |
| 4-53 | (3-1) | 0.2 | 0.01 | (1-1) | 0.2 | - | - | - | - |
| 4-54 | (3-1) | 0.2 | 0.0002 | (1-1) | 0.2 | - | - | - | - |
| 4-55 | (4-1) | 0.01 | 0.2 | (1-1) | 0.2 | - | - | - | - |
| 4-56 | (4-1) | 0.2 | 0.01 | (1-1) | 0.2 | - | - | - | - |

(continued)

| Example | compounds (3) - (7) | | D-glucose | compound (1) | | compound (2) | | compound (8) | |
|---|---|---|---|---|---|---|---|---|---|
| | kind | amount (part) | amount (part) | kind | amount (part) | kind | amount (part) | kind | amount (part) |
| 4-57 | (4-1) | 0.2 | 0.0002 | (1-1) | 0.2 | - | - | - | - |
| 4-58 | (5-1) | 0.01 | 0.2 | (1-1) | 0.2 | - | - | - | - |
| 4-59 | (5-1) | 0.2 | 0.01 | (1-1) | 0.2 | - | - | - | - |
| 4-60 | (5-2) | 0.2 | 0.0002 | (1-1) | 0.2 | - | - | - | - |
| 4-61 | (5-2) | 0.01 | 0.2 | (1-1) | 0.2 | - | - | - | - |
| 4-62 | (5-2) | 0.2 | 0.01 | (1-1) | 0.2 | - | - | - | - |
| 4-63 | (5-3) | 0.2 | 0.0002 | (1-1) | 0.2 | - | - | - | - |
| 4-64 | (6-1) | 0.01 | 0.2 | (1-1) | 0.2 | - | - | - | - |
| 4-65 | (6-1) | 0.2 | 0.01 | (1-1) | 0.2 | - | - | - | - |
| 4-66 | (6-1) | 0.2 | 0.0002 | (1-1) | 0.2 | - | - | - | - |
| 4-67 | (7-1) | 0.01 | 0.2 | (1-1) | 0.2 | - | - | - | - |
| 4-68 | (7-1) | 0.2 | 0.01 | (1-1) | 0.2 | - | - | - | - |
| 4-69 | (7-1) | 0.2 | 0.0002 | (1-1) | 0.2 | - | - | - | - |

[Table 15-3]

Table 15-3: processing stabilizer

| Example | compounds (3) - (7) | | D-glucose | compound (1) | | compound (2) | | compound (8) | |
|---|---|---|---|---|---|---|---|---|---|
| | kind | amount (part) | amount (part) | kind | amount (part) | kind | amount (part) | kind | amount (part) |
| 4-70 | (3-1) | 0.2 | 0.01 | (1-2) | 0.2 | - | - | - | - |
| 4-71 | (4-1) | 0.2 | 0.01 | (1-2) | 0.2 | - | - | - | - |
| 4-72 | (5-1) | 0.2 | 0.01 | (1-2) | 0.2 | - | - | - | - |
| 4-73 | (5-2) | 0.2 | 0.01 | (1-2) | 0.2 | - | - | - | - |
| 4-74 | (5-3) | 0.2 | 0.01 | (1-2) | 0.2 | - | - | - | - |
| 4-75 | (6-1) | 0.2 | 0.01 | (1-2) | 0.2 | - | - | - | - |
| 4-76 | (7-1) | 0.2 | 0.01 | (1-2) | 0.2 | - | - | - | - |
| 4-77 | (3-1) | 0.2 | 0.01 | - | - | (2-1) | 0.2 | - | - |
| 4-78 | (4-1) | 0.2 | 0.01 | - | - | (2-1) | 0.2 | - | - |
| 4-79 | (5-1) | 0.2 | 0.01 | - | - | (2-1) | 0.2 | - | - |
| 4-80 | (5-2) | 0.2 | 0.01 | - | - | (2-1) | 0.2 | - | - |
| 4-81 | (5-3) | 0.2 | 0.01 | - | - | (2-1) | 0.2 | - | - |
| 4-82 | (6-1) | 0.2 | 0.01 | - | - | (2-1) | 0.2 | - | - |
| 4-83 | (7-1) | 0.2 | 0.01 | - | - | (2-1) | 0.2 | - | - |
| 4-84 | (3-1) | 0.2 | 0.01 | - | - | (2-2) | 0.2 | - | - |
| 4-85 | (4-1) | 0.2 | 0.01 | - | - | (2-2) | 0.2 | - | - |
| 4-86 | (5-1) | 0.2 | 0.01 | - | - | (2-2) | 0.2 | - | - |

(continued)

| Example | compounds (3) - (7) | | D-glucose | compound (1) | | compound (2) | | compound (8) | |
|---|---|---|---|---|---|---|---|---|---|
| | kind | amount (part) | amount (part) | kind | amount (part) | kind | amount (part) | kind | amount (part) |
| 4-87 | (5-2) | 0.2 | 0.01 | - | - | (2-2) | 0.2 | - | - |
| 4-88 | (5-3) | 0.2 | 0.01 | - | - | (2-2) | 0.2 | - | - |
| 4-89 | (6-1) | 0.2 | 0.01 | - | - | (2-2) | 0.2 | - | - |
| 4-90 | (7-1) | 0.2 | 0.01 | - | - | (2-2) | 0.2 | - | - |
| 4-91 | (3-1) | 0.2 | 0.01 | - | - | (2-3) | 0.2 | - | - |
| 4-92 | (4-1) | 0.2 | 0.01 | - | - | (2-3) | 0.2 | - | - |
| 4-93 | (5-1) | 0.2 | 0.01 | - | - | (2-3) | 0.2 | - | - |
| 4-94 | (5-2) | 0.2 | 0.01 | - | - | (2-3) | 0.2 | - | - |
| 4-95 | (5-3) | 0.2 | 0.01 | - | - | (2-3) | 0.2 | - | - |
| 4-96 | (6-1) | 0.2 | 0.01 | - | - | (2-3) | 0.2 | - | - |
| 4-97 | (7-1) | 0.2 | 0.01 | - | - | (2-3) | 0.2 | - | - |
| 4-98 | (3-1) | 0.2 | 0.01 | - | - | - | - | (8-1) | 0.2 |
| 4-99 | (4-1) | 0.2 | 0.01 | - | - | - | - | (8-1) | 0.2 |
| 4-100 | (5-1) | 0.2 | 0.01 | - | - | - | - | (8-1) | 0.2 |
| 4-101 | (5-2) | 0.2 | 0.01 | - | - | - | - | (8-1) | 0.2 |
| 4-102 | (5-3) | 0.2 | 0.01 | - | - | - | - | (8-1) | 0.2 |
| 4-103 | (6-1) | 0.2 | 0.01 | - | - | - | - | (8-1) | 0.2 |
| 4-104 | (7-1) | 0.2 | 0.01 | - | - | - | - | (8-1) | 0.2 |

[Table 15-4]

Table 15-4: processing stabilizer

| Example | compounds (3) - (7) | | D-glucose | compound (1) | | compound (2) | | compound (8) | |
|---|---|---|---|---|---|---|---|---|---|
| | kind | amount (part) | amount (part) | kind | amount (part) | kind | amount (part) | kind | amount (part) |
| 4-105 | (3-1) | 0.2 | 0.01 | (1-1) | 0.2 | (2-1) | 0.2 | - | - |
| 4-106 | (4-1) | 0.2 | 0.01 | (1-1) | 0.2 | (2-1) | 0.2 | - | - |
| 4-107 | (5-1) | 0.2 | 0.01 | (1-1) | 0.2 | (2-1) | 0.2 | - | - |
| 4-108 | (5-2) | 0.2 | 0.01 | (1-1) | 0.2 | (2-1) | 0.2 | - | - |
| 4-109 | (5-3) | 0.2 | 0.01 | (1-1) | 0.2 | (2-1) | 0.2 | - | - |
| 4-110 | (6-1) | 0.2 | 0.01 | (1-1) | 0.2 | (2-1) | 0.2 | - | - |
| 4-111 | (7-1) | 0.2 | 0.01 | (1-1) | 0.2 | (2-1) | 0.2 | - | - |
| 4-112 | (3-1) | 0.2 | 0.01 | (1-1) | 0.2 | - | - | (8-1) | 0.2 |
| 4-113 | (4-1) | 0.2 | 0.01 | (1-1) | 0.2 | - | - | (8-1) | 0.2 |
| 4-114 | (5-1) | 0.2 | 0.01 | (1-1) | 0.2 | - | - | (8-1) | 0.2 |
| 4-115 | (5-2) | 0.2 | 0.01 | (1-1) | 0.2 | - | - | (8-1) | 0.2 |
| 4-116 | (5-3) | 0.2 | 0.01 | (1-1) | 0.2 | - | - | (8-1) | 0.2 |

(continued)

| Example | compounds (3) - (7) | | D-glucose | compound (1) | | compound (2) | | compound (8) | |
|---|---|---|---|---|---|---|---|---|---|
| | kind | amount (part) | amount (part) | kind | amount (part) | kind | amount (part) | kind | amount (part) |
| 4-117 | (6-1) | 0.2 | 0.01 | (1-1) | 0.2 | - | - | (8-1) | 0.2 |
| 4-118 | (7-1) | 0.2 | 0.01 | (1-1) | 0.2 | - | - | (8-1) | 0.2 |
| 4-119 | (3-1) | 0.2 | 0.01 | - | - | (2-1) | 0.2 | (8-1) | 0.2 |
| 4-120 | (4-1) | 0.2 | 0.01 | - | - | (2-1) | 0.2 | (8-1) | 0.2 |
| 4-121 | (5-1) | 0.2 | 0.01 | - | - | (2-1) | 0.2 | (8-1) | 0.2 |
| 4-122 | (5-2) | 0.2 | 0.01 | - | - | (2-1) | 0.2 | (8-1) | 0.2 |
| 4-123 | (5-3) | 0.2 | 0.01 | - | - | (2-1) | 0.2 | (8-1) | 0.2 |
| 4-124 | (6-1) | 0.2 | 0.01 | - | - | (2-1) | 0.2 | (8-1) | 0.2 |
| 4-125 | (7-1) | 0.2 | 0.01 | - | - | (2-1) | 0.2 | (8-1) | 0.2 |
| 4-126 | (3-1) | 0.2 | 0.01 | (1-1) | 0.2 | (2-1) | 0.2 | (8-1) | 0.2 |
| 4-127 | (4-1) | 0.2 | 0.01 | (1-1) | 0.2 | (2-1) | 0.2 | (8-1) | 0.2 |
| 4-128 | (5-1) | 0.2 | 0.01 | (1-1) | 0.2 | (2-1) | 0.2 | (8-1) | 0.2 |
| 4-129 | (5-2) | 0.2 | 0.01 | (1-1) | 0.2 | (2-1) | 0.2 | (8-1) | 0.2 |
| 4-130 | (5-3) | 0.2 | 0.01 | (1-1) | 0.2 | (2-1) | 0.2 | (8-1) | 0.2 |
| 4-131 | (6-1) | 0.2 | 0.01 | (1-1) | 0.2 | (2-1) | 0.2 | (8-1) | 0.2 |
| 4-132 | (7-1) | 0.2 | 0.01 | (1-1) | 0.2 | (2-1) | 0.2 | (8-1) | 0.2 |

Example 4-133 - Example 4-196: Production of thermoplastic polymer composition

In the same manner as in Example 4-2 except that the thermoplastic polymers and processing stabilizers described in Table 16-1 and Table 16-2 are used, thermoplastic polymer compositions are obtained as pellets. The obtained thermoplastic polymer compositions are predicted to be superior in processing stability.

The meanings of the abbreviations of the thermoplastic polymers described in Table 16-1 and Table 16-2 are as follows.

P4-1: high density polyethylene (HDPE)
P4-2: low density polyethylene (LDPE)
P4-3: linear low density polyethylene (LLDPE)
P4-4: ethylene-vinyl alcohol copolymer (EVOH)
P4-5: ethylene-ethyl acrylate copolymer (EEA)
P4-6: ethylene-vinyl acetate copolymer (EVA)
P4-7: propylene-ethylene random copolymer
P4-8: propylene-$\alpha$-olefin random copolymer
P4-9: propylene-ethylene-$\alpha$-olefin copolymer
P4-10: polystyrene (PS)
P4-11: acrylonitrile-styrene copolymer (SAN)
P4-12: acrylonitrile-butadiene-styrene copolymer (ABS)
P4-13: special acrylic rubber-acrylonitrile-styrene copolymer
P4-14: acrylonitrile-chlorinated polyethylene-styrene copolymer (ACS)
P4-15: polybutadiene rubber (BR)
P4-16: styrene-butadiene copolymer (SB)
P4-17: styrene-butadiene block copolymer (SBS)
P4-18: chlorinated polyethylene (CPE)
P4-19: polychloroprene
P4-20: chlorinated rubber

P4-21: poly(vinyl chloride) (PVC)
P4-22: poly(vinylidene chloride) (PVDC)
P4-23: methacrylate resin
P4-24: fluororesin
P4-25: polyacetal (POM)
P4-26: grafted poly(phenylene ether) resin
P4-27: poly(phenylene sulfide) resin (PPS)
P4-28: polyurethane (PU)
P4-29: polyamide (PA)
P4-30: poly(ethylene terephthalate) (PET)
P4-31: poly(butylene terephthalate) (PBT)
P4-32: poly(lactic acid) (PLA)
P4-33: polycarbonate (PC)
P4-34: polyacrylate
P4-35: polysulfone (PPSU)
P4-36: poly(ether ether ketone) (PEEK)
P4-37: poly(ether sulfone) (PES)
P4-38: aromatic polyester
P4-39: diallyl phthalate prepolymer
P4-40: silicone resin (SI)
P4-41: 1,2-polybutadiene
P4-42: polyisoprene
P4-43: butadiene-acrylonitrile copolymer (NBR)
P4-44: ethylene-methyl methacrylate copolymer (EMMA)

[Table 16-1]

Table 16-1: thermoplastic polymer composition

| Example | thermoplastic polymer | | processing stabilizer | |
|---|---|---|---|---|
| | kind | amount (part) | kind | amount (part) |
| 4-133 | P4-1 | 100 | Ex. 4-42 | 0.21 |
| 4-134 | P4-2 | 100 | Ex. 4-42 | 0.21 |
| 4-135 | P4-3 | 100 | Ex. 4-1 | 0.11 |
| 4-136 | P4-3 | 100 | Ex. 4-42 | 0.21 |
| 4-137 | P4-3 | 100 | Ex. 4-56 | 0.41 |
| 4-138 | P4-3 | 100 | Ex. 4-77 | 0.41 |
| 4-139 | P4-3 | 100 | Ex. 4-105 | 0.61 |
| 4-140 | P4-4 | 100 | Ex. 4-1 | 0.11 |
| 4-141 | P4-4 | 100 | Ex. 4-42 | 0.21 |
| 4-142 | P4-4 | 100 | Ex. 4-56 | 0.41 |
| 4-143 | P4-4 | 100 | Ex. 4-77 | 0.41 |
| 4-144 | P4-4 | 100 | Ex. 4-105 | 0.61 |
| 4-145 | P4-5 | 100 | Ex. 4-42 | 0.21 |
| 4-146 | P4-6 | 100 | Ex. 4-42 | 0.21 |
| 4-147 | P4-7 | 100 | Ex. 4-42 | 0.21 |
| 4-148 | P4-8 | 100 | Ex. 4-42 | 0.21 |
| 4-149 | P4-9 | 100 | Ex. 4-42 | 0.21 |
| 4-150 | P4-10 | 100 | Ex. 4-1 | 0.11 |

(continued)

| Example | thermoplastic polymer | | processing stabilizer | |
|---|---|---|---|---|
| | kind | amount (part) | kind | amount (part) |
| 4-151 | P4-10 | 100 | Ex. 4-42 | 0.21 |
| 4-152 | P4-10 | 100 | Ex. 4-56 | 0.41 |
| 4-153 | P4-10 | 100 | Ex. 4-77 | 0.41 |
| 4-154 | P4-10 | 100 | Ex. 4-105 | 0.61 |
| 4-155 | P4-11 | 100 | Ex. 4-42 | 0.21 |
| 4-156 | P4-12 | 100 | Ex. 4-1 | 0.11 |
| 4-157 | P4-12 | 100 | Ex. 4-42 | 0.21 |
| 4-158 | P4-12 | 100 | Ex. 4-56 | 0.41 |
| 4-159 | P4-12 | 100 | Ex. 4-77 | 0.41 |
| 4-160 | P4-12 | 100 | Ex. 4-105 | 0.61 |
| 4-161 | P4-13 | 100 | Ex. 4-42 | 0.21 |
| 4-162 | P4-14 | 100 | Ex. 4-42 | 0.21 |
| 4-163 | P4-15 | 100 | Ex. 4-42 | 0.21 |
| 4-164 | P4-16 | 100 | Ex. 4-42 | 0.21 |
| 4-165 | P4-17 | 100 | Ex. 4-1 | 0.11 |
| 4-166 | P4-17 | 100 | Ex. 4-42 | 0.21 |
| 4-167 | P4-17 | 100 | Ex. 4-56 | 0.41 |
| 4-168 | P4-17 | 100 | Ex. 4-77 | 0.41 |
| 4-169 | P4-17 | 100 | Ex. 4-105 | 0.61 |

[Table 16-2]

Table 16-2: thermoplastic polymer composition

| Example | thermoplastic polymer | | processing stabilizer | |
|---|---|---|---|---|
| | kind | amount (part) | kind | amount (part) |
| 4-170 | P4-18 | 100 | Ex. 4-42 | 0.21 |
| 4-171 | P4-19 | 100 | Ex. 4-42 | 0.21 |
| 4-172 | P4-20 | 100 | Ex. 4-42 | 0.21 |
| 4-173 | P4-21 | 100 | Ex. 4-42 | 0.21 |
| 4-174 | P4-22 | 100 | Ex. 4-42 | 0.21 |
| 4-175 | P4-23 | 100 | Ex. 4-42 | 0.21 |
| 4-176 | P4-24 | 100 | Ex. 4-42 | 0.21 |
| 4-177 | P4-25 | 100 | Ex. 4-42 | 0.21 |
| 4-178 | P4-26 | 100 | Ex. 4-42 | 0.21 |
| 4-179 | P4-27 | 100 | Ex. 4-42 | 0.21 |
| 4-180 | P4-28 | 100 | Ex. 4-42 | 0.21 |
| 4-181 | P4-29 | 100 | Ex. 4-42 | 0.21 |
| 4-182 | P4-30 | 100 | Ex. 4-42 | 0.21 |

(continued)

| Example | thermoplastic polymer | | processing stabilizer | |
|---|---|---|---|---|
| | kind | amount (part) | kind | amount (part) |
| 4-183 | P4-31 | 100 | Ex. 4-42 | 0.21 |
| 4-184 | P4-32 | 100 | Ex. 4-42 | 0.21 |
| 4-185 | P4-33 | 100 | Ex. 4-42 | 0.21 |
| 4-186 | P4-34 | 100 | Ex. 4-42 | 0.21 |
| 4-187 | P4-35 | 100 | Ex. 4-42 | 0.21 |
| 4-188 | P4-36 | 100 | Ex. 4-42 | 0.21 |
| 4-189 | P4-37 | 100 | Ex. 4-42 | 0.21 |
| 4-190 | P4-38 | 100 | Ex. 4-42 | 0.21 |
| 4-191 | P4-39 | 100 | Ex. 4-42 | 0.21 |
| 4-192 | P4-40 | 100 | Ex. 4-42 | 0.21 |
| 4-193 | P4-41 | 100 | Ex. 4-42 | 0.21 |
| 4-194 | P4-42 | 100 | Ex. 4-42 | 0.21 |
| 4-195 | P4-43 | 100 | Ex. 4-42 | 0.21 |
| 4-196 | P4-44 | 100 | Ex. 4-42 | 0.21 |

## Industrial Applicability

The thermoplastic polymer composition of the present invention containing compound (1), compound (2), at least one selected from the group consisting of compound (3) - compound (7), or compound (8) and glucose shows superior processing stability. The thermoplastic polymer composition of the present invention can be used for the production of, for example, electronic component, automobile part, clock component, camera component, component of leisure goods and the like.

## Claims

1. A thermoplastic polymer composition comprising a compound represented by the formula (1):

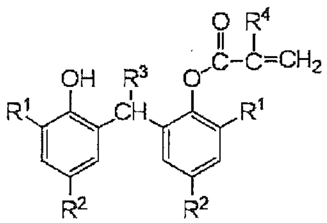

(1)

wherein in the formula (1),
each $R^1$ and/or each $R^2$ are/is independently a $C_{1-8}$ alkyl group, a $C_{6-12}$ aryl group or a $C_{7-18}$ aralkyl group,
$R^3$ is a hydrogen atom or a $C_{1-3}$ alkyl group, and
$R^4$ is a hydrogen atom or a methyl group,
glucose and a thermoplastic polymer.

2. The thermoplastic polymer composition according to claim 1, wherein the total amount of the compound represented by the formula (1) and glucose is 0.001 - 3 parts by weight relative to 100 parts by weight of the thermoplastic polymer.

3. A processing stabilizer comprising a compound represented by the formula (1):

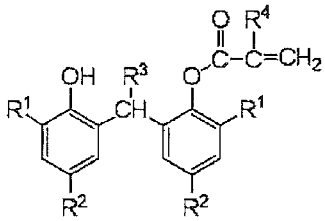

(1)

wherein in the formula (1),
each $R^1$ and/or each $R^2$ are/is independently a $C_{1-8}$ alkyl group, a $C_{6-12}$ aryl group or a $C_{7-18}$ aralkyl group,
$R^3$ is a hydrogen atom or a $C_{1-3}$ alkyl group, and
$R^4$ is a hydrogen atom or a methyl group, and glucose.

**4.** The processing stabilizer according to claim 3, wherein the compound represented by the formula (1) is at least one selected from the group consisting of 2,4-di-t-pentyl-6-[1-(3,5-di-t-pentyl-2-hydroxyphenyl)ethyl]phenyl acrylate and 2-t-butyl-6-(3-t-butyl-2-hydroxy-5-methylbenzyl)-4-methylphenyl acrylate.

**5.** The processing stabilizer according to claim 3 or 4, wherein the content of glucose is 0.1 - 95 wt% of the total of the compound represented by the formula (1) and glucose.

**6.** The processing stabilizer according to any one of claims 3 - 5, further comprising a compound represented by the formula (2):

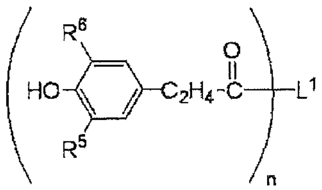

(2)

wherein in the formula (2),
each $R^5$ and/or each $R^6$ are/is independently a hydrogen atom or a $C_{1-6}$ alkyl group,
$L^1$ is an n-valent $C_{1-24}$ alcohol residue optionally containing a hetero atom,
n is an integer of 1 - 4, and
the alcohol residue here is a residue obtained by removing a hydrogen atom from the hydroxy group of the alcohol.

**7.** The processing stabilizer according to any one of claims 3 - 6, further comprising at least one selected from the group consisting of the compounds represented by the formulas (3) - (7):

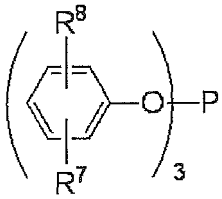

(3)

wherein in the formula (3), each $R^7$ and/or each $R^8$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

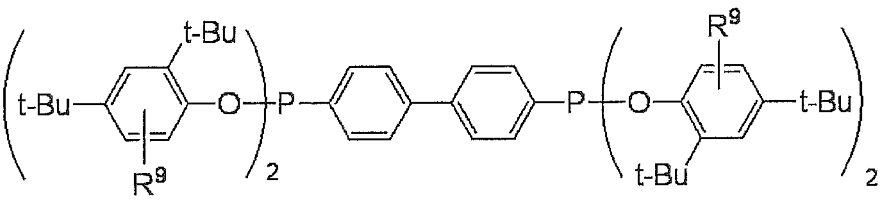

(4)

wherein in the formula (4), each $R^9$ is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

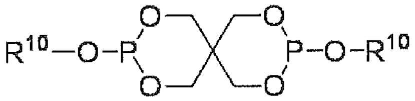

(5)

wherein in the formula (5), each $R^{10}$ is independently a $C_{1-18}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group,

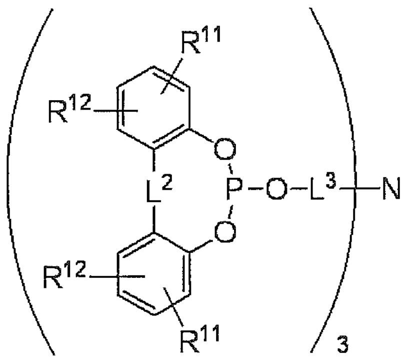

(6)

wherein in the formula (6),
each $R^{11}$ and/or each $R^{12}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
each $L^2$ is independently a single bond, a sulfur atom or a divalent group represented by the formula (6a):

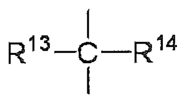

(6a)

wherein in the formula (6a), $R^{13}$ and $R^{14}$ are each independently a hydrogen atom or a $C_{1-7}$ alkyl group, and the total carbon number of $R^{13}$ and $R^{14}$ is not more than 7, and
each $L^3$ is independently a $C_{2-8}$ alkylene group,

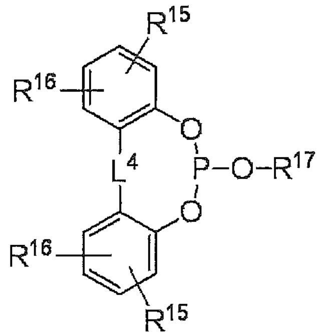

(7)

wherein in the formula (7),
each $R^{15}$ and/or each $R^{16}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
$R^{17}$ is a $C_{1-8}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group, and
$L^4$ is a single bond, a sulfur atom or a divalent group represented by the formula (7a):

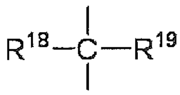

(7a)

wherein in the formula (7a), $R^{18}$ and $R^{19}$ are each independently a hydrogen atom or a $C_{1-7}$ alkyl group, and the total carbon number of $R^{18}$ and $R^{19}$ is not more than 7.

**8.** The processing stabilizer according to any one of claims 3 - 6, further comprising a compound represented by the formula (3) :

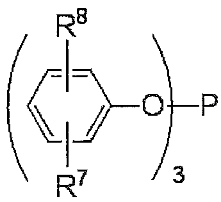

(3)

wherein in the formula (3), each $R^7$ and/or each $R^8$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group.

**9.** A thermoplastic polymer composition comprising a compound represented by the formula (8):

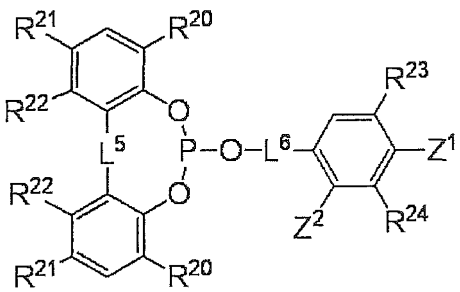

(8)

wherein in the formula (8),
each $R^{20}$ and/or each $R^{21}$ are/is independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group,

$R^{23}$ and $R^{24}$ are each independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group,
each $R^{22}$ is independently a hydrogen atom or a $C_{1-8}$ alkyl group,
$L^5$ is a single bond, a sulfur atom or a divalent group represented by the formula (8a):

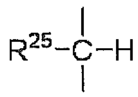 (8a)

wherein in the formula (8a), $R^{25}$ is a hydrogen atom, a $C_{1-8}$ alkyl group or a $C_{5-8}$ cycloalkyl group,
$L^6$ is a $C_{2-8}$ alkylene group or a divalent group represented by the formula (8b):

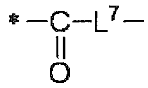 (8b)

wherein in the formula (8b), $L^7$ is a single bond or a $C_{1-8}$ alkylene group, and * shows bonding to the oxygen atom side, and
one of $Z^1$ and $Z^2$ is a hydroxy group, a $C_{1-8}$ alkyl group, a $C_{1-8}$ alkoxy group or a $C_{7-12}$ aralkyloxy group, and the other is a hydrogen atom or a $C_{1-8}$ alkyl group,
glucose and a thermoplastic polymer.

**10.** The thermoplastic polymer composition according to claim 9, wherein the total amount of the compound represented by the formula (8) and glucose is 0.001 - 3 parts by weight relative to 100 parts by weight of the thermoplastic polymer.

**11.** A processing stabilizer comprising a compound represented by the formula (8):

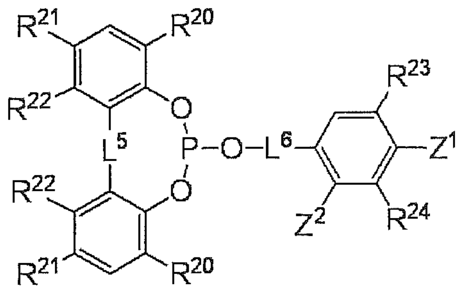 (8)

wherein in the formula (8),
each $R^{20}$ and/or each $R^{21}$ are/is independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group,
$R^{23}$ and $R^{24}$ are each independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group,
each $R^{22}$ is independently a hydrogen atom or a $C_{1-8}$ alkyl group,
$L^5$ is a single bond, a sulfur atom or a divalent group represented by the formula (8a):

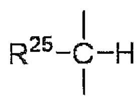 (8a)

wherein in the formula (8a), $R^{25}$ is a hydrogen atom, a $C_{1-8}$ alkyl group or a $C_{5-8}$ cycloalkyl group,
$L^6$ is a $C_{2-8}$ alkylene group or a divalent group represented by the formula (8b):

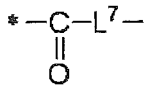

(8b)

wherein in the formula (8b), $L^7$ is a single bond or a $C_{1-8}$ alkylene group, and * shows bonding to the oxygen atom side, and

one of $Z^1$ and $Z^2$ is a hydroxy group, a $C_{1-8}$ alkyl group, a $C_{1-8}$ alkoxy group or a $C_{7-12}$ aralkyloxy group, and the other is a hydrogen atom or a $C_{1-8}$ alkyl group, and

glucose.

**12.** The processing stabilizer according to claim 11, wherein the compound represented by the formula (8) is 6-[3-(3-t-butyl-4-hydroxy-5-methylphenyl)propoxy]-2,4,8,10-tetra-t-butyldibenzo[d,f][1,3,2]dioxaphosphepine.

**13.** The processing stabilizer according to claim 11 or 12, wherein the content of glucose is 0.1 - 95 wt% of the total of the compound represented by the formula (8) and glucose.

**14.** The processing stabilizer according to any one of claims 11 - 13, further comprising a compound represented by the formula (2):

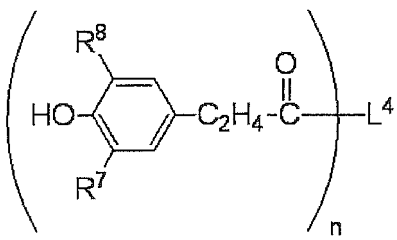

(2)

wherein in the formula (2),

each $R^7$ and/or each $R^8$ are/is independently a hydrogen atom or a $C_{1-6}$ alkyl group,

$L^4$ is an n-valent $C_{1-24}$ alcohol residue optionally containing a hetero atom,

n is an integer of 1 - 4, and

the alcohol residue here is a residue obtained by removing a hydrogen atom from the hydroxy group of the alcohol.

**15.** The processing stabilizer according to any one of claims 11 - 14, further comprising at least one selected from the group consisting of the compounds represented by the formulas (3) - (7):

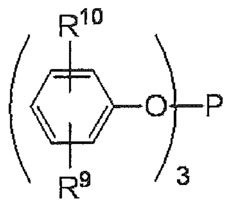

(3)

wherein in the formula (3), each $R^9$ and/or each $R^{10}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

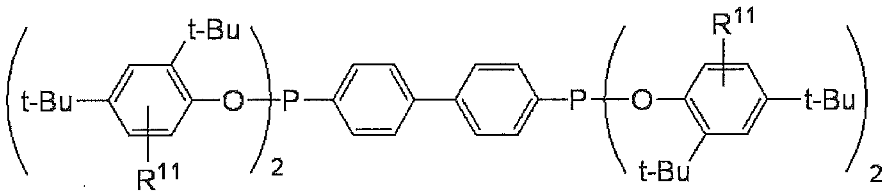

(4)

wherein in the formula (4), each $R^{11}$ is independently a hydrogen atom, a $C_{1-9}$ alkyl group, a $C_{5-8}$ cycloalkyl group,

a $C_{6-12}$ alkylcycloalkyl group, a $C_{7-12}$ aralkyl group or a phenyl group,

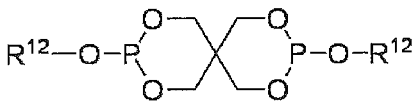

(5)

wherein in the formula (5), each $R^{12}$ is independently a $C_{1-18}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group,

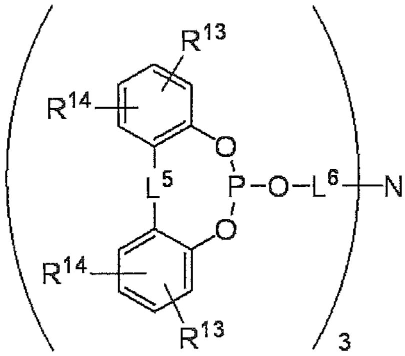

(6)

wherein in the formula (6),
each $R^{13}$ and/or each $R^{14}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
each $L^5$ is independently a single bond, a sulfur atom or a divalent group represented by the formula (6a):

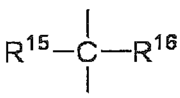

(6a)

wherein in the formula (6a), $R^{15}$ and $R^{16}$ are each independently a hydrogen atom or a $C_{1-7}$ alkyl group, and the total carbon number of $R^{15}$ and $R^{16}$ is not more than 7, and
each $L^6$ is independently a $C_{2-8}$ alkylene group,

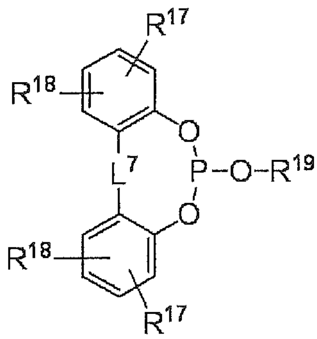

(7)

wherein in the formula (7),
each $R^{17}$ and/or each $R^{18}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
$R^{19}$ is a $C_{1-8}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group, and
$L^7$ is a single bond, a sulfur atom or a divalent group represented by the formula (7a):

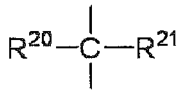

(7a)

wherein in the formula (7a), $R^{20}$ and $R^{21}$ are each independently a hydrogen atom or a $C_{1-7}$ alkyl group, and the total carbon number of $R^{20}$ and $R^{21}$ is not more than 7.

**16.** The processing stabilizer according to any one of claims 11 - 14, further comprising a compound represented by the formula (3):

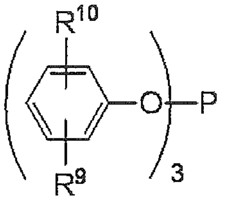

(3)

wherein in the formula (3), each $R^9$ and/or each $R^{10}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group.

**17.** A thermoplastic polymer composition comprising a compound represented by the formula (2):

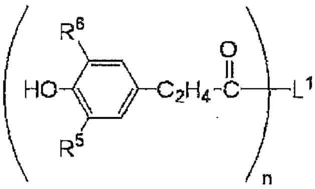

(2)

wherein in the formula (2),
each $R^5$ and/or each $R^6$ are/is independently a hydrogen atom or a $C_{1-6}$ alkyl group,
$L^1$ is an n-valent $C_{1-24}$ alcohol residue optionally containing a hetero atom,
n is an integer of 1 - 4, and
the alcohol residue here is a residue obtained by removing a hydrogen atom from the hydroxy group of the alcohol, glucose and a thermoplastic polymer.

**18.** The thermoplastic polymer composition according to claim 17, wherein the total amount of the compound represented by the formula (2) and glucose is 0.001 - 3 parts by weight relative to 100 parts by weight of the thermoplastic polymer.

**19.** The thermoplastic polymer composition according to claim 17 or 18, wherein the thermoplastic polymer is a styrene-butadiene block copolymer.

**20.** A processing stabilizer comprising a compound represented by the formula (2):

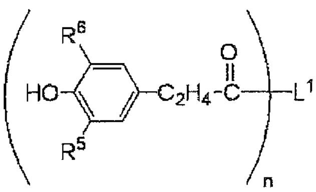

(2)

wherein in the formula (2),
each $R^5$ and/or each $R^6$ are/is independently a hydrogen atom or a $C_{1-6}$ alkyl group,
$L^1$ is an n-valent $C_{1-24}$ alcohol residue optionally containing a hetero atom,

n is an integer of 1 - 4, and
the alcohol residue here is a residue obtained by removing a hydrogen atom from the hydroxy group of the alcohol, and glucose.

**21.** The processing stabilizer according to claim 20, wherein the compound represented by the formula (2) is at least one selected from the group consisting of octadecyl 3-(3,5-di-t-butyl-4-hydroxyphenyl)propionate, 3,9-bis[2-{3-(3-t-butyl-4-hydroxy-5-methylphenyl)propionyloxy}-1,1-dimethylethyl]-2,4,8,10-tetraoxaspiro[5.5]undecane and pentaerythritol tetrakis[3-(3,5-di-t-butyl-4-hydroxyphenyl)propionate].

**22.** The processing stabilizer according to claim 20 or 21, wherein the content of glucose is 0.1 - 95 wt% of the total of the compound represented by the formula (2) and glucose.

**23.** A thermoplastic polymer composition comprising glucose, a thermoplastic polymer and at least one selected from the group consisting of the compounds represented by the formulas (3) - (7):

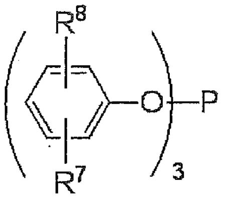

(3)

wherein in the formula (3), each $R^7$ and/or each $R^8$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

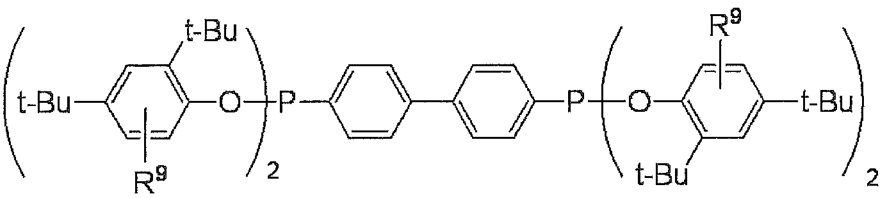

(4)

wherein in the formula (4), each $R^9$ is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

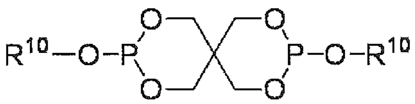

(5)

wherein in the formula (5), each $R^{10}$ is independently a $C_{1-18}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group,

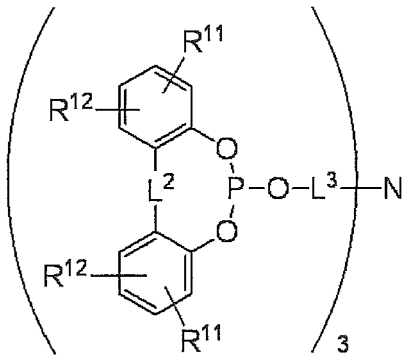

(6)

wherein in the formula (6), each $R^{11}$ and/or each $R^{12}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group, each $L^2$ is independently a single bond, a sulfur atom or a divalent group represented by the formula (6a):

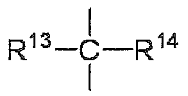

(6a)

wherein in the formula (6a), $R^{13}$ and $R^{14}$ are each independently a hydrogen atom or a $C_{1-7}$ alkyl group, and the total carbon number of $R^{13}$ and $R^{14}$ is not more than 7, and each $L^3$ is independently a $C_{2-8}$ alkylene group,

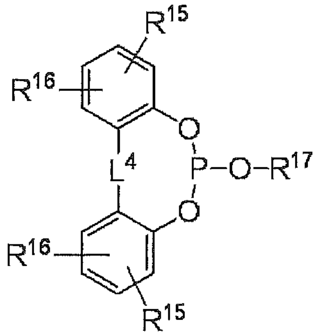

(7)

wherein in the formula (7), each $R^{15}$ and/or each $R^{16}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group, $R^{17}$ is a $C_{1-8}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group, and $L^4$ is a single bond, a sulfur atom or a divalent group represented by the formula (7a):

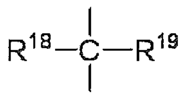

(7a)

wherein in the formula (7a), $R^{18}$ and $R^{19}$ are each independently a hydrogen atom or a $C_{1-7}$ alkyl group, and the total carbon number of $R^{18}$ and $R^{19}$ is not more than 7.

**24.** The thermoplastic polymer composition according to claim 23, wherein the total amount of glucose and the compound selected from the group consisting of the compounds represented by the formulas (3) - (7) is 0.001 - 3 parts by weight relative to 100 parts by weight of the thermoplastic polymer.

**25.** The thermoplastic polymer composition according to claim 23 or 24, wherein the thermoplastic polymer is a styrene-butadiene block copolymer.

**26.** A processing stabilizer comprising glucose and at least one selected from the group consisting of the compounds represented by the formulas (3) - (7):

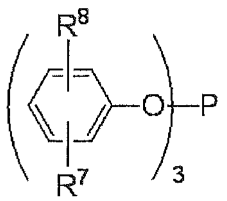

(3)

wherein in the formula (3), each $R^7$ and/or each $R^8$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

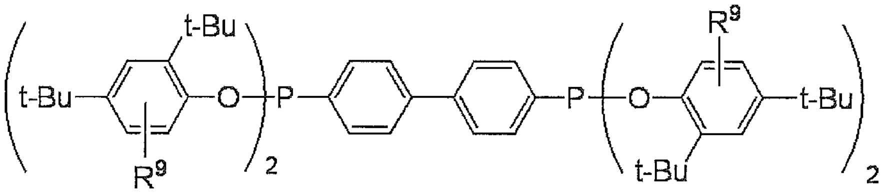

(4)

wherein in the formula (4), each $R^9$ is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

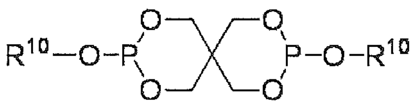

(5)

wherein in the formula (5), each $R^{10}$ is independently a $C_{1-18}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group,

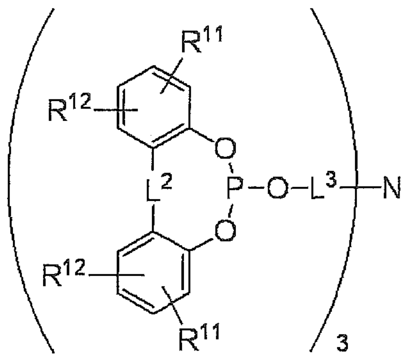

(6)

wherein in the formula (6),
each $R^{11}$ and/or each $R^{12}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
each $L^2$ is independently a single bond, a sulfur atom or a divalent group represented by the formula (6a):

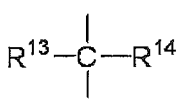

(6a)

wherein in the formula (6a), $R^{13}$ and $R^{14}$ are each independently a hydrogen atom or a $C_{1-7}$ alkyl group, and the total carbon number of $R^{13}$ and $R^{14}$ is not more than 7, and
each $L^3$ is independently a $C_{2-8}$ alkylene group,

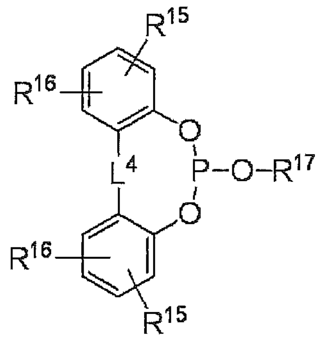

(7)

wherein in the formula (7), each $R^{15}$ and/or each $R^{16}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
$R^{17}$ is a $C_{1-8}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group, and
$L^4$ is a single bond, a sulfur atom or a divalent group represented by the formula (7a):

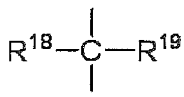

(7a)

wherein in the formula (7a), $R^{18}$ and $R^{19}$ are each independently a hydrogen atom or a $C_{1-7}$ alkyl group, and the total carbon number of $R^{18}$ and $R^{19}$ is not more than 7.

**27.** The processing stabilizer according to claim 26, wherein at least one selected from the group consisting of the compounds represented by the formulas (3) - (7) is the compound represented by the formula (3).

**28.** The processing stabilizer according to claim 27, wherein the compound represented by the formula (3) is tris(2,4-di-t-butylphenyl) phosphite.

## INTERNATIONAL SEARCH REPORT

International application No.
PCT/JP2011/059263

A. CLASSIFICATION OF SUBJECT MATTER
*C08L101/00*(2006.01)i, *C08K5/13*(2006.01)i, *C08K5/134*(2006.01)i, *C08K5/1545*(2006.01)i, *C08K5/524*(2006.01)i

According to International Patent Classification (IPC) or to both national classification and IPC

B. FIELDS SEARCHED

Minimum documentation searched (classification system followed by classification symbols)
C08L101/00, C08K5/13, C08K5/134, C08K5/1545, C08K5/524

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 05-105794 A (Sumitomo Chemical Co., Ltd.), 27 April 1993 (27.04.1993), claims; examples & US 5376707 A & EP 543501 A1 & CA 2080528 A & MX 9205912 A & CA 2080528 A1 | 1-8 |
| A | JP 05-105793 A (Sumitomo Chemical Co., Ltd.), 27 April 1993 (27.04.1993), claims; examples & US 5376707 A & EP 543501 A1 & CA 2080528 A & MX 9205912 A & CA 2080528 A1 | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 July, 2011 (14.07.11) | 26 July, 2011 (26.07.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No.
PCT/JP2011/059263

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-279103 A (Asahi Denka Co., Ltd.),<br>10 October 2001 (10.10.2001),<br>claims; entire text<br>(Family: none) | 1-8 |
| A | JP 05-039394 A (Sakai Chemical Industry Co., Ltd.),<br>19 February 1993 (19.02.1993),<br>claims; entire text<br>(Family: none) | 1-8 |
| A | JP 01-168643 A (Sumitomo Chemical Co., Ltd.),<br>04 July 1989 (04.07.1989),<br>claims; entire text<br>& US 5128398 A & EP 322166 A1<br>& DE 3870187 A & CA 1325218 A | 1-8 |
| A | JP 04-305413 A (Sumitomo Chemical Co., Ltd.),<br>28 October 1992 (28.10.1992),<br>claims; entire text<br>(Family: none) | 1-8 |
| A | JP 05-255549 A (Sumitomo Chemical Co., Ltd.),<br>05 October 1993 (05.10.1993),<br>claims; entire text<br>(Family: none) | 1-8 |
| A | JP 2009-046665 A (Sumitomo Chemical Co., Ltd.),<br>05 March 2009 (05.03.2009),<br>claims; entire text<br>& US 2009/0030127 A1 & EP 2017299 A1<br>& KR 10-2009-0009717 A & CN 101628990 A | 1-8 |
| A | JP 2009-132633 A (Sumitomo Chemical Co., Ltd.),<br>18 June 2009 (18.06.2009),<br>claims; entire text<br>& US 2009/0143517 A1 & EP 2065359 A1<br>& CN 101450900 A & KR 10-2009-0056863 A | 1-8 |
| A | JP 2010-007002 A (Sumitomo Chemical Co., Ltd.),<br>14 January 2010 (14.01.2010),<br>claims; entire text<br>& US 2009/0326160 A1 & EP 2141194 A1<br>& CN 101618782 A & SG 158055 A<br>& KR 10-2010-0003208 A | 1-8 |

Form PCT/ISA/210 (continuation of second sheet) (July 2009)

**INTERNATIONAL SEARCH REPORT**

International application No.
PCT/JP2011/059263

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet.

1. ☐ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1-8

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

INTERNATIONAL SEARCH REPORT

International application No.
PCT/JP2011/059263

Continuation of Box No.III of continuation of first sheet(2)

The invention in claim 1, the invention in claim 3, the invention in claim 9, the invention in claim 11, the invention in claim 17, the invention in claim 20, the invention in claim 23, and the invention in claim 26 have a common technical feature in such a point that all of the inventions relate to a composition containing a compound, which acts as a stabilizing agent, and glucose.

However, the above-said technical feature cannot be considered to be a “special technical feature”, since said technical feature does not make a contribution over the prior art in the light of the contents disclosed in the following documents 1 and 2. Furthermore, there is no other same or corresponding “special technical feature”.

Document 1: JP 05-105794 A (Sumitomo Chemical Co., Ltd.), 27 April 1993 (27.04.1993), claims, examples & US 5376707 A & EP 543501 A1 & CA 2080528 A & MX 9205912 A & CA 2080528 A1

Document 2: JP 05-105793 A (Sumitomo Chemical Co., Ltd.), 27 April 1993 (27.04.1993), claims, examples & US 5376707 A & EP 543501 A1 & CA 2080528 A & MX 9205912 A & CA 2080528 A1

Consequently, the invention in claim 1, the invention in claim 3, the invention in claim 9, the invention in claim 11, the invention in claim 17, the invention in claim 20, the invention in claim 23, and the invention in claim 26 cannot be deemed be so linked as to share a special technical feature, and therefore, a group of these inventions cannot be considered to be so linked as to form a single general inventive concept.

It is considered that four inventions linked by respective special technical features indicated below are involved in claims 1-28.

(Invention 1) the inventions in claims 1-8
The invention relating to a composition which contains a compound represented by “formula (1)” and glucose.

(Invention 2) the inventions in claims 9-16
The invention relating to a composition which contains a compound represented by “formula (8)” and glucose.

(Invention 3) the inventions in claims 17-22
The invention relating to a composition which contains a compound represented by “formula (2)” and glucose.

(Invention 4) the inventions in claims 23-28
The invention relating to a composition which contains a compound represented by “formulae (3) to (7)” and glucose.

Meanwhile, this international search report covers the above-said (invention 1).

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 1168643 A
- JP 10273494 A
- US 3330859 A
- US 3644482 A
- JP 59025826 A
- JP 51109050 A
- JP 58084835 A